# EUROPEAN PATENT SPECIFICATION

(11) **EP 4 483 722 B1**
(45) Date of publication and mention of the grant of the patent: **07.10.2026**
(21) Application number: 24199114.0
(22) Date of filing: 08.11.2017
(51) Int. Cl.: A23L 2/54, A23L 2/40, B01F 23/233, B01F 23/236, B01F 33/452

(54) **CARBONATED BEVERAGE MAKERS, METHODS, AND SYSTEMS**
VORRICHTUNGEN, VERFAHREN UND SYSTEME ZUR HERSTELLUNG KOHLENSÄUREHALTIGER GETRÄNKE
MACHINES DE PRÉPARATION DE BOISSONS GAZEUSES, PROCÉDÉS ET SYSTÈMES

(30) Priority: 09.11.2016 US 201662419750 P; 22.02.2017 US 201762462116 P
(43) Date of publication of application: 01.01.2025
(62) Document number(s) of the earlier application(s) in accordance with Art. 76 EPC: 17870426.8 / 3 537 891
(73) Proprietor: PepsiCo, Inc., Purchase, NY 10577 (US)
(72) Inventor: JERSEY, Steven T., Purchase, 10577 (US); BROWN, Stephen, Purchase, 10577 (US); GOUDARZI, Farideh, Purchase, 10577 (US); HEADEN, Steven, Purchase, 10577 (US); HEMBER, Miles, Purchase, 10577 (US); NORMAN, Alexander, Purchase, 10577 (US); POTTER, Andrew, Purchase, 10577 (US); STACEY, Gary, Purchase, 10577 (US)
(74) Representative: Maiwald GmbH

(56) References cited:
- GB-A- 2 408 467
- US-A- 5 192 513
- US-A1- 2016 106 136

## Description

### BACKGROUND

### Field of the Invention

Embodiments of the present invention relate generally to a carbonation cup for use in carbonated beverage makers, and more specifically to make-my-own carbonated beverage makers that generate CO₂ and utilize a pod system to carbonate and deliver individual, customizable beverages.

### Background

Household appliances may be used to create beverages. However, creating homemade carbonated beverages presents difficulties beyond those of creating non-carbonated beverages. Some of these difficulties are directly related to the process of carbonation. Other difficulties are byproducts of the carbonation process.

The difficulties directly related to the process of carbonation include carbonation quality and efficiency. For example, the quality of the carbonation greatly affects the beverage taste and user experience. Drinks having low-quality carbonation are therefore undesirable and may lead to customer dissatisfaction. As a further example, efficiency of the carbonation process may be important to users. Inefficient carbonation can be costly and wasteful. Because a user needs to replenish the carbonation source, such as a CO₂ tank, it is desirable to increase the number of drinks that may be created with the same amount of the carbonation source. Finally, the carbonation process leads to pressurized beverages that may result in overflowing drinks and spills if not properly controlled. Not only is this wasteful, but it also negatively affects the user experience.

Additional difficulties with the carbonation process relate to the use of a CO₂ tank. For example, CO₂ tanks may require special handling and disposal. Accordingly, CO₂ tanks cannot be shipped to a consumer. Furthermore, CO₂ tanks may be costly and large, thus increasing the cost and size of the carbonated beverage maker.

In addition to difficulties directly related to the carbonation process, there are difficulties that are byproducts of carbonating beverages. For example, while users desire the ability to customize their drinks (i.e., to be healthier, to adjust carbonation, or to provide different flavors, additives, etc.), this can be difficult when carbonating the beverage. Existing systems are limited in what can be carbonated (e.g., many only carbonate water) and do not offer customizability, particularly when the system is pod-based. As such, existing systems do not provide a user experience that conveys a freshly-made drink, nor do they inspire creativity in the user's beverage-making experience. Another byproduct difficulty is that, while carbonated beverages are most enjoyable at cold temperatures, the carbonation process may increase the temperature of the beverage.

Finally, because carbonated beverages may be inexpensively purchased from a store, a household appliance that creates carbonated beverages may be too costly for users. Furthermore, a household appliance that creates carbonated beverages may be too large, taking up too much countertop space in the user's home. In light of the foregoing, further improvements in carbonated beverage makers are desirable. Document US 2016/106136 A1 discloses a flow circuit for a carbonated beverage machine. Document GB 2 408 467 A discloses an apparatus for carbonating liquids. Document US 5 192 513 A discloses a high speed process and apparatus for carbonating water.

### BRIEF SUMMARY OF THE INVENTION

The present invention is defined by the appended independent claim 1 defining a carbonation cup. Further advantageous developments are outlined in the corresponding dependent claims 2 to 10. In the following, examples not covered by the appended claims are for increasing understandability of the present invention. Embodiments of the present invention provide make-my-own carbonated beverage makers that address the need for improvements in single-serve carbonation devices and processes, such as generating and/or supplying CO₂ for carbonating beverages.

In some examples, a carbonated beverage maker includes a water reservoir, a carbon dioxide creation chamber, and a carbonation chamber. In some examples, the water reservoir holds ice water and has a first impeller and a shroud surrounding the first impeller. In some examples, the carbon dioxide creation chamber contains chemical elements and receives warm water. In some examples, the dry chemical elements react with each other to create carbon dioxide when the warm water is introduced to the carbon dioxide creation chamber. In some examples, the carbonation chamber is connected to the water reservoir and the carbon dioxide creation chamber. In some examples, the carbonation chamber has a second impeller that includes a stem portion and blades. In some examples, the stem portion and the blades define conduits therein. In some examples, the blades create a low pressure region in a lower portion of the carbonation chamber such that carbon dioxide from the carbon dioxide creation chamber flows through the conduits to the low pressure region.

In some examples, the chemical elements comprise potassium carbonate and citric acid. In some examples, the chemical elements comprise dry chemical elements. In some examples, the chemical elements comprise a tablet. In some examples, the chemical elements are disposed in a pod. In some examples, the carbonated beverage maker also includes a needle to deliver the warm water to the carbon dioxide creation chamber.

In some examples, a method of creating a carbonated beverage includes delivering cold water to a carbonation chamber, adding warm water to a mixture of potassium carbonate and citric acid in a carbon dioxide creation chamber to create carbon dioxide, delivering the carbon dioxide to the carbonation chamber, and entraining the carbon dioxide into the cold water via an impeller disposed in the carbonation chamber to create carbonated water.

In some examples, the method also includes dispensing the carbonated water into a cup. In some examples, the method also includes mixing a flavor source with the carbonated water. In some examples, the flavor source is a syrup. In some examples, mixing the flavor source with the carbonated water includes simultaneously dispensing the carbonated water and the flavor source into a cup. In some examples, the flavor source includes a single serve pod.

In some examples, the method also includes, simultaneously with the cold water beginning to be delivered to the carbonation chamber, sending a signal to the carbon dioxide creation chamber to trigger a pre-determined time delay. In some examples, the warm water is added to the mixture of potassium carbonate and citric acid after the pre-determined time delay. In some examples, the warm water is added to the mixture of potassium carbonate and citric acid for a pre-determined amount of time beginning after the pre-determined time delay.

In some examples, a carbonated beverage making system includes a reservoir to hold a diluent, a carbon dioxide creation chamber to produce carbon dioxide via a chemical reaction, and a carbonation chamber to receive the diluent from the reservoir and the carbon dioxide from the carbon dioxide creation chamber and to mix the diluent and the carbon dioxide to form a carbonated beverage. In some examples, the chemical reaction is isolated from the carbonated beverage.

In some examples, the carbon dioxide produced via the chemical reaction is at room temperature. In some examples, the chemical reaction is initiated by introducing water to a mixture of chemical elements. In some examples, the chemical reaction is a reaction between potassium carbonate and citric acid. In some examples, the carbonated beverage making system receives carbon dioxide from a gas tank in place of the carbon dioxide creation chamber.

In some examples, a carbonated beverage maker includes a carbonation source, a flavor source, a removable carbonation chamber configured to contain a liquid, and an impeller disposed at a bottom of the removable carbonation chamber. In some examples, the liquid is carbonated, cooled, and flavored in the removable carbonation chamber.

In some examples, a carbonation cup includes a transparent plastic layer forming a base and a cylinder, a metal sheath disposed outside the transparent plastic layer, a magnetically-driven impeller disposed at an inner side of the base of the transparent plastic layer, and an attachment member disposed at an end of the cylinder opposite the base. In some examples, the attachment member is configured to seal the carbonation cup when attached to a carbonated beverage maker having a carbonation source. In some examples, the metal sheath defines a plurality of holes so that a portion of the transparent plastic layer is visible from outside the carbonation cup.

In some examples, a carbonated beverage maker includes a water reservoir configured to hold ice water, a carbonation chamber connected to the water reservoir and a carbonation source. In some examples, the water reservoir has a first impeller and a shroud surrounding the first impeller. In some embodiments, the carbonation chamber has a second impeller. In some examples, the second impeller includes a stem portion and blades. In some embodiments, the stem portion and the blades define conduits therein. In some examples, the blades are configured to create a low pressure region in a lower portion of the carbonation chamber such that carbon-dioxide from the carbonation source flows through the conduits to the low pressure region.

In some examples, a water reservoir for a carbonated beverage maker includes a double-walled tank configured to hold ice water, an impeller disposed in the tank and configured to agitate the ice water, a shroud disposed around the impeller and configured to protect the impeller from ice, a cold plate disposed underneath the tank, a thermoelectric cooler disposed on the cold plate, and a heat pipe assembly configured to remove heat from the thermoelectric cooler.

Further features and advantages of embodiments of the invention, as well as the structure and operation of various embodiments of the invention, are described in detail below with reference to the accompanying drawings.

### BRIEF DESCRIPTION OF THE DRAWINGS

The accompanying drawings, which are incorporated herein and form part of the specification, illustrate embodiments of the present invention and, together with the description, further serve to explain the principles of the invention and to enable a person skilled in the relevant art(s) to make and use the invention. The carbonated beverage maker depicted in the following figures does not form part of the invention.
FIG. 1 shows a functional diagram of a carbonated beverage maker according to some embodiments.
FIG. 2 shows a perspective view of a carbonated beverage maker according to some embodiments.
FIG. 3 shows a schematic of a carbonated beverage maker according to some embodiments.
FIG. 4 shows a carbonation cup for a carbonated beverage maker according to some embodiments.
FIG. 5 shows a portion of a docking module for a carbonated beverage maker according to some embodiments.
FIG. 6 shows a perspective cross-section view of a lip seal for a carbonated beverage maker according to some embodiments.
FIG. 7 shows a cross-sectional view of a lip seal for a carbonated beverage maker according to some embodiments.
FIG. 8 shows an impeller for a carbonated beverage maker according to some embodiments.
FIG. 9 shows a perspective cross-sectional view of a carbonation cup on a carbonated beverage maker according to some embodiments.
FIG. 10 shows a carbonated beverage maker according to some embodiments.
FIG. 11 shows a user interface for a carbonated beverage maker according to some embodiments.
FIG. 12 shows a user interface for a carbonated beverage maker according to some embodiments.
FIG. 13 shows a method of using a carbonated beverage maker according to some embodiments.
FIG. 14 shows a perspective view of a carbonated beverage maker according to some embodiments.
FIG. 15 shows a perspective view of a carbonated beverage maker according to some embodiments.
FIG. 16 shows a schematic of a carbonated beverage maker according to some embodiments.
FIG. 17 shows a simplified schematic of a carbonated beverage maker according to some embodiments.
FIG. 18 shows a cooling system and a diluent system of a carbonated beverage maker according to some embodiments.
FIG. 19 shows a perspective cross-sectional view of a cooling system and a diluent system of a carbonated beverage maker according to some embodiments.
FIG. 20 shows a perspective view of a portion of a cooling system and a diluent system of a carbonated beverage maker according to some embodiments.
FIG. 21 shows a top view of a thermoelectric cooler for a carbonated beverage maker according to some embodiments.
FIG. 22 shows a side view of a thermoelectric cooler for a carbonated beverage maker according to some embodiments.
FIG. 23 shows a side view of a thermoelectric cooler for a carbonated beverage maker according to some embodiments.
FIG. 24 shows a perspective view of a heat pipe assembly and fins for a carbonated beverage maker according to some embodiments.
FIG. 25 shows a schematic view of a cooling system and a diluent system of a carbonated beverage maker according to some embodiments.
FIG. 26 shows a schematic view of a cooling system and a diluent system of a carbonated beverage maker according to some embodiments.
FIG. 27 shows a cross-sectional view of a carbonation chamber for a carbonated beverage maker according to some embodiments.
FIG. 28 shows a perspective view of an impeller for a carbonation system of a carbonated beverage maker according to some embodiments.
FIG. 29 shows a perspective view of an impeller for a carbonation system of a carbonated beverage maker according to some embodiments.
FIG. 30 shows a schematic view of a carbonation chamber in a carbonated beverage maker according to some embodiments.
FIG. 31 shows a schematic view of a carbonation chamber in a carbonated beverage maker according to some embodiments.
FIG. 32 shows a perspective cross-sectional view of a pod for a carbonated beverage maker according to some embodiments.
FIG. 33 shows a partial front view of a carbonated beverage maker according to some embodiments.
FIG. 34 shows a perspective view of a carbonated beverage maker according to some embodiments.
FIG. 35 shows a method of using a carbonated beverage maker according to some embodiments.
FIG. 36 shows a process of a carbonated beverage maker according to some embodiments.
FIG. 37 shows a cross-sectional perspective view of a pod for a carbonated beverage maker according to some embodiments.
FIG. 38 shows a perspective view of a pod for a carbonated beverage maker according to some embodiments.
FIG. 39 shows a top view of a pod for a carbonated beverage maker according to some embodiments.
FIG. 40 shows a cross-sectional perspective view of a pod for a carbonated beverage maker according to some embodiments.
FIGS. 41A and 41B show a cross-sectional view of a method of opening a pod in a carbonated beverage maker according to some embodiments.
FIG. 42 shows a cross-sectional perspective view of a pod for a carbonated beverage maker according to some embodiments.
FIG. 43 shows a perspective view of a pod for a carbonated beverage maker according to some embodiments.
FIGS. 44A and 44B show a cross-sectional view of a method of opening a pod in a carbonated beverage maker according to some embodiments.
FIG. 45 shows a perspective view of a pod for a carbonated beverage maker according to some embodiments.
FIG. 46 shows a perspective view of a pod for a carbonated beverage maker according to some embodiments.
FIG. 47 shows a perspective view of a pod for a carbonated beverage maker according to some embodiments.
FIG. 48 shows a perspective view of a pod for a carbonated beverage maker according to some embodiments.
FIGS. 49A and 49B show a perspective view of a method of opening a pod in a carbonated beverage maker according to some embodiments.
FIG. 50 shows a perspective view of a pod for a carbonated beverage maker according to some embodiments.
FIG. 51 shows a cross-sectional perspective view of a pod for a carbonated beverage maker according to some embodiments.
FIG. 52 shows a perspective view of a pod for a carbonated beverage maker according to some embodiments.
FIGS. 53A and 53B show a cross-sectional view of a method of opening a pod in a carbonated beverage maker according to some embodiments.
FIG. 54 shows a cross-sectional perspective view of a pod for a carbonated beverage maker according to some embodiments.
FIG. 55 shows a perspective view of a pod for a carbonated beverage maker according to some embodiments.
FIG. 56 shows a cross-sectional perspective view of a pod for a carbonated beverage maker according to some embodiments.
FIG. 57 shows a perspective view of a pod for a carbonated beverage maker according to some embodiments.
FIGS. 58A and 58B show a cross-sectional view of a method of opening a pod in a carbonated beverage maker according to some embodiments.
FIG. 59 shows a cross-sectional perspective view of a pod for a carbonated beverage maker according to some embodiments.
FIG. 60 shows a perspective view of a pod for a carbonated beverage maker according to some embodiments.
FIGS. 61A, 61B, and 61C show a cross-sectional view of a method of opening a pod in a carbonated beverage maker according to some embodiments.
FIG. 62 shows a cross-sectional perspective view of a pod for a carbonated beverage maker according to some embodiments.
FIG. 63 shows a perspective view of a pod for a carbonated beverage maker according to some embodiments.
FIGS. 64A and 64B show a cross-sectional view of a method of opening a pod in a carbonated beverage maker according to some embodiments.
FIG. 65 shows a perspective view of a pod in a carbonated beverage maker according to some embodiments.
FIG. 66 shows a perspective view of a pod in a carbonated beverage maker according to some embodiments.
FIG. 67 shows a perspective view of a pod in a carbonated beverage maker according to some embodiments.
FIG. 68 shows a perspective view of a pod in a carbonated beverage maker according to some embodiments.
FIG. 69 shows a perspective view of a pod in a carbonated beverage maker according to some embodiments.
FIG. 70 shows a perspective view of a pod in a carbonated beverage maker according to some embodiments.
FIG. 71 shows a perspective view of a pod in a carbonated beverage maker according to some embodiments.
FIG. 72 shows a perspective view of a pod in a carbonated beverage maker according to some embodiments.
FIG. 73 shows a perspective view of a pod in a carbonated beverage maker according to some embodiments.
FIG. 74 shows a perspective view of a pod in a carbonated beverage maker according to some embodiments.
FIG. 75 shows a perspective view of a pod in a carbonated beverage maker according to some embodiments.
FIG. 76 shows a perspective view of a pod in a carbonated beverage maker according to some embodiments.
FIG. 77 shows a perspective view of a pod in a carbonated beverage maker according to some embodiments.
FIG. 78 shows a perspective view of a pod in a carbonated beverage maker according to some embodiments.
FIG. 79 shows a perspective view of a pod in a carbonated beverage maker according to some embodiments.
FIG. 80 shows a perspective view of a pod in a carbonated beverage maker according to some embodiments.
FIG. 81 shows a perspective view of a pod in a carbonated beverage maker according to some embodiments.
FIG. 82 shows a perspective view of a pod in a carbonated beverage maker according to some embodiments.
FIG. 83 shows a perspective view of a pod in a carbonated beverage maker according to some embodiments.
FIG. 84 shows a perspective view of a pod in a carbonated beverage maker according to some embodiments.
FIG. 85 shows a perspective view of a pod in a carbonated beverage maker according to some embodiments.
FIG. 86 shows a carbonated beverage maker in which a CO₂ generation system may be utilized according to some embodiments.
FIG. 87 shows a schematic of a CO₂ generation system according to some embodiments.
FIG. 88 shows a CO₂ generation system according to some embodiments.
FIG. 89 shows a CO₂ generation system according to some embodiments.
FIG. 90 shows a portion of a CO₂ generation system according to some embodiments.
FIG. 91 shows a CO₂ generation system according to some embodiments.
FIG. 92 shows a cross-sectional view of a reaction chamber for a CO₂ generation system according to some embodiments.
FIG. 93 shows a needle for use in a reaction chamber of a CO₂ generation system according to some embodiments.
FIG. 94 shows a needle for use in a reaction chamber of a CO₂ generation system according to some embodiments.
FIG. 95 shows a chemical pod of a CO₂ generation system according to some embodiments.
FIG. 96 shows a chemical pod of a CO₂ generation system according to some embodiments.
FIG. 97 shows a chemical pod of a CO₂ generation system according to some embodiments.
FIG. 98 shows a graph for operating a pump in a CO₂ generation system according to some embodiments.
FIG. 99 shows a graph for operating a carbonated beverage maker according to some embodiments.
FIG. 100 shows a chemical pod and a flavor pod for a carbonated beverage maker according to some embodiments.
FIG. 101 shows a chemical pod and a flavor pod for a carbonated beverage maker according to some embodiments.
FIG. 102 shows a chemical pod and a flavor pod for a carbonated beverage maker according to some embodiments.
FIG. 103 shows a chemical pod and a flavor pod being inserted into a carbonated beverage maker according to some embodiments.

### DETAILED DESCRIPTION OF THE INVENTION

The present invention will now be described in detail with reference to embodiments thereof as illustrated in the accompanying drawings. References to "one embodiment", "an embodiment", "an exemplary embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Consumers may use household appliances to prepare beverages at home. For preparing carbonated beverages, a particular device (i.e., a carbonated beverage maker) may be required. It is desirable to provide an inexpensive, compact carbonated beverage maker that allows users to create customized individual beverages according to their own preferences. It is further desirable that such carbonated beverage makers efficiently produce high quality carbonated beverages.

The following disclosure relates to carbonated beverage makers. The embodiments relating to the carbonated beverage do not form part of the invention. Carbonated beverage makers, according to some embodiments, may be used in a home, office, school, or other similar setting, including a small commercial setting. In some embodiments, carbonated beverage makers may be used on a countertop or tabletop, for example, in a user's kitchen.

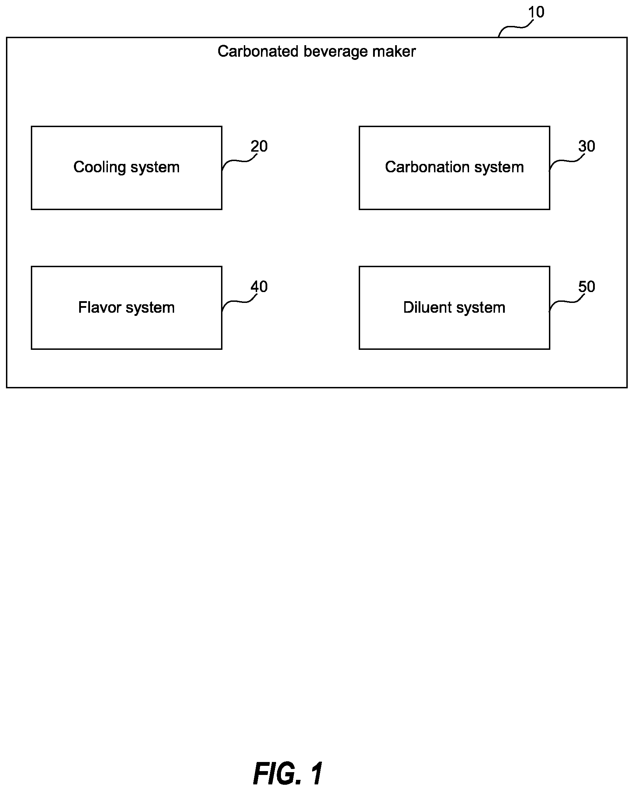

In some embodiments, as shown, for example, in FIG. 1, a carbonated beverage maker 10 includes each of a cooling system 20, a carbonation system 30, a flavor system 40, and a diluent system 50. In some embodiments, a carbonated beverage maker may not have all four of these systems. In some embodiments, a carbonated beverage maker may include additional systems. Furthermore, in some embodiments, the systems may vary in the level of manual operation required to perform the function associated with the system.

Cooling system 20, in some embodiments, cools a diluent from room temperature to a desired beverage temperature. In some embodiments, cooling system 20 cools the diluent prior to adding concentrate or other flavoring from flavor system 40. In some embodiments, cooling system 20 cools the beverage created with the diluent and the concentrate. In some embodiments, cooling system 20 primarily maintains a desired beverage temperature. In some embodiments, ice is used in cooling system 20.

Carbonation system 30, in some embodiments, carbonates a diluent. In some embodiments, carbonation system 30 carbonates the diluent prior to adding concentrate or flavoring from flavor system 40. In some embodiments, carbonation system 30 carbonates the beverage created with the diluent and the concentrate. In some embodiments, carbonation system 30 uses an impeller to encourage carbonation of a beverage. In some embodiments, carbonation system 30 carbonates the diluent or beverage using a CO₂ cylinder as a carbonation source. In some embodiments, other carbonation sources may be used, as described in more detail below.

Flavor system 40, in some embodiments, delivers a flavor, for example, in the form of a concentrate, into a diluent. In some embodiments, flavor system 40 delivers the flavor prior to carbonation. In some embodiments, flavor system 40 delivers the flavor after the diluent is carbonated. In some embodiments, flavor system 40 uses pods to contain and deliver the flavor concentrate. While flavor is primarily referred to here, flavor system 40 is not limited solely to flavor, but instead, may include, for example, additives, nutrients, colorants, and so on. Flavor system 40 may provide the flavor as liquid, syrup, powder, gel, beads, or other medium.

Diluent system 50, in some embodiments, delivers a diluent to be carbonated. In some embodiments, diluent system 50 includes a reservoir in beverage maker 10 to contain an amount of the diluent. In some embodiments, diluent system 50 may include a connection to a remote source that contains the diluent. In some embodiments, the diluent may be added manually. In some embodiments, the diluent is water. Other possible diluents include juice, milk, or other consumable liquid.

As already noted in the descriptions above, the order of these functions (cooling, carbonation, flavoring, providing diluent, etc.) may vary in some embodiments. For example, in some embodiments, flavor system 40 may deliver a flavor into diluent after the diluent is cooled, while in other embodiments, flavor system 40 may deliver a flavor into diluent before the diluent is cooled.

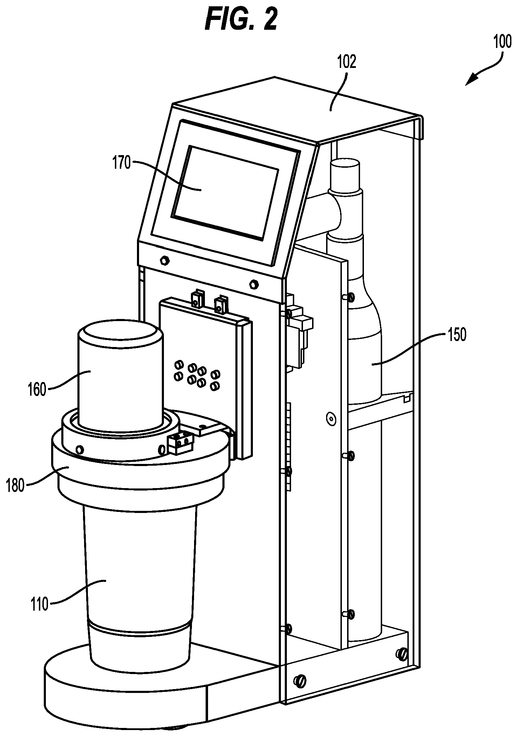

Some embodiments of a carbonated beverage maker will now be described with reference to FIGS. 2-13. In some embodiments, as shown, for example, in FIG. 2, a carbonated beverage maker 100 includes a housing 102, a carbonation source 150, a flavor source 160, a user interface (such as a touch screen 170), a cup docking module 180, and a carbonation cup 110. In some embodiments, housing 102 provides the infrastructure to contain and/or support each of the systems of carbonated beverage maker 100. In some embodiments, carbonation source 150 is disposed within a main portion of housing 102. In FIG. 2, a portion of housing 102 is removed to show carbonation source 150 within housing 102. In some embodiments, touch screen 170 (or other types of user interfaces) is disposed on housing 102. In some embodiments, cup docking module 180 attaches to housing 102. In some embodiments, cup docking module 180 supports flavor source 160 and carbonation cup 110.

In some embodiments, carbonation cup 110 is removable from cup docking module 180. Thus, carbonation cup 110, in some embodiments, may be manually removed and filled with a diluent, such as water. In some embodiments, carbonation cup 110 may be filled with ice in addition to a diluent. In some embodiments, carbonation cup 110 may be manually removed and washed after any use. This arrangement may increase the versatility and customization possible in beverage creation using carbonated beverage maker 100. More specifically, carbonated beverage maker 100 is capable of carbonating a wide variety of beverages, such as water, milk, juice, or other drink.

In some embodiments, carbonation source 150 and flavor source 160 are operatively connected with carbonation cup 110. For example, housing 102 and/or cup docking module 180 may provide channels for directing CO₂ from carbonation source 150 and concentrate from flavor source 160 into carbonation cup 110.

Thus, in some embodiments, carbonated beverage maker 100 provides a single chamber-carbonation cup 110-for the cooling, carbonation, flavoring, and providing diluent for a beverage. In some embodiments, both the diluent (e.g., water) and the flavor are provided to carbonation cup 110 prior to carbonation. This arrangement may lower the operating pressure and reduce the CO₂ consumption of carbonated beverage maker 100. In some embodiments, carbonated beverage maker 100 is capable of carbonating a wide variety of beverages.

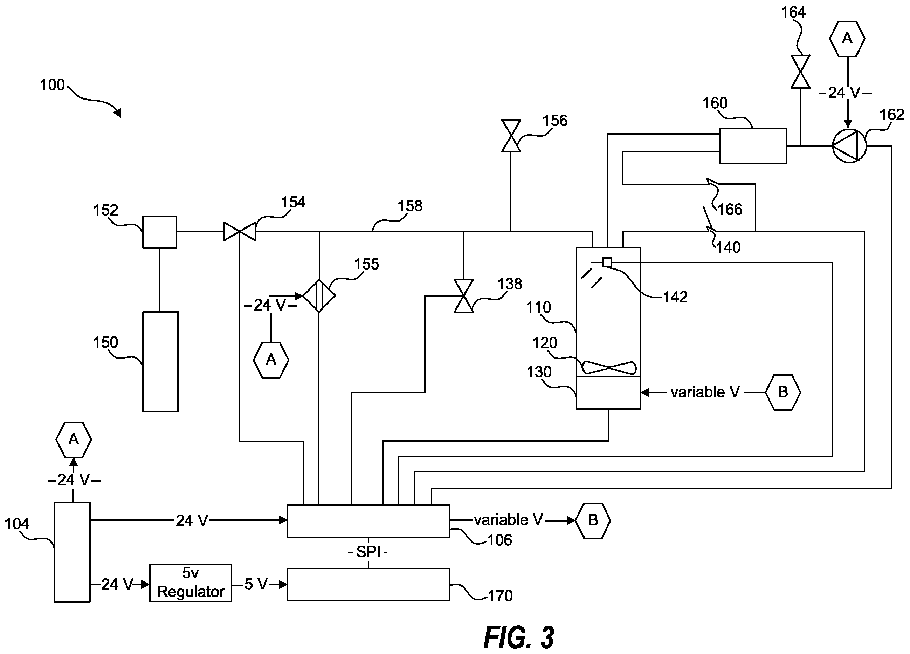

FIG. 3 illustrates a schematic that provides an overview of key components of carbonated beverage maker 100 according to some embodiments. In some embodiments, carbonated beverage maker 100 comprises a power supply 104 and a control unit 106. Power supply 104 provides adequate power to control unit 106 and all other components of carbonated beverage maker 100 in need of power. In some embodiments, power supply 104 provides a constant voltage to one or more components of carbonated beverage maker 100 (e.g., 24 volts to control unit 106). In some embodiments, power supply 104 provides a varying voltage to one or more components of carbonated beverage maker 100 (e.g., varying voltage to an impeller motor 130). In some embodiments, power supply 104 provides the varying voltage indirectly to one or more components of carbonated beverage maker 100 (e.g., constant 24 volts to control unit 106; varying voltage from control unit 106 to impeller motor 130). In some embodiments, power supply 104 provides a constant voltage (e.g., 24 volts) which may be reduced (e.g., 5 volts) before providing power to one or more components of carbonated beverage maker 100 (e.g., touch screen 170). In some embodiments, power source 104 comprises a battery. For example, carbonated beverage maker 100 may operate solely by battery power. In some embodiments, power source 104 comprises a plug to be inserted into an electrical outlet of a user's home.

In some embodiments, control unit 106 controls the operation of carbonated beverage maker 100. In some embodiments, control unit 106 is operably connected to each of the components of carbonated beverage maker 100 to control the beverage creation process. As noted above, control unit 106 utilizes power from power source 104. In some embodiments, control unit 106 supplies power to other components of carbonated beverage maker 100. In some embodiments, control unit 106 receives inputs from touch screen 170. In some embodiments, control unit 106 communicates with touch screen 170 through a serial peripheral interface. In some embodiments, control unit 106 uses inputs from touch screen 170 to determine the operation of other components of carbonated beverage maker 100. In some embodiments, control unit 106 communicates with components of carbonated beverage maker 100 with digital inputs and outputs. In some embodiments, control unit 106 communicates with components of carbonated beverage maker 100 through analog communication. In some embodiments, both digital and analog communication are utilized. Control unit 106 may communicate with one or more of a CO₂ supply solenoid valve 154, a pressure sensor 155, a solenoid vent valve 138, an impeller motor 130, a light emitting diode 142 at carbonation cup 110, a micro switch 140, a micro switch 166, and an air pump 162. In some embodiments, control unit 106 comprises a microcontroller.

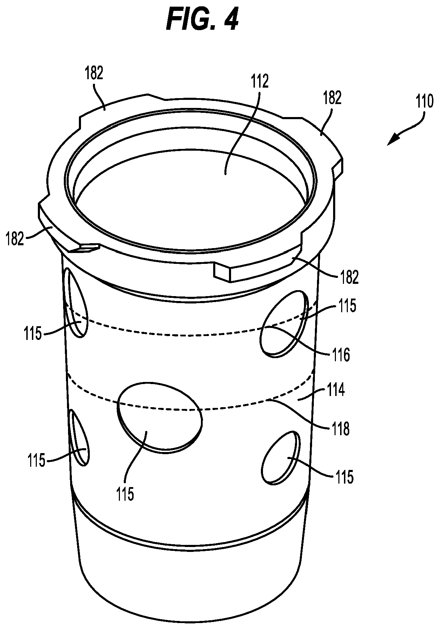

As noted above, and as shown in the schematic of FIG. 3, channels from carbonation source 150 and flavor source 160 lead to carbonation cup 110. Thus, carbonation cup 110, in some embodiments, is designed to accommodate the various systems of carbonated beverage maker 100. In some embodiments, carbonation cup 110, as shown, for example, in FIG. 4, is used to provide the diluent, flavor the diluent, cool the diluent/beverage, and carbonate the beverage. In some embodiments, one or more of these functions may be accomplished simultaneously.

In some embodiments, a user fills carbonation cup 110 with a diluent. In some embodiments, carbonation cup 110 is removable from carbonated beverage maker 100, which allows a user to more easily fill carbonation cup 110 with a diluent. In some embodiments, the diluent is water. Other diluents may also be used, including, but not limited to, milk, juice, or other drinks. According to the invention, the carbonation cup 110 includes a fill line indicator 116 for the diluent. In some embodiments, ice may be provided with the diluent. Thus, in some embodiments, fill line indicator 116 provides the fill line for the combination of diluent and ice. In some embodiments, carbonation cup 110 comprises two fill line indicators 116, 118-one for diluent and one for ice. In some embodiments, as shown, for example, in FIG. 4, ice fill line indicator 118 is below diluent fill line indicator 116. In some embodiments, ice fill line indicator 118 is above diluent fill line indicator 116. Fill line indicators 116, 118 may include visual markings, tactile markings, or a combination of both. Fill line indicators 116, 118 may include words, symbols, colors, solid lines, and/or dashed lines. In some embodiments, fill line indicators 116, 118 are only suggestions for optimal performance. A user may elect to fill carbonation cup 110 in a different manner to produce a customized beverage.

As noted above, ice may also be added to carbonation cup 110. In some embodiments, ice is a main aspect of the cooling system of carbonated beverage maker 100. In some embodiments, carbonation cup 110 comprises a material that has thermal insulation properties. For example, carbonation cup 110 may comprise plastic. In some embodiments, carbonation cup 110 includes a plastic cup 112. In some embodiments, plastic cup 112 is transparent or semi-transparent. Additional aspects of the cooling system provided by carbonation cup 110 will be discussed below.

In some embodiments, carbonation cup 110 comprises a carbonation chamber for carbonated beverage maker 100. Thus, carbonation cup 110 may be a pressure vessel capable of safely maintaining a pressure at which the beverage will be carbonated. In some embodiments, carbonation cup 110 comprises a material that can withstand high pressure. For example, carbonation cup 110 may comprise steel. In some embodiments, carbonation cup 110 includes a steel sheath 114 that surrounds plastic cup 112. In some embodiments, steel sheath 114 completely surrounds plastic cup 112 so that plastic cup 112 is not visible from outside carbonation cup 110. In some embodiments, steel sheath 114 defines one or more holes 115 therein. Thus, holes 115 in steel sheath 114 allow a user to see plastic cup 112 from outside carbonation cup 110. Fill line indicators 116, 118 may be disposed only on plastic cup 112, only on steel sheath 114, or both. When plastic cup 112 is transparent or semi-transparent, holes 115 in steel sheath 114 allow a user to see the beverage within carbonation cup 110. Moreover, a user can view the process of creating the beverage through holes 115. Holes 115 may comprise a variety of shapes, sizes, and patterns. In some embodiments, holes 115 are circular. In some embodiments, holes 115 approximate bubbles.

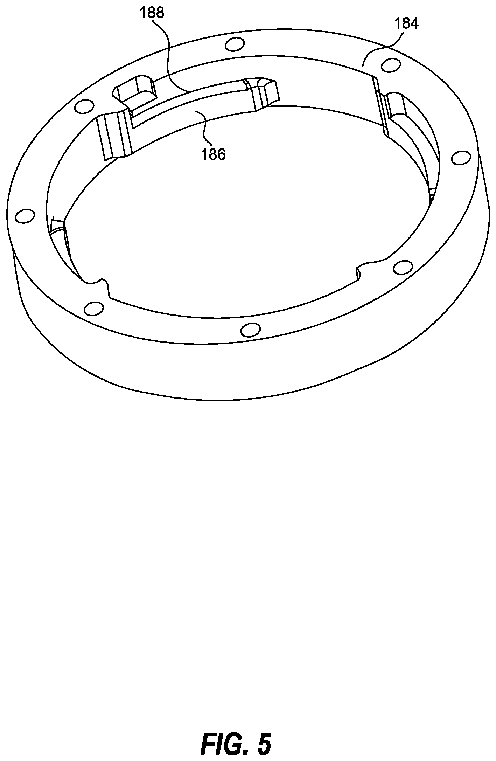

Carbonation cup 110 may attach to carbonated beverage maker 100 at cup docking module 180 (see FIG. 2). In some embodiments, carbonation cup 110 includes one or more attachment projections 182 around a top lip. For example, as shown in FIG. 4, carbonation cup may include four attachment projections 182. Attachment projections 182 may be configured to support carbonation cup 110 within cup docking module 180. In some embodiments, cup docking module 180 includes a support ring 184, as shown, for example in FIG. 5. In some embodiments, at an inner portion of support ring 184 are located projection mating interfaces 186 corresponding to attachment projections 182. In between each projection mating interface 186 is a gap big enough for attachment projection 182 to extend through. Thus, to attach carbonation cup 110 to cup docking module 180, a user orients carbonation cup 110 so that attachment projections 182 align with the gaps and inserts carbonation cup 110 into support ring 184 until attachment projections 182 are above projection mating interfaces 186. A user then rotates carbonation cup 110 so that attachment projections 182 are resting on projection mating interfaces 186. In some embodiments, projection mating interfaces 186 include a detent 188 to prevent accidental removal of carbonation cup 110 from cup docking module 180. For example, detent 188 may prevent early removal of carbonation cup 110 from docking module 180 while carbonation cup 110 is still pressurized. This configuration also serves to ensure that only a proper carbonation cup 110 is used with carbonated beverage maker 100.

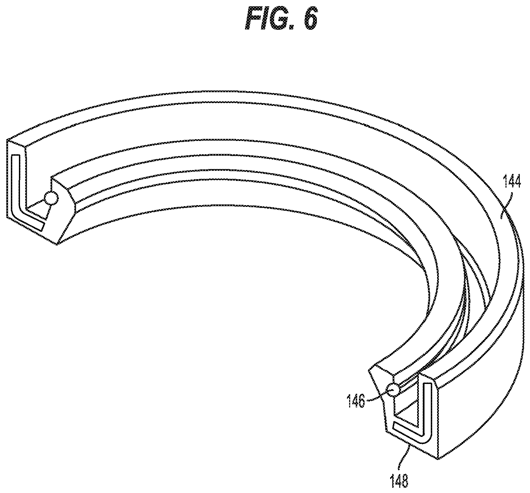

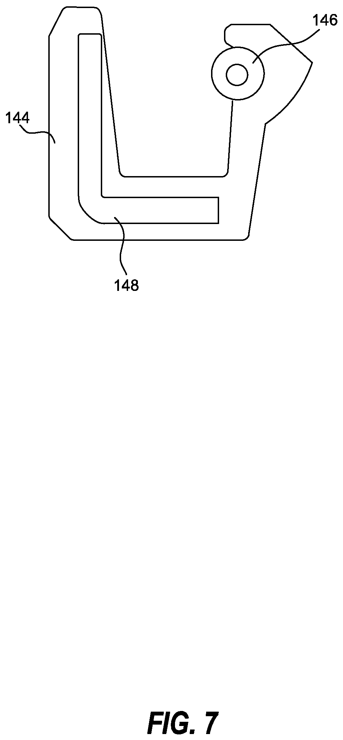

In some embodiments, when carbonation cup 110 is attached to carbonated beverage maker 100, a sealed, pressure-tight chamber is formed. In some embodiments, an internal lip seal 144 is used to seal carbonation cup 110 with cup docking module 180. Internal lip seal 144, as shown, for example, in FIGS. 6 and 7, may be made of rubber. In some embodiments, internal lip seal 144 includes spring 146 and inner metal case 148. Spring 146 may adjust for any non-concentric aspect of carbonation cup 110. Internal lip seal 144 may expand under pressure, thus, further sealing carbonation cup 110 with cup docking module 180. In some embodiments, internal lip seal 144 is disposed in cup docking module 180 such that when carbonation cup 110 is attached to cup docking module 180, internal lip seal 144 is disposed within carbonation cup 110 around its lip.

In some embodiments, cup docking module 180 includes a micro switch 140, as shown in FIG. 3, which may detect the presence of carbonation cup 110. When carbonation cup 110 is detected, micro switch 140 closes to complete a circuit. If carbonation cup 110 is not detected, micro switch 140 remains open. An open circuit condition prevents carbonated beverage maker 100 from operating. In some embodiments, carbonation cup 110 is detected with use of light emitting diode 142.

In some embodiments, when carbonation cup 110 is attached to carbonated beverage maker 100, carbonation source 150 is operably connected with carbonation cup 110, as shown in FIG. 3. In some embodiments, carbonation source 150 comprises a CO₂ tank or cylinder. However, other carbonation sources may be used, which are described in further detail below. In some embodiments, a pressure regulator 152 is attached to carbonation source 150. Pressure regulator 152 may keep carbonation source 150 at a particular pressure. In some embodiments, pressure regulator 152 keeps carbonation source 150 at a pressure of 3.5 bars.

In some embodiments a supply line 158 runs from carbonation source 150 to carbonation cup 110. Supply line 158 may include CO₂ supply solenoid valve 154. In some embodiments, CO₂ supply solenoid valve 154 is controlled by control unit 106. For example, at an appropriate time during the operation of carbonated beverage maker 100, control unit 106 may communicate with CO₂ supply solenoid valve 154, causing CO₂ supply solenoid valve 154 to open and allow flow of CO₂ to carbonation cup 110 through supply line 158. Supply line 158 runs through cup docking module 180 and ends at an inlet into carbonation cup 110. After the desired amount of CO₂ has been used, control unit 106 communicates with CO₂ supply solenoid valve 154, causing CO₂ supply solenoid valve 154 to close. In some embodiments, supply line 158 may also include a pressure relief valve 156. Pressure relief valve 156 senses pressure within carbonation cup 110 and supply line 158 and is configured to open when the pressure is too high. For example, if the chamber reaches a predetermined pressure, pressure relief valve 156 may open to lower the pressure. In some embodiments, the predetermined pressure is 4.5 bars.

In some embodiments, carbonated beverage maker 100 includes a solenoid vent valve 138, as shown, for example, in the schematic of FIG. 3. After carbonation of the beverage is completed, solenoid vent valve 138 may be used to release the pressure from carbonation cup 110 through a venting process. In some embodiments, the venting process through solenoid vent valve 138 is a stepped process to reduce expansion of the foam from the carbonated beverage. The venting process may vary based on the level of carbonation, the type of flavor or diluent, and other properties of the beverage. In some embodiments, the venting process reduces spills that may occur when removing carbonation cup 110 from carbonated beverage maker 100. In some embodiments, solenoid vent valve 138 is controlled by control unit 106. Additional aspects of the carbonation system provided by carbonation cup 110 will be discussed below.

In addition to providing a connection to carbonation source 150, cup docking module 180 may also provide a connection to flavor source 160. Flavor source 160 may contain a powder, syrup, gel, liquid, beads, or other form of concentrate. In some embodiments, flavor source 160 is disposed within cup docking module 180. In some embodiments, flavor source 160 comprises a pod. In some embodiments, flavor source 160 comprises a single-serving of flavor. In some embodiments, flavor source 160 contains sufficient flavoring for multiple servings. Cup docking module 180 may be configured to receive flavor source 160. In some embodiments, carbonated beverage maker 100 is configured to open flavor source 160. Variations of pods and other flavor sources, and how carbonated beverage makers may open them, are described in more detail below.

In some embodiments, carbonated beverage maker 100 is configured to deliver the contents of flavor source 160 into carbonation cup 110, as shown, for example, in the schematic of FIG. 3. For example, carbonated beverage maker 100 may include an air pump 162. Air pump 162 may be operated by control unit 106 to pump the contents of flavor source 160 into carbonation cup 110. In some embodiments, carbonated beverage maker 100 includes a pressure relief valve 164. Pressure relief valve 164 senses the pressure related to air pump 162 and is configured to open when the pressure is too high. For example, if a predetermined pressure is reached, pressure relief valve 164 may open to lower the pressure. In some embodiments, the predetermined pressure is 1 bar.

The contents of flavor source 160 may be provided into carbonation cup 110 prior to carbonation of the beverage. Providing the contents of flavor source 160 into carbonation cup 110 prior to carbonation of the beverage may assist in producing a beverage having a desirable temperature. In some embodiments, the contents of flavor source 160 may be provided into carbonation cup 110 during or after carbonation of the beverage. In some embodiments, cup docking module 180 includes a micro switch 166, which may detect the presence of flavor source 160. When flavor source 160 is detected, micro switch 166 closes to complete a circuit. If flavor source 160 is not detected, micro switch 166 remains open. An open circuit condition prevents carbonated beverage maker 100 from operating. Additional aspects of the flavor system provided by carbonation cup 110 will be discussed below.

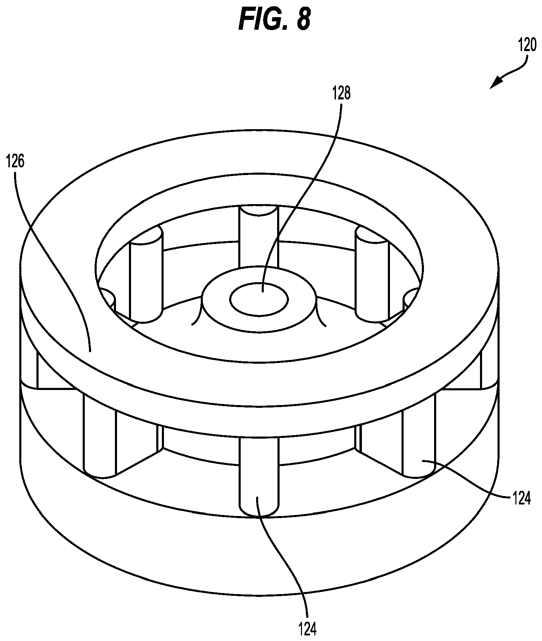

As noted above, aspects of the cooling system, carbonation system, and flavor system, will now be discussed further. In some embodiments, carbonation cup 110 includes an impeller 120, as shown, for example, in FIG. 8. In some embodiments, impeller 120 includes a base 121 and a plurality of blades 124 that protrude from base 121. In some embodiments, blades 124 protrude upwardly from the top of base 121. In some embodiments, blades 124 may protrude outwardly. In some embodiments, impeller 120 includes a ring 126. Ring 126 may have an outer circumference equal to the circumference of impeller 120. Ring 126 is disposed at a top portion of impeller 120, for example, above the blades 124. In some embodiments, ring 126 is attached to each of the plurality of blades 124. Thus, ring 126 may strengthen blades 124 so that ice moving within the beverage during operation of impeller 120 does not damage blades 124.

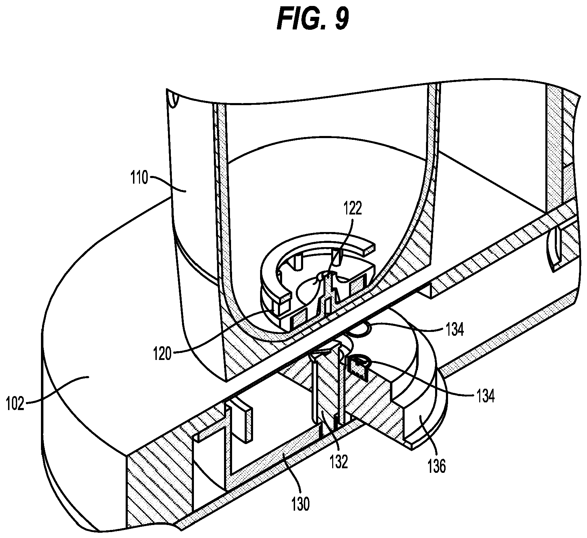

Impeller 120 may assist in cooling, carbonating, and/or flavoring a beverage. In some embodiments, impeller 120 is disposed in a bottom of carbonation cup 110, as shown, for example, in FIG. 9. In some embodiments, impeller 120 attaches to carbonation cup 110 at a spindle 122 that projects from the bottom of carbonation cup 110. Impeller 120 may include a hole 128 that interfaces with spindle 122. In some embodiments, impeller 120 is removable from carbonation cup 110. For example, hole 128 may interface with spindle 122 in such a way that secures impeller 120 to carbonation cup 110 to prevent unintentional detachment of impeller 120, but that also allows removing impeller 120, for example, for cleaning purposes.

Impeller 120 may be driven by an impeller motor 130. In some embodiments, impeller motor 130 rotates around a spindle 132. In some embodiments, impeller motor 130 includes magnets 134 to drive impeller 120, which may include a magnetic material. Magnets 134 may be embedded within a pulley wheel 136. Thus, as pulley wheel 136 rotates around spindle 132, magnets 135 drive impeller 120 to also rotate. Because impeller 120 is magnetically driven, the pressure seal of carbonation cup 110 is maintained.

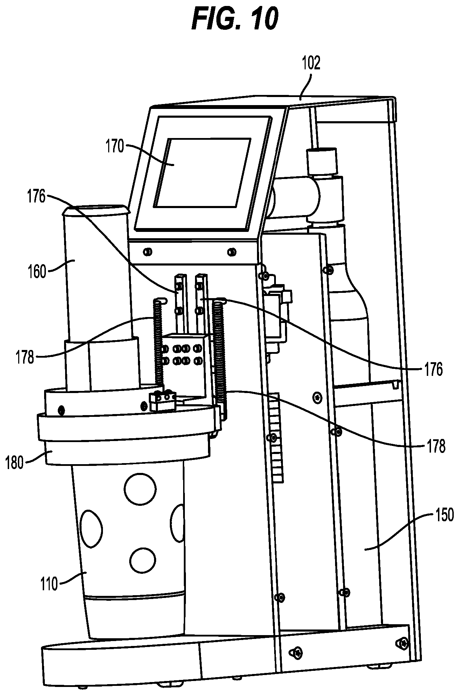

In some embodiments, cup docking module 180 attaches to carbonated beverage maker 100 via vertical rails 176, as shown, for example, in FIG. 10. In some embodiments, cup docking module 180 moves relative to vertical rails 176. In some embodiments, springs 178 are disposed adjacent to vertical rails 176. Cup docking module 180 may be attached to springs 178. In this configuration, springs 178 operate to locate cup docking module 180 along vertical rails 176. Thus, without the weight of carbonation cup 110, cup docking module 180 is disposed along vertical rails 176 at a location that provides enough room underneath cup docking module to easily insert carbonation cup 110 into cup docking module 180. When carbonation cup 110 is attached to cup docking module 180, its weight pulls cup docking module 180 down to a lower position along vertical rails 176 so that impeller 120 is close enough to magnets 134 to be driven by impeller motor 130.

In operation, impeller 120 serves the function of agitating the ice/water/flavor/CO₂ mixture. As a result, impeller 120 assists in cooling the beverage, mixing the beverage so that the flavor is homogenous in the beverage, and carbonating the beverage. In some embodiments, impeller 120 creates a vortex that draws the pressurized CO₂ near the bottom of carbonation cup 110. In some embodiments, ring 126 of impeller 120 may assist in creating smaller gas bubbles that carbonate the beverage in carbonation cup 110, thus improving the quality of carbonation. For example, the smaller gas bubbles may lead to a drink that maintains its carbonation for a longer period of time. As noted, the vortex also mixes the ice and water to produce a beverage at a cool temperature. In some embodiments, the ice counteracts the heat generated by the carbonation process. In some embodiments, most or all of the ice melts during the operation of impeller 120.

In some embodiments, carbonated beverage maker 100 includes a user interface that allows a user to operate the device to make a carbonated beverage. The user interface may include, for example, dials, push buttons, switches, knobs, touch screens, display screens, lights, or a combination of these and other controls. In some embodiments, the user interface allows the user to customize the beverage. For example, the user may select a level of carbonation for the beverage (e.g., low carbonation, medium carbonation, high carbonation).

Carbonated beverage maker 100 may include a memory that stores recipes for producing particular beverages. For example, the recipe for low carbonation may be stored in memory such that when a user selects low carbonation on the user interface, control unit controls the functions of carbonated beverage maker 100 based on the recipe stored in the memory. In some embodiments, a recipe may be associated with flavor source 160 that is inserted into carbonated beverage maker 100. In some embodiments, carbonated beverage maker 100 is configured to identify flavor source 160 and use the corresponding recipe.

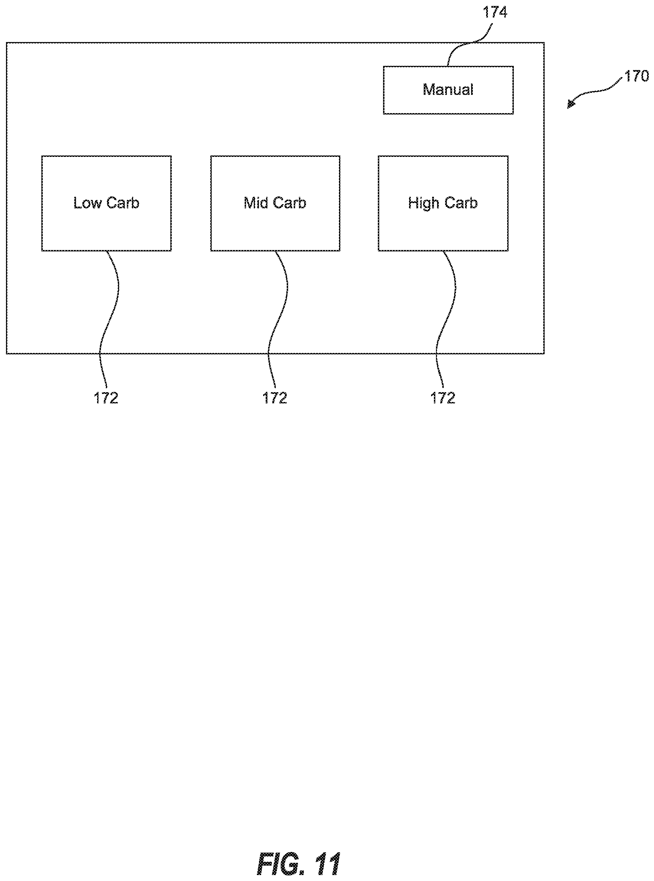

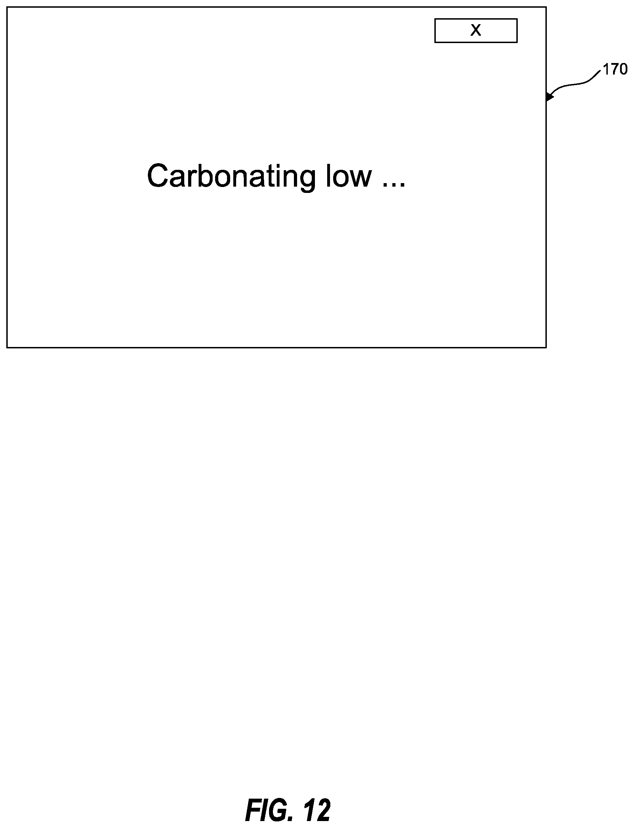

In some embodiments, the user interface comprises a touch screen 170. Touch screen 170 receives input from a user. In some embodiments, touch screen 170 is operably connected to control unit 106. Thus, control unit 106 may control the components of carbonated beverage maker 100 based on input received at touch screen 170. For example, as shown in FIG. 11, touch screen 170 may display selectable options 172 for making a beverage. Selectable options 172 may include, for example, an option for low carbonation (e.g., low carb), medium carbonation (e.g., mid carb), and high carbonation (e.g., high carb). Selectable options 172 may include an option for manual operation of carbonated beverage maker 100. In some embodiments, manual operation allows a user to specifically control the carbonation process rather than relying on a recipe stored in the memory of carbonated beverage maker 100. In some embodiments, when a selectable option 172 is chosen, touch screen 170 may change to communicate the selected option. For example, as shown in FIG. 12, when a user selects low carbonation, touch screen 170 may communicate that carbonated beverage maker 100 is carbonating the beverage at a low setting. In some embodiments, touch screen 170 includes a separate start button. In some embodiments, selectable options 172 operate simultaneously as a selection button and a start button.

In some embodiments, additional levels of carbonation may be options. For example, a user may select the level of carbonation on a scale from one to ten. In some embodiments, the user interface provides a continuous scale of carbonation rather than discrete options. For example, a rotating knob may be used to select a carbonation level.

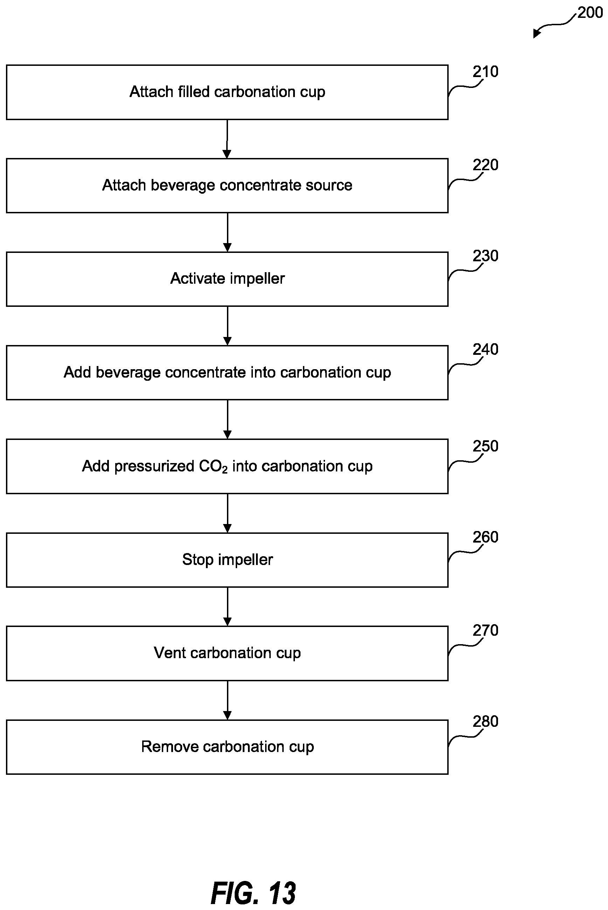

A method 200 of using carbonated beverage maker 100, as shown, for example, in FIG. 13, will now be described in more detail. At operation 210, filled carbonation cup 110 is attached to carbonated beverage maker 100. In some embodiments, a user may fill carbonation cup 110 with a diluent. In some embodiments, a user may add ice with the diluent. For example, in some embodiments, the user may add a pre-determined amount of ice and water to carbonation cup 110. Other diluents may be used. For example, a user may fill carbonation cup 110 with water, juice, milk, or any other drink. In some embodiments, the user may also add other additives to carbonation cup 110, such as fruit. To attach filled carbonation cup 110 to carbonated beverage maker at operation 210, the user may fit carbonation cup 110 to cup docking module 180 and twist carbonation cup 110 to lock it into position.

At operation 220, concentrate may be added to carbonated beverage maker 100. In some embodiments, concentrate is added by attaching a beverage concentrate source (e.g., flavor source 160) to carbonated beverage maker 100. In some embodiments, carbonated beverage maker 100 includes a receptacle for directly containing concentrate. The concentrate may be in the form of powder, liquid, gel, syrup, or beads, for example. After flavor source 160 and carbonation cup 110 are attached to carbonated beverage maker 100, micro switches 140 and 166 will be in a closed position, thus allowing carbonated beverage maker 100 to operate.

In some embodiments, a user may start carbonated beverage maker 100 via the user interface (e.g., touch screen 170). For example, the user may select the carbonation level and push start. At operation 230 (after the user starts the device), impeller 120 is activated. In some embodiments, impeller 120 agitates the ice and water. In some embodiments, the ice melts to produce water at about 1° C. As described above, impeller 120 is magnetically coupled to impeller motor 130 to avoid compromising the pressure envelope of carbonation cup 110.

At operation 240, the beverage concentrate is added into carbonation cup 100. In some embodiments, the concentrate from flavor source 160 is deposited into the ice/water mixture. In some embodiments, this is accomplished with use of air pump 162. In some embodiments, operation 230 and operation 240 occur simultaneously (i.e., the concentrate is deposited at the same time that impeller 120 begins rotating).

At operation 250, pressurized CO₂ is added into carbonation cup 110. In some embodiments, CO₂ supply solenoid valve 154 is opened to add CO₂ into carbonation cup. In some embodiments, the headspace (the space above the beverage mixture) is filled with CO₂ at pressure. In some embodiments, as the temperature drops and the pressure is maintained, the beverage is carbonated. In some embodiments, impeller 120 creates a vortex, thus bringing the CO₂ to the bottom of carbonation cup 110 and further encouraging carbonation of the beverage. Carbonated beverage maker 100 may run (i.e., CO₂ supply solenoid valve 154 is open and impeller 120 is rotating) for a fixed time period. In some embodiments, carbonated beverage maker 100 may run for between 15 and 120 seconds. In some embodiments, carbonated beverage maker 100 may run for between 30 and 60 seconds. In some embodiments, carbonated beverage maker 100 may run for 45 seconds. The length of time carbonated beverage maker 100 runs is based, at least partially, on the desired level of carbonation. Thus, the length of time carbonated beverage maker 100 runs may depend on the option selected by the user with the user interface. In manual operation, the user may directly start and stop carbonated beverage maker 100 at whatever length of time the user desires.

At operation 260, impeller 120 is stopped. In some embodiments, at or near the same time as stopping the impeller, the gas supply is isolated, for example by closing CO₂ supply solenoid valve 154.

At operation 270, carbonation cup 110 is vented. As noted above, the venting process may be a stepped process. In some embodiments, carbonation cup 110 is vented through solenoid vent valve 138. Control unit 106 may open and close solenoid vent valve 138 repeatedly to keep the foam in carbonation cup 110 from expanding. This process reduces the likelihood of the beverage from overflowing and/or spilling upon removal of carbonation cup 110 from carbonated beverage maker 100.

At operation 280, carbonation cup 110 is removed from carbonated beverage maker 100. In some embodiments, the carbonated beverage may be poured from carbonation cup 110 into a serving cup. In some embodiments, the carbonated beverage may be consumed directly from carbonation cup 110. To repeat the process, carbonation cup 110 may be rinsed and washed. Thus, carbonated beverage maker 100 is capable of providing back-to-back drinks.

Although the operations of method 200 have been described in a particular order, the order is not essential to method 200. In addition, some of the described operations are not necessary. For example, in some embodiments, a user may desire to simply carbonate water, or some other diluent, in which case, there may not be a beverage concentrate to add into carbonation cup 110. Finally, there may be additional operations not described here that may constitute part of method 200.

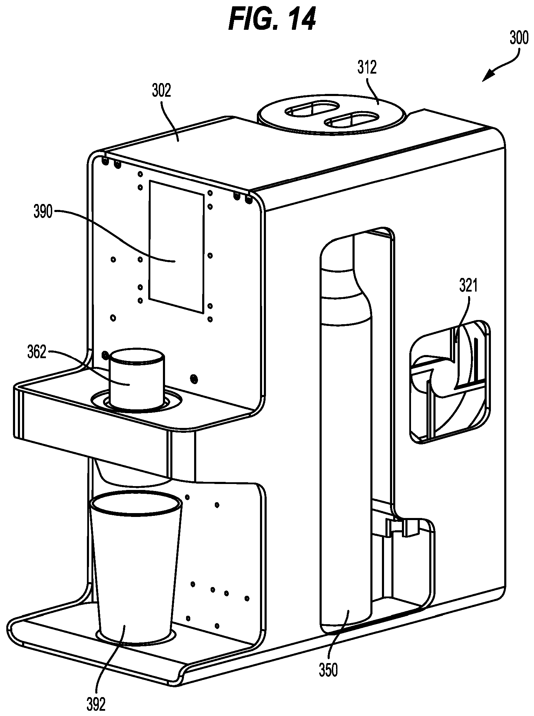

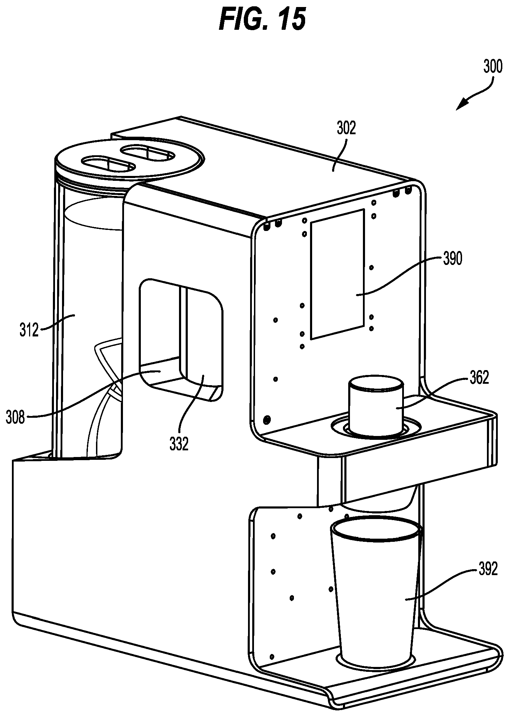

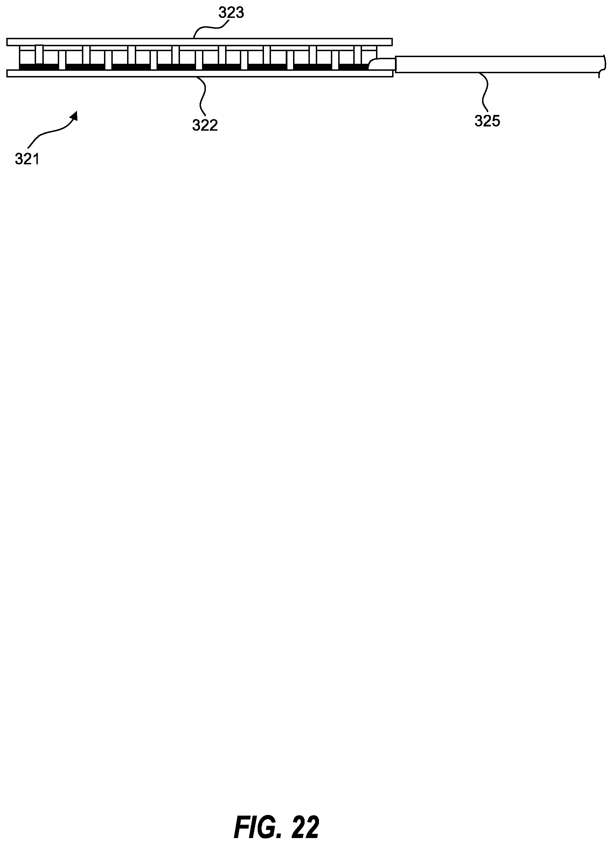

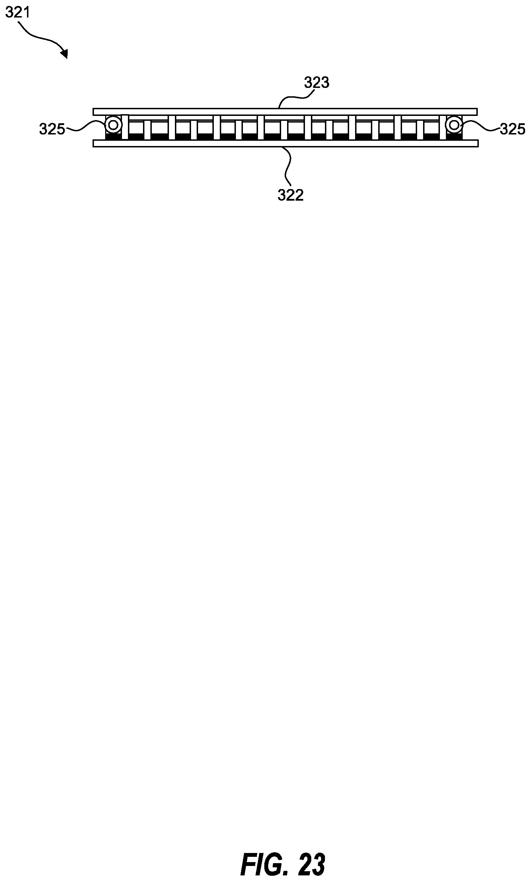

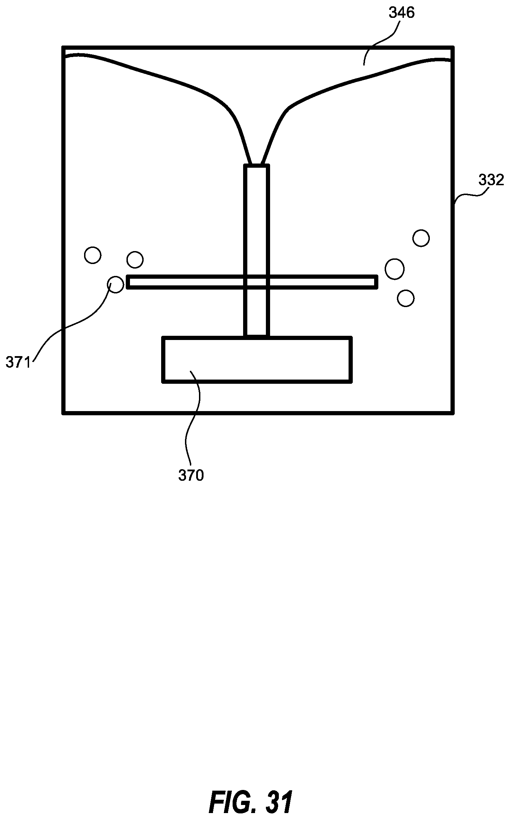

Some embodiments of a carbonated beverage maker will now be described with reference to FIGS. 14-36. In some embodiments, as shown, for example, in FIGS. 14 and 15, a carbonated beverage maker 300 includes a diluent system, a cooling system, a carbonation system, and a flavor system. In some embodiments, carbonated beverage maker 300 includes a housing 302. In some embodiments, housing 302 provides the infrastructure to contain and/or support each of the systems of carbonated beverage maker 300.

Components of these systems and other aspects of carbonated beverage maker 300 may be visible from outside carbonated beverage maker 300. For example, in some embodiments, a carbonation source 350 (see FIG. 14) and a carbonation chamber 332 (see FIG. 15) of the carbonation system are disposed within a main portion of housing 302 and may be visible from outside carbonated beverage maker 300. In some embodiments, housing 302 includes a viewing window 308. In some embodiments, viewing window 308 allows a user to see the carbonation process, for example, in carbonation chamber 332. In some embodiments, viewing window 308 comprises a transparent material, such as plastic or glass. In some embodiments, viewing window 308 is simply a lack of material (i.e., a hole in housing 302). In some embodiments, a water reservoir 312 and a fan 321 of the diluent system and the cooling system are disposed within the main portion of housing 302 and may be visible from outside carbonated beverage maker 300. In some embodiments, housing 302 supports flavor source 362 of the flavor system.

Thus, in some embodiments, carbonated beverage maker 300 includes an onboard water reservoir 312 that allows carbonated beverage maker 300 to make multiple drinks. Water may be stored and maintained at a cool temperature in water reservoir 312. In some embodiments, water reservoir 312 may supply water to carbonation chamber 332, which is disposed within carbonated beverage maker 300, where it is carbonated. In some embodiments, carbonation chamber 332 then supplies carbonated water to be dispensed directly into a drinking cup 392 along with concentrate from flavor source 362. In some embodiments, a user interface, such as touch screen 390, is disposed on housing 302 to allow a user to operate carbonated beverage maker 300.

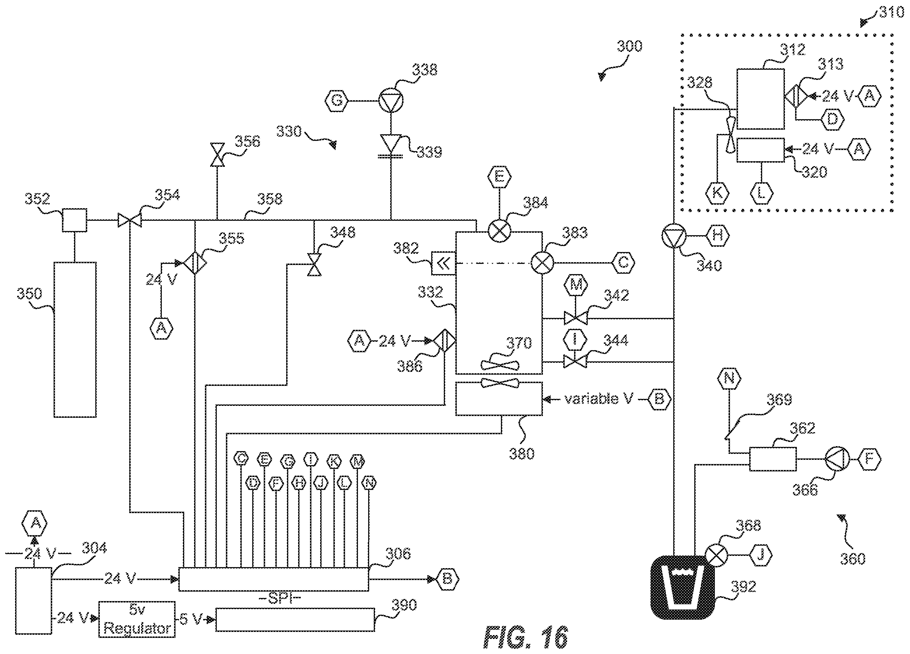

FIG. 16 illustrates a schematic that provides an overview of key components of carbonated beverage maker 300 according to some embodiments. In some embodiments, carbonated beverage maker 300 comprises a power supply 304 and a control unit 306. Power supply 304 provides adequate power to control unit 306 and all other components of carbonated beverage maker 300 in need of power. In some embodiments, power supply 304 provides a constant voltage to one or more components of carbonated beverage maker 300 (e.g. 24 volts to control unit 306). In some embodiments, power supply 304 provides a varying voltage to one or more components of carbonated beverage maker 300 (e.g., varying voltage to an impeller motor 380). In some embodiments, power supply 304 provides the varying voltage indirectly to one or more components of carbonated beverage maker 300 (e.g., constant 24 volts to control unit 306; varying voltage from control unit 306 to impeller motor 380). In some embodiments, power supply 304 provides a constant voltage (e.g., 24 volts) which may be reduced (e.g., 5 volts) before providing power to one or more components of carbonated beverage maker 300 (e.g., touch screen 390). In some embodiments, power source 304 comprises a battery. For example, carbonated beverage maker 300 may operate solely by battery power. In some embodiments, power source 304 comprises a plug to be inserted into an electrical outlet of a user's home.

In some embodiments, control unit 306 controls the operation of carbonated beverage maker 300. In some embodiments, control unit 306 is operably connected to each of the components of carbonated beverage maker 300 to control the beverage creation process. As noted above, control unit 306 utilizes power from power source 304. In some embodiments, control unit 306 supplies power to other components of carbonated beverage maker 300. In some embodiments, control unit 306 receives inputs from touch screen 390. In some embodiments, control unit 306 communicates with touch screen 390 through a serial peripheral interface. In some embodiments, control unit 306 uses inputs from touch screen 390 to determine the operation of other components of carbonated beverage maker 300. In some embodiments, control unit 306 communicates with components of carbonated beverage maker 300 with digital inputs and outputs. In some embodiments, control unit 306 communicates with components of carbonated beverage maker 300 through analog communication. In some embodiments, both digital and analog communication are utilized. Control unit 306 may communicate with one or more of a CO₂ supply solenoid valve 354, a pressure sensor 355, a solenoid vent valve 348, a carbonation monitor thermistor 386, an impeller motor 380, a level sensor 382, a reservoir temperature sensor 313, a light emitting diode 384 at carbonation chamber 332, an air pump 366 for pumping concentrate from flavor source 362, an air pump 338 for pumping carbonated water from carbonation chamber 332, a water fill pump 340, a dispense valve 344, a light emitting diode 368 at drinking cup 392, a fan 328, a cooling module 320, a water fill valve 342, and a micro switch 369. In some embodiments, control unit 106 comprises a microcontroller.

As shown in FIG. 16, carbonated beverage maker 300 includes a diluent and cooling system 310, a carbonation system 330, and a flavor system 360. In some embodiments, these systems may overlap. For example, one component, such as water fill valve 342, may be considered part of diluent and cooling system 310 and part of carbonation system 330.

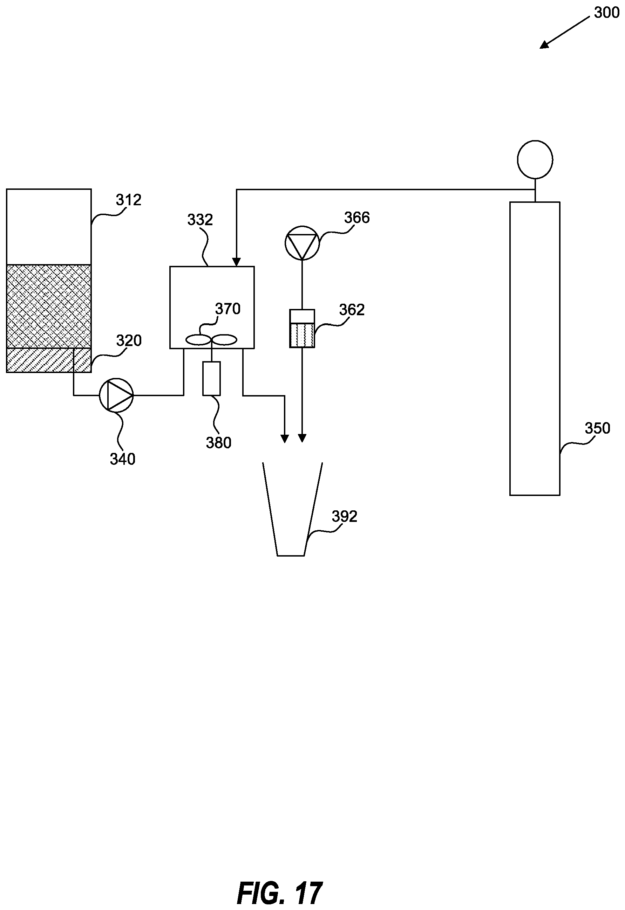

Diluent and cooling system 310, carbonation system 330, and flavor system 360 work together to create carbonated beverages. For example, a simplified schematic of carbonated beverage maker 300 is shown in FIG. 17. Water reservoir 312 stores water, which may be maintained at a cool temperature by cooling module 320. In some embodiments, a water fill pump 340 pumps water from water reservoir 312 into carbonation chamber 332, where the water is carbonated. In some embodiments, carbonation source 350 supplies CO₂ to carbonation chamber 332. In some embodiments, an impeller 370, magnetically driven by an impeller motor 380, is disposed in carbonation chamber 332 and operates to encourage carbonation of water. In some embodiments, the carbonated water is dispensed into drinking cup 392 along with concentrate from flavor source 362, which may be pumped by air pump 366. Further details of embodiments of carbonated beverage maker 300 are described below.

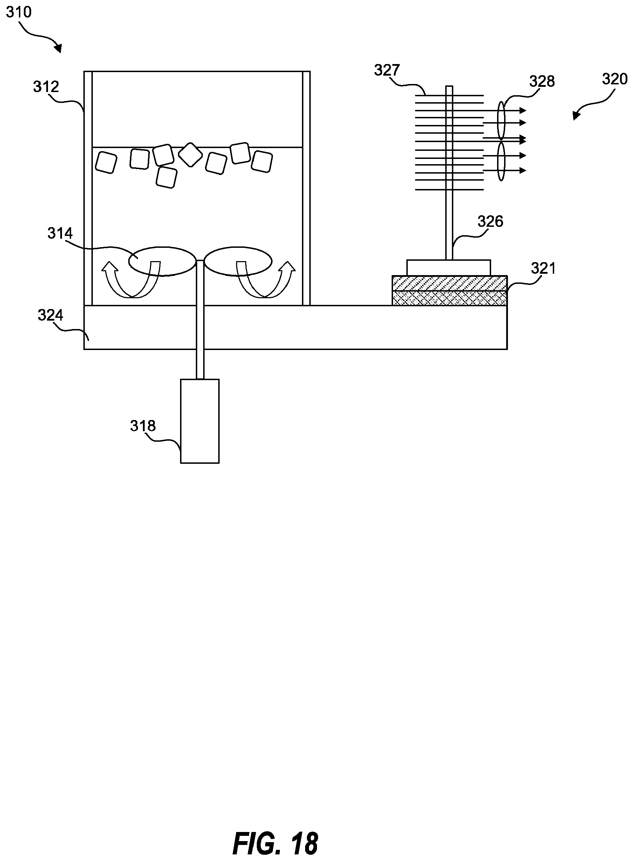

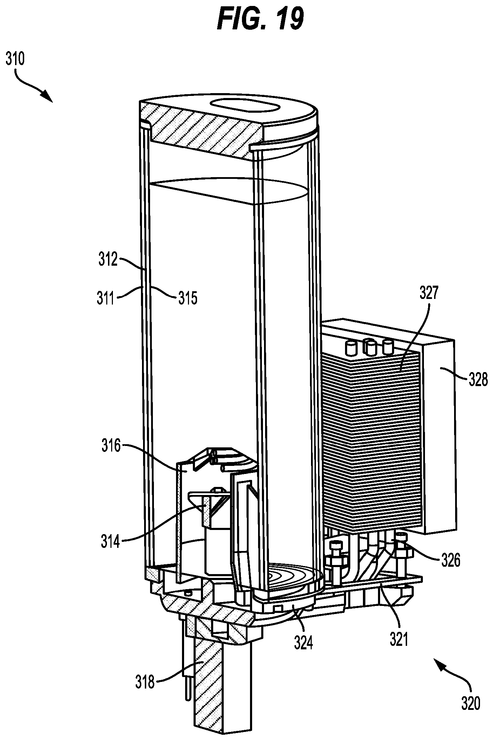

In some embodiments, diluent and cooling system 310, as shown, for example in FIGS. 18 and 19, comprises water reservoir 312, reservoir temperature sensor 313 (see FIG. 16), an impeller 314, a shroud or flow conditioner 316, an impeller motor 318, and cooling module 320. Components of cooling module 320 will be discussed further below.

In some embodiments, water reservoir 312 is configured to store water. In some embodiments, water reservoir 312 is configured to store enough water to prepare multiple beverages. For example, water reservoir 312 may be able to store enough water to prepare at least six beverages. In some embodiments, water reservoir 312 may be able to store at least two and a half liters of water. In some embodiments, water reservoir 312 is configured to store water and ice. In some embodiments, the ice cools the water down to a desirable drinking temperature. In some embodiments, a user may fill water reservoir 312 with water and/or ice. In some embodiments, water reservoir 312 is fixed relative to carbonated beverage maker 300. In some embodiments, water reservoir 312 is removable from carbonated beverage maker 300, which may make it easier for a user to fill water reservoir 312.

In some embodiments, water reservoir 312 is double walled, as shown, for example, in FIG. 19, with an outer wall 311 and an inner wall 315. In some embodiments, inner wall 315 contains water in water reservoir 312 and outer wall 311 traps air between inner wall 315 and outer wall 315. Thus, outer wall 311 and inner wall 315 may operate to insulate water reservoir 312 and limit heat exchange between the water and/or ice within water reservoir 312 and the outside environment.

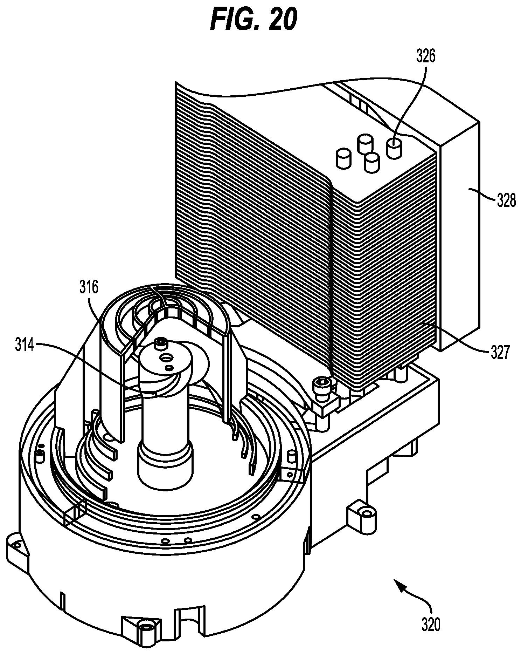

In some embodiments, water reservoir 312 comprises an impeller 314 disposed therein. In some embodiments, impeller 314 is disposed at a bottom of water reservoir 312. In some embodiments, impeller 314 is magnetically coupled to and driven by an impeller motor 318, similar to the relationship between impeller 120 and impeller motor 130 described above. In some embodiments, impeller 314 operates to agitate the water and/or ice within water reservoir 312. In some embodiments, impeller 314 keeps ice from forming at the bottom of water reservoir 312 by circulating the water within water reservoir 312. In some embodiments, flow conditioner 316 is disposed at a bottom of water reservoir 312, as shown, for example, in FIGS. 19 and 20. In some embodiments, flow conditioner 316 surrounds impeller 314. In some embodiments, flow conditioner 316 is configured to assist impeller 314 in achieving a good flow over the bottom of reservoir 312 to reduce ice formation. In some embodiments, flow conditioner 316 is configured to prevent a vortex from forming within water reservoir 312. Flow conditioner 314 may also protect impeller 314 from ice moving within water reservoir 312 that could damage impeller 314.

In some embodiments, water reservoir 312 is operatively connected to cooling module 320, as shown, for example, in FIGS. 18-20. In some embodiments, cooling module 320 lowers the temperature of water within water reservoir 312. In some embodiments, cooling module 320 simply maintains the temperature of water in water reservoir 312. In some embodiments, reservoir temperature sensor 313 is disposed on or within water reservoir 312 and configured to measure the temperature of the water within water reservoir 312. In some embodiments, results from reservoir temperature sensor 313 may affect the operation of carbonated beverage maker 300. For example, the results from reservoir temperature sensor 313 may lead to carbonated beverage maker 300 turning cooling module 320 on or off to ensure the water is at a desirable drinking temperature. In some embodiments, the results from reservoir temperature sensor 313 may cause carbonated beverage maker 300 to display a message on touch screen 390 regarding the temperature of the water in water reservoir 312. For example, touch screen 390 may inform the user that more ice needs to be added to water reservoir 312.

In some embodiments, cooling module 320 may include a thermoelectric cooler 321, a cold plate 324, a heat pipe assembly 326, fins 327, and a fan 328. In some embodiments, cold plate 324 forms a base of water reservoir 312. In some embodiments, thermoelectric cooler 321 is disposed on cold plate 324. In some embodiments, cold plate 324 extends beyond water reservoir 312 and thermoelectric cooler 321 is disposed on that portion of cold plate 324 adjacent to water reservoir 312, as shown, for example, in FIGS. 18-20.

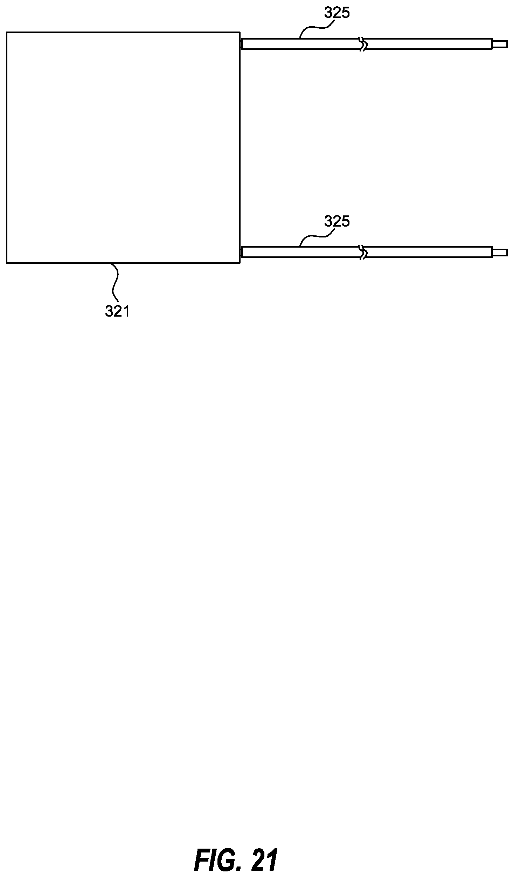

In some embodiments, thermoelectric cooler 321, as shown, for example in FIGS. 21-23, includes two terminals 325. When a voltage is applied across terminals 325, one side of thermoelectric cooler 321 becomes cold (i.e., cold side 323) while the other side of thermoelectric cooler becomes hot (i.e., hot side 322). In some embodiments, cold side 322 is disposed closest to cold plate 324 (see FIGS. 18-20) and may operate to cool cold plate 324, which in turn cools and/or maintains a cool temperature of water in water reservoir 312.

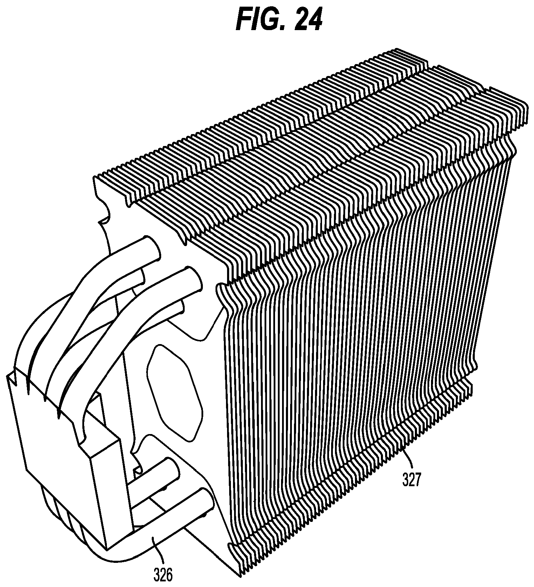

In some embodiments, hot side 322 of thermoelectric cooler 321 is operably connected to heat pipe assembly 326 (see FIGS. 18-20). In some embodiments, heat pipe assembly 326, as shown, for example, in FIG. 24, moves heat energy away from hot side 322. For example, heat pipe assembly 326 may move heat energy away from hot side 322 by maintaining a thermal gradient across heat pipe assembly 326. In some embodiments, the end of heat pipe assembly 326 opposite from thermoelectric cooler 321 includes an array of heat exchanger fins 327. In some embodiments, heat exchanger fins 327 are part of heat pipe assembly 326 and are not removable. In some embodiments, fan 328 is disposed near heat exchanger fins 327 to remove excess heat and maintain the thermal gradient across heat pipe assembly 326 (see FIGS. 18-20).

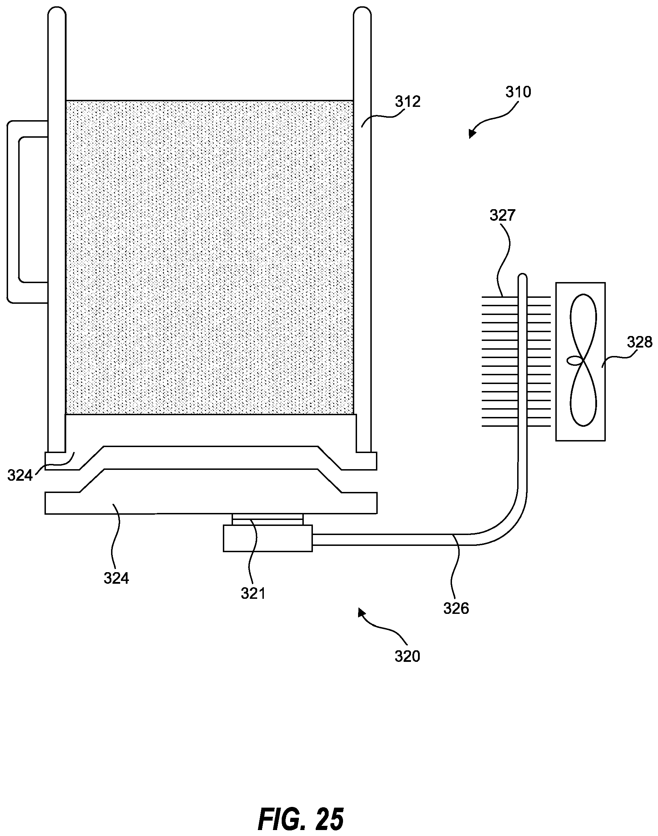

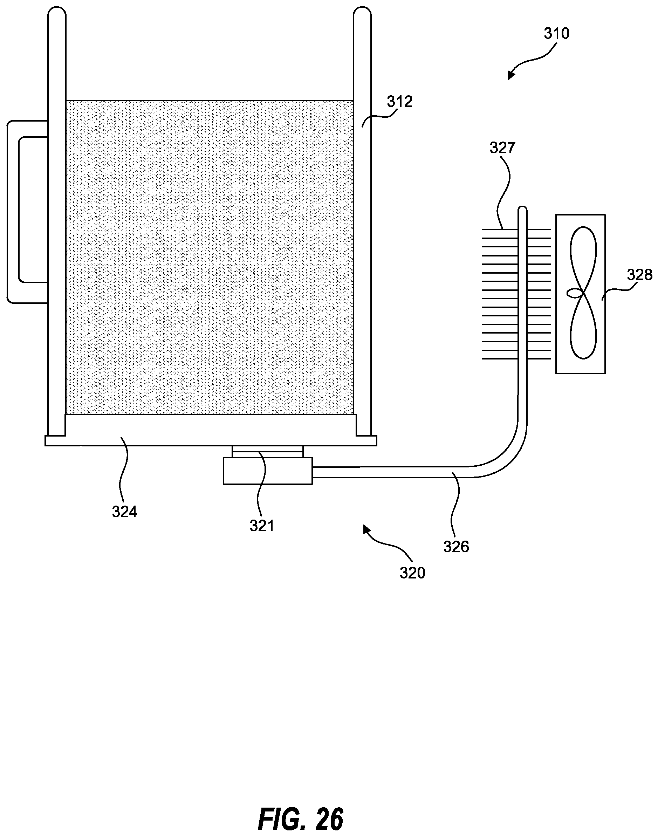

As noted above, in some embodiments, water reservoir 312 is removable. In some embodiments, a portion of cooling module 320 is a part of water reservoir 312 and therefore also removable from carbonated beverage maker 300. In some embodiments, as shown, for example, in FIG. 25, only a portion of cold plate 324 is removable with water reservoir 312, while the rest of cold plate 324, and the remainder of cooling module 320 is not removable from carbonated beverage maker 300. In some embodiments, as shown, for example, in FIG. 26, cold plate 324, thermoelectric cooler 321, heat pipe assembly 326, and heat exchanger fins 327 are all removable with water reservoir 312. In some embodiments, fan 328 is not removable from carbonated beverage maker 300 with water reservoir 312.

In some embodiments, as shown, for example, in FIG. 16, water is fed into carbonation system 330 (e.g., into carbonation chamber 332) from diluent and cooling system 310. In some embodiments, diluent and cooling system 310 further comprises water fill pump 340. In some embodiments, water fill pump 340 is configured to pump water from water reservoir 312 through a water fill valve 342 into carbonation system 330.

In some embodiments, carbonation system 330 comprises carbonation chamber 332 disposed within carbonated beverage maker 300 and operatively connected to carbonation source 350 and diluent and cooling system 310. In some embodiments, carbonation source 350 comprises a CO₂ tank or cylinder. However, other carbonation sources may be used, which are described in further detail below. In some embodiments, a pressure regulator 352 is attached to carbonation source 350. Pressure regulator 352 may keep carbonation source 350 at a particular pressure. In some embodiments, pressure regulator 352 keeps carbonation source 350 at a pressure of 3.5 bars. In some embodiments, the water and CO₂ gas enter carbonation chamber 332 simultaneously. In some embodiments, water enters carbonation chamber 332 before the CO₂ gas.

In some embodiments a supply line 358 runs from carbonation source 350 to carbonation chamber 332. Supply line 358 may include CO₂ supply solenoid valve 354. In some embodiments, CO₂ supply solenoid valve 354 is controlled by control unit 306. For example, at an appropriate time during the operation of carbonated beverage maker 300, control unit 306 may communicate with CO₂ supply solenoid valve 354, causing CO₂ supply solenoid valve 354 to open and allow flow of CO₂ to carbonation chamber 332 through supply line 358. After the desired amount of CO₂ has been used, control unit 306 communicates with CO₂ supply solenoid valve 354, causing CO₂ supply solenoid valve 354 to close. In some embodiments, supply line 358 may also include a pressure relief valve 356. Pressure relief valve 356 senses pressure within carbonation chamber 332 and supply line 358 and is configured to open when the pressure is too high. For example, if carbonation chamber 332 reaches a predetermined pressure, pressure relief valve 356 may open to lower the pressure. In some embodiments, the predetermined pressure is 4.5 bars.

In some embodiments, carbonated beverage maker 300 includes a solenoid vent valve 348, as shown, for example, in the schematic of FIG. 16. After carbonation of the water is completed, solenoid vent valve 348 may be used to release the pressure from carbonation chamber 332 through a venting process. In some embodiments, the venting process through solenoid vent valve 348 is a stepped process. The venting process may vary based on the level of carbonation and other properties of the beverage. In some embodiments, solenoid vent valve 348 is controlled by control unit 306.

In some embodiments, carbonation chamber 332 includes one or more sensors to detect an appropriate level of water within carbonation chamber 332. In some embodiments, water fill pump 340 operates and water fill valve 342 remains open until the sensor detects the appropriate level of water is within carbonation chamber 332. In some embodiments, as shown, for example, in FIG. 16, the sensor may be an optical sensor 382. In some embodiments, optical sensor 382 receives a signal from a light emitting diode 383 disposed on an opposite side of carbonation chamber 332. Thus, when water reaches the appropriate level, it interrupts the beam of light passing between light emitting diode 383 and optical sensor 382. In some embodiments, optical sensor 382 communicates with control unit 306 that carbonation chamber 332 is full and control unit 306 may then communicate with water fill valve 342 and water fill pump 340 to cause water fill valve 342 to close and to cause water fill pump 340 to stop pumping.

Other types of sensors may also be used. For example, in some embodiments, a pressure sensor may be used to detect the water level. A pressure sensor may operate by, after closing solenoid vent valve 348 to fix the volume of a headspace 346 in carbonation chamber 332, monitoring the pressure of headspace 346 as carbonation chamber 332 is filled with water. Once the pressure associated with the appropriate level of water has been reached, the pressure sensor may communicate with control unit 306 so that control unit 306 may close water fill valve 342 and stop water fill pump 340.

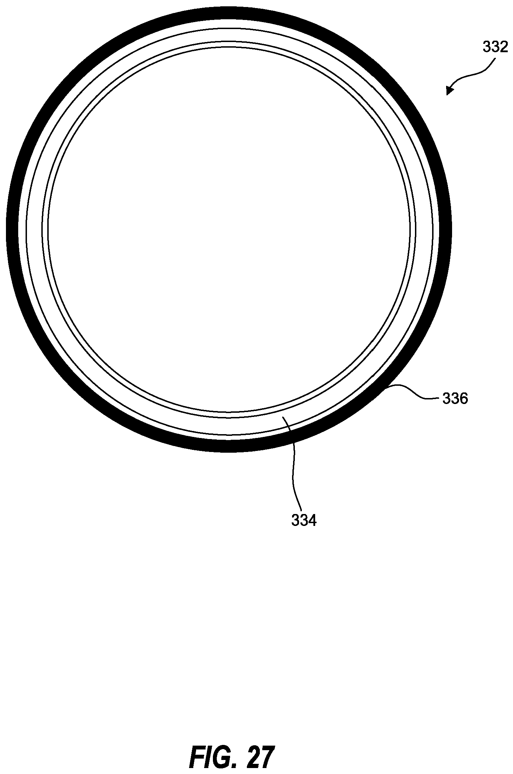

In some embodiments, carbonation chamber 332 is double walled, as shown, for example, in FIG. 27, with an outer wall 336 and an inner wall 334. In some embodiments, inner wall 334 contains water and CO₂ in carbonation chamber 332, thus maintaining the pressure of carbonation chamber 332. In some embodiments, outer wall 336 traps air between inner wall 334 and outer wall 336. Thus, outer wall 336 and inner wall 334 may operate to insulate carbonation chamber 332 and limit heat exchange between the water CO₂ within carbonation chamber 332 and the outside environment. This insulation assists in preparing a carbonated beverage that has a desirable drinking temperature. In some embodiments, carbonation chamber 332 may be pre-chilled. For example, water from water reservoir 312 may cycle through carbonation chamber 332 and back to water reservoir 312 to cool carbonation chamber 332.

In some embodiments, carbonation chamber 332 may have additional features. For example, in some embodiments, carbonation chambers may have additional monitoring sensors (see FIG. 16), such as, for example, a carbonation monitor thermistor 386 or a temperature sensor (not shown) for carbonation chamber 332. Such monitoring sensors may be used in some embodiments to check for the quality of carbonated beverage (e.g., carbonation level, temperature, etc.). In addition, in some embodiments, carbonation chamber 332 may include one or more light emitting diodes 384 disposed around carbonation chamber 332. In some embodiments, light emitting diodes 384 may be used to allow a user to better see the carbonation process in carbonation chamber 332 through viewing window 308.

In some embodiments, carbonation chamber 332 includes impeller 370. In some embodiments, impeller 370 is disposed at the bottom of carbonation chamber 332. In some embodiments, impeller 370 is magnetically coupled to and driven by an impeller motor 380, similar to the relationship between impeller 120 and impeller motor 130 described above.

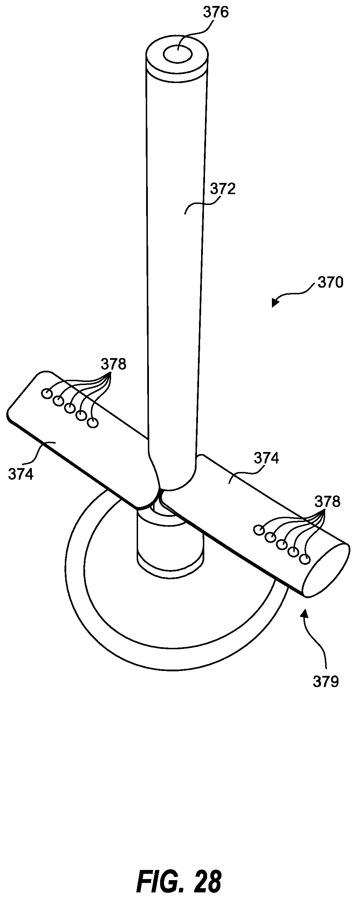

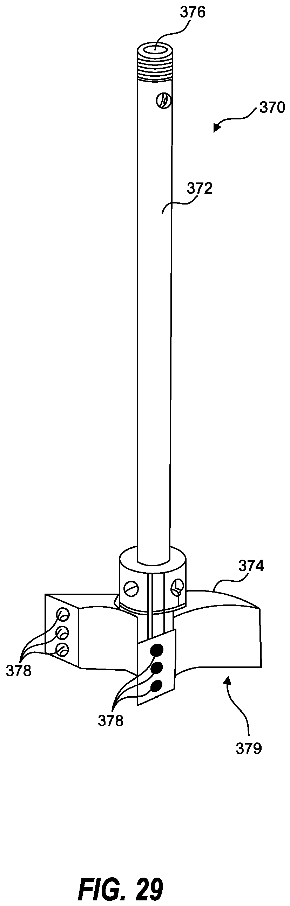

In some embodiments, impeller 370, as shown, for example, in FIGS. 28 and 29, includes a stem portion 372 and one or more blades 374. In some embodiments, impeller 370 has two blades (see FIG. 28). In some embodiments, impeller 370 has four blades (see FIG. 29). Impeller 370 may have a different number of blades. In some embodiments, stem portion 372 is hollow. In some embodiments, a conduit 376 extends through at least a portion of stem portion 372. In some embodiments, conduit 376 extends from a top portion of stem portion 372 to blades 374. In some embodiments, portions of blades 374 are also hollow. In some embodiments, blades 374 include one or more holes 378. Holes 378 may be fluidly connected to conduit 376.

In some embodiments, blades 374 are shaped aerodynamically. For example, blades 374 may be shaped such that when impeller 370 is rotating, blades 374 create a low pressure region 379 around blades 374. In some embodiments, impeller 370 draws pressurized CO₂ gas through conduit 376 and holes 378 into low pressure region 379. As CO₂ gas is drawn near the bottom of carbonation chamber 332 by low pressure region 379, the gas begins to carbonate the water (i.e., becomes entrained gas 371).

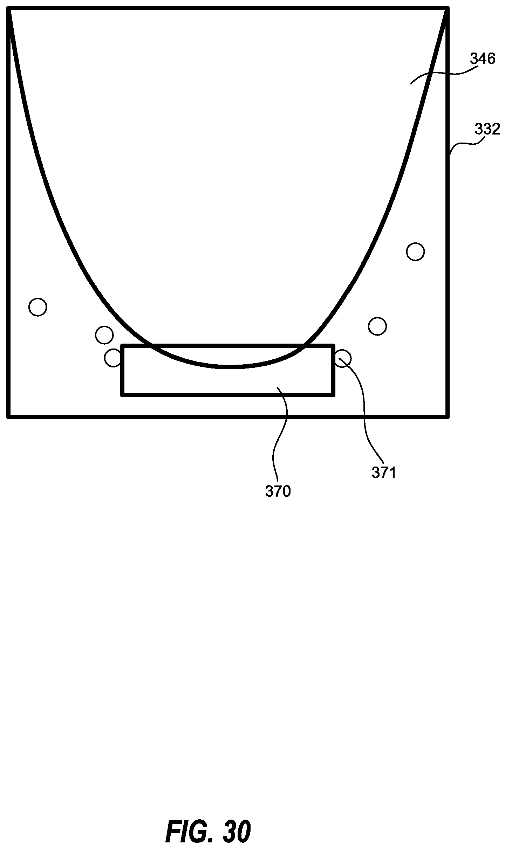

One benefit of impeller 370 having stem portion 372 and aerodynamic blades 374 creating low pressure region 379 is shown in FIGS. 29 and 30. FIG. 29 illustrates carbonation chamber 332 using impeller 370 not having stem portion 372. In this embodiment, while impeller 370 leads to entrained gas 371, headspace 346 is large and a vortex is formed, which leads to higher and inefficient consumption of CO₂ gas. In contrast, FIG. 30 illustrates carbonation chamber 332 using impeller 370 having stem portion 372. In this embodiment, impeller 370 more efficiently produces entrained gas 371 because headspace 346 is smaller, thus consuming less CO₂ gas. Thus, in some embodiments, forming a vortex is not desirable because it may lead to less efficient use of carbonation source 350. In some embodiments, carbonation chamber 332 includes fixed baffles (not shown) within carbonation chamber 332 to discourage water rotation and thereby reduce the likelihood of a vortex forming.

In some embodiments, carbonation system 330 includes an air pump 338, a check valve 339, and a dispense valve 344. In some embodiments, after carbonation chamber 332 has carbonated the water, air pump 338 operates to pump the carbonated water out of carbonation chamber 332 and into drinking cup 392, as shown, for example, in the schematic of FIG. 16. In some embodiments, check valve 339 allows air pumped from air pump 338 into supply line 358 and/or carbonation chamber 332, but does not allow air to escape from supply line 358 and/or carbonation chamber 332. In some embodiments, dispense valve 344 opens while air pump 338 is pumping to allow the carbonated water to exit carbonation chamber 332 and dispense into drinking cup 392. In some embodiments, the flow path from carbonation chamber 332 to drinking cup 392 is configured to minimize decarbonation of the carbonated water. For example, the material and finishes of components forming the flow path are selected to be as gentle as possible. In some embodiments, the flow path may be made of nylon pipe formed into a shape that minimizes directional changes, sharp corners, and cross-sectional area steps to minimize decarbonation.

As shown in FIG. 16, and described thus far, in some embodiments, carbonated water may be dispensed into drinking cup 392 without any flavoring or other additives. Thus, in some embodiments, flavor system 360 may be separate from other systems of carbonated beverage maker 300. In some embodiments, flavor system 360 dispenses flavoring in the form of concentrate, such as syrup, for example, at the same time that carbonated water is being dispensed into drinking cup 392. In some embodiments, flavor system 360 includes a flavor source 362, an air pump 366, a light emitting diode 368, and a micro switch 369.

In some embodiments, flavor source 362 may contain a powder, syrup, gel, liquid, beads, or other form of concentrate. In some embodiments, flavor source 362 comprises a pod. In some embodiments, flavor source 362 is an integral part of carbonated beverage maker 300. In some embodiments, flavor source 362 comprises a single-serving of flavor. In some embodiments, flavor source 362 contains sufficient flavoring for multiple servings. Housing 302 of carbonated beverage maker 300 may be configured to receive flavor source 362. In some embodiments, carbonated beverage maker 300 is configured to open flavor source 362. Variations of pods and other flavor sources, and how carbonated beverage makers may open them, are described in more detail below.

In some embodiments, carbonated beverage maker 300 is configured to deliver the contents of flavor source 362 into drinking cup 392, as shown, for example, in the schematic of FIG. 16. For example, carbonated beverage maker 300 may include an air pump 366. Air pump 366 may be operated by control unit 306 to pump the contents of flavor source 362 into drinking cup 392.

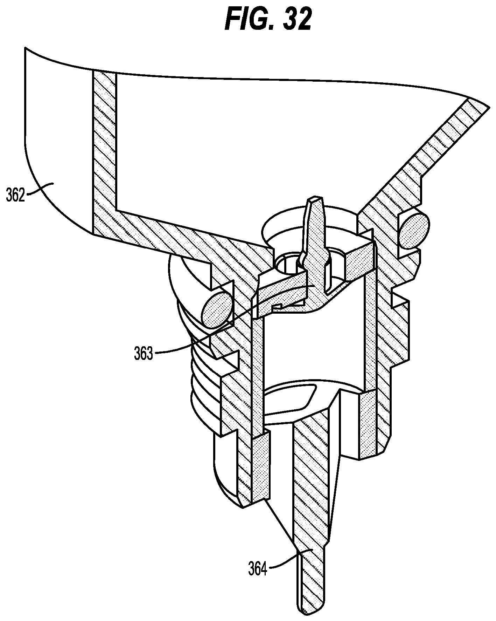

In some embodiments, as shown, for example, in FIG. 32, flavor source 362 includes an umbrella valve 363. In some embodiments, umbrella valve 363 prevents concentrate from leaking out of flavor source 362. In some embodiments, pressure from air pump 366 causes umbrella valve 363 to open to allow concentrate to flow from flavor source 362 into drinking cup 392. In some embodiments, flavor source 362 includes a flow conditioning element 364. In some embodiments, flow conditioning element 364 comprises a projection that extends from flavor source 362. Flow conditioning element 364 may cause the stream of flavor from flavor source 362 to be smooth as it dispenses into drinking cup 392. In some embodiments, flow conditioning element 364 is part of a pod. In some embodiments, flow conditioning element 364 is part of carbonated beverage maker 300 itself. In some embodiments, flavor system 360 dispenses concentrate from flavor source 362 directly into drinking cup 392, thus eliminating the need to flush carbonated beverage maker 300 when a different flavor is subsequently used.

In some embodiments, flavor system 360 includes a micro switch 369, which may detect the presence of flavor source 362. When flavor source 362 is detected, micro switch 369 closes to complete a circuit. If flavor source 362 is not detected, micro switch 369 remains open. An open circuit condition may prevent carbonated beverage maker 300 from operating.

In some embodiments, carbonated water from carbonation chamber 332 and concentrate from flavor source 362 are dispensed into drinking cup 392 to prepare carbonated beverage. In some embodiments, carbonated water and concentrate are dispensed simultaneously. In some embodiments, carbonated water and concentrate mix in drinking cup 392 after being dispensed.

In some embodiments, carbonated beverage maker 300 includes features that convey a feeling of a freshly made beverage to a user. For example, a user may feel that the carbonated beverage is more freshly made, and feel more involvement in the creation of the carbonated beverage, if the user can see at least a portion of the beverage creation process. Thus, in some embodiments, viewing window 308, as discussed above, is included in housing 302 to allow a user to see the carbonation process. In some embodiments, a light emitting diode 368 is disposed near drinking cup 392. Light emitting diode 368 may, for example, illuminate the mixing process within drinking cup 392. In some embodiments, light emitting diode 368 may illuminate other aspects of the dispensing area or other areas of carbonated beverage maker 300.

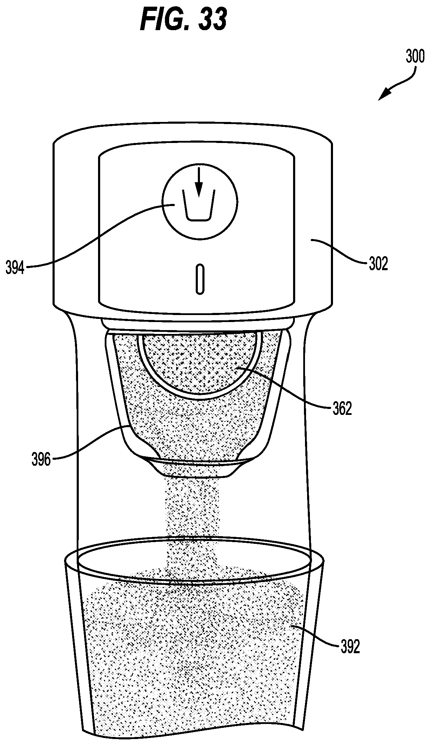

In some embodiments, carbonated beverage maker 300 provides other ways for a user to see aspects of the beverage creation process. In some embodiments, as shown, for example, in FIG. 33, carbonated beverage maker 300 includes a clear mixing nozzle 396. For example, clear mixing nozzle may be disposed on housing 302 just above the location of drinking cup 392. In some embodiments, flavor source 362 may be disposed within clear mixing nozzle 396. In some embodiments, flavor and carbonated water mix within clear mixing nozzle 396 before entering drinking cup 392. Thus, a user can see the mixing process through clear mixing nozzle 396. In some embodiments, carbonated beverage maker 300 includes a flush of clear mixing nozzle 396 as part of its dispensing process so that any residue of concentrate from flavor source 362 does not cross-contaminate the next drink that may include a different flavor.

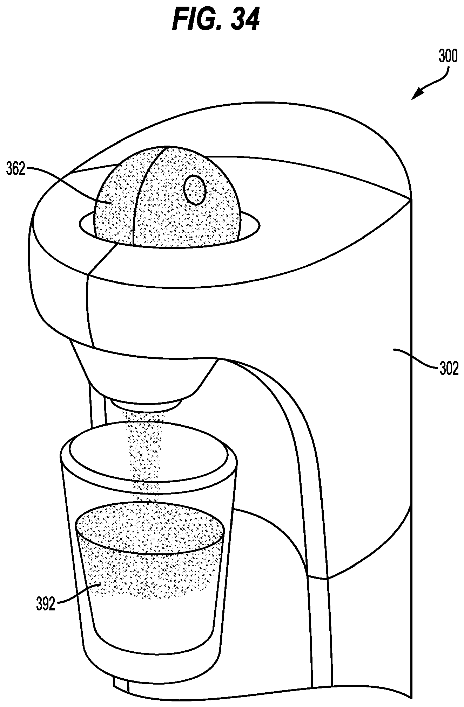

In some embodiments, as shown, for example, in FIG. 34, carbonated beverage maker 300 is configured to receive flavor source 362 as a pod that is visible to a user during the beverage creation process. For example, flavor source 362 may be a clear pod partially disposed in a top of housing 302. As concentrate from flavor source 362 is flushed out and mixed with carbonated water, the user may see the mixing process through the clear pod. In some embodiments, inserting flavor source 362 into housing 302 may automatically begin the process of creating the beverage.

In some embodiments, carbonated beverage maker 300 includes a user interface. For example, user interface may include touch screen 390. Features of the user interface of carbonated beverage maker 300 may be the same as or similar to those described for the user interface of carbonated beverage maker 100. In some embodiments, the user interface may be a button 394 (see FIG. 33) that allows a user to select a carbonation level and/or begin the beverage creation process. In some embodiments, carbonated beverage maker 300 may include a memory that stores recipes for producing particular beverages. For example, the recipe for low carbonation may be stored in memory such that when a user selects low carbonation on the user interface, control unit controls the functions of carbonated beverage maker 300 based on the recipe stored in the memory. In some embodiments, a recipe may be associated with flavor source 362 that is inserted into carbonated beverage maker 300. In some embodiments, carbonated beverage maker 300 is configured to identify flavor source 362 and use the corresponding recipe.

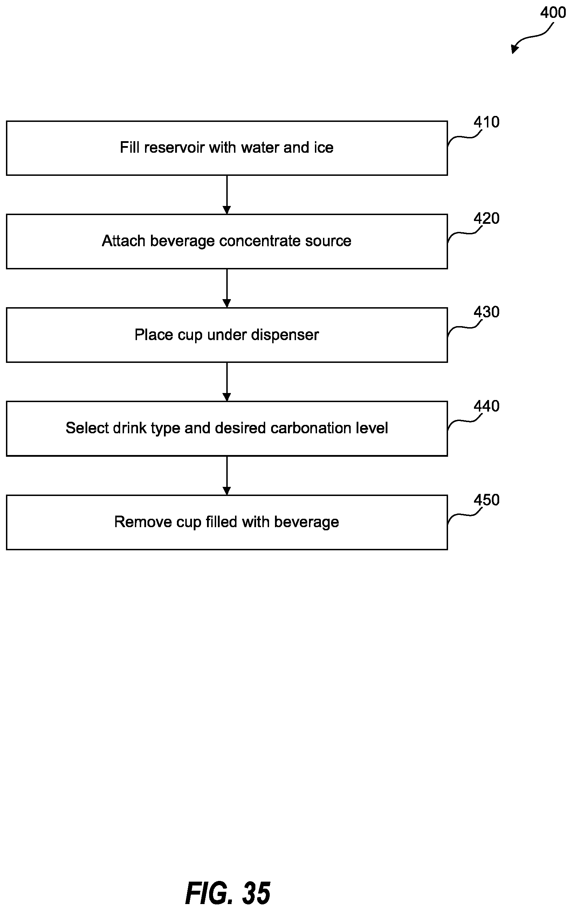

A method 400 of using carbonated beverage maker 300, as shown, for example, in FIG. 35, will now be described in more detail. At operation 410, water reservoir 312 is filled with water and ice. In some embodiments, a user removes water reservoir 312 from carbonated beverage maker 300 to fill it with water and ice. After water reservoir 312 is filled, the user may reattach water reservoir 312 to carbonated beverage maker 300. In some embodiments, a user fills water reservoir 312 as it remains attached to carbonated beverage maker 300. In some embodiments, before carbonated beverage maker 300 can operate, the water temperature in water reservoir 312 stabilizes. In some embodiments, the water temperature stabilizes in less than twenty minutes. In some embodiments, the water temperature stabilizes in less than ten minutes. In some embodiments, the water temperature stabilizes in less than five minutes.

At operation 420, concentrate may be added to carbonated beverage maker 300. In some embodiments, concentrate is added by attaching a beverage concentrate source (e.g., flavor source 362) to carbonated beverage maker 300. In some embodiments, carbonated beverage maker 300 includes a receptacle for directly containing concentrate. The concentrate may be in the form of powder, liquid, gel, syrup, or beads, for example. After flavor source 362 is attached to carbonated beverage maker 300, micro switch 369 will be in a closed position, thus allowing carbonated beverage maker 300 to operate.

At operation 430, a cup (e.g., drinking cup 392) is placed at carbonated beverage maker 300 where the carbonated beverage will dispense.

At operation 440, a drink type and/or desired carbonation level are selected. In some embodiments, a user may select the drink type and/or desired carbonation level via the user interface (e.g., touch screen 390 or button 394). In some embodiments, a user may also start the carbonated beverage maker 300 using the user interface. For example, the user may select the carbonation level and push start. In some embodiments, selecting the carbonation level may simultaneously start carbonated beverage maker 300.

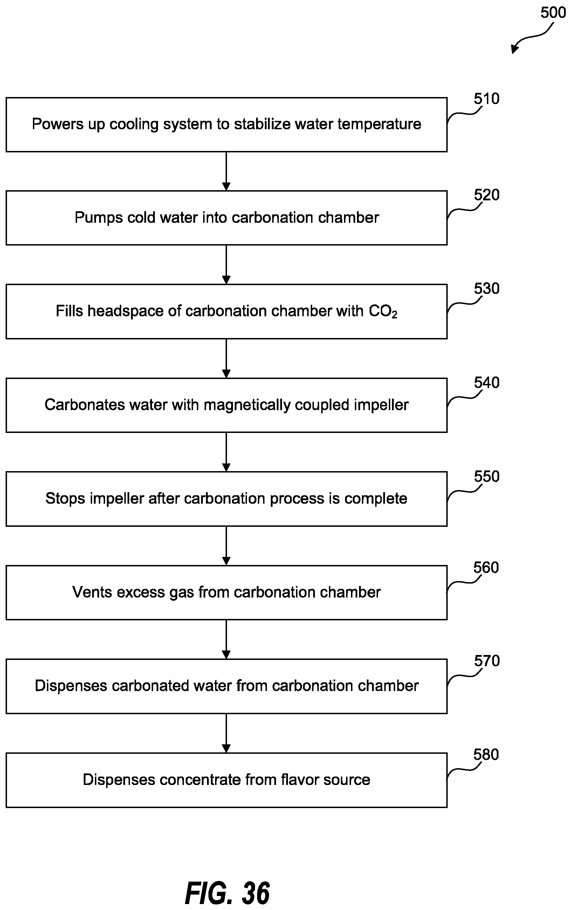

Once the drink type and/or desired carbonation level are selected and the process (as described, for example, in FIG. 36 in relation to process 500) started, a user will wait until the process of carbonated beverage maker 300 is complete. At operation 450, a user may remove the dispensing cup 392, which is now filled with carbonated beverage.

Although the operations of method 400 have been described in a particular order, the order is not essential to method 400. In addition, some of the described operations are not necessary. For example, in some embodiments, a user may desire to simply carbonate water, or some other diluent, in which case, there may not be a need to attach beverage concentrate source, as described for operation 420. Finally, there may be additional operations not described here that may constitute part of method 400.

In some embodiments, process 500 of carbonated beverage maker 300 operates in parallel with method 400 to create a carbonated beverage. At operation 510, carbonated beverage maker 300 powers up cooling system 310 to stabilize the water temperature in water reservoir 312. In some embodiments, operation 510 occurs after a user fills water reservoir 312 with water and ice (i.e., operation 410 of method 400). In some embodiments, operation 510 takes less than twenty minutes, less than ten minutes, or less than five minutes.

In some embodiments, the remainder of the operations of process 500 may occur after operation 440 and before operation 450 of method 400. At operation 520, carbonated beverage maker 300 pumps cold water into carbonation chamber 332. In some embodiments, water fill pump 340 operates to pump cold water into carbonation chamber 332. In some embodiments, water fill pump 340 pumps cold water into carbonation chamber 332 until level sensor 382 determines that the appropriate amount of water is in carbonation chamber 332.

At operation 530, carbonated beverage maker 300 fills headspace 346 of carbonation chamber 332 with CO₂ gas from carbonation source 350. In some embodiments, CO₂ supply solenoid valve 354 opens to release pressurized CO₂ gas from carbonation source 350 into carbonation chamber 332 to fill headspace 346. In some embodiments, operation 530 and operation 520 occur at least partially simultaneously.

At operation 540, carbonated beverage maker 300 carbonates water with impeller 370. In some embodiments, impeller 370 is magnetically coupled to impeller motor 380 to avoid compromising the pressure envelope of carbonation chamber 332. Impeller 370 may be activated at operation 540 so that as it rotates, it creates a low pressure region 379, which draws the pressurized CO₂ gas to the bottom of carbonation chamber 332 and entrains it into the water, thus producing carbonated water. In some embodiments, operation 540 and operation 530 occur at least partially simultaneously.

At operation 550, carbonated beverage maker 300 stops impeller 370 after the carbonation process is complete. In some embodiments, carbonated beverage maker 300 stops impeller 370 after a certain amount of time has passed. In some embodiments, carbonated beverage maker 300 stops impeller 370 after the pressure in carbonation chamber 332 has stabilized. In some embodiments, impeller 370 runs for less than one minute. In some embodiments, impeller 370 runs for less than forty-five seconds. In some embodiments, impeller 370 runs for less than thirty seconds. In some embodiments, the amount of time that impeller 370 runs depends on the selected carbonation level.

At operation 560, carbonated beverage maker 300 vents excess gas from carbonation chamber 332. In some embodiments, CO₂ supply solenoid valve 354 closes during operation 560, thus shutting off carbonation source 350. In some embodiments, solenoid vent valve 348 opens to vent excess gas from carbonation chamber 332. In some embodiments, the carbonated water settles as excess gas is vented.

At operation 570, carbonated beverage maker 300 dispenses carbonated water from carbonation chamber 332. In some embodiments, air pump 338 pumps carbonated water out of carbonation chamber 332 and dispenses it into drinking cup 392.

At operation 580, carbonated beverage maker 300 dispenses concentrate from flavor source 362. In some embodiments, air pump 366 pumps concentrate out of flavor source 362 and dispenses it into drinking cup 392. In some embodiments, air pump 366 pumps concentrate out of flavor source 362 simultaneously and synchronously with air pump 338 pumping carbonated water out of carbonation chamber 332. Thus, operation 580 and operation 570 may occur simultaneously.

Although the operations of process 500 have been described in a particular order, the order is not essential to process 500. In addition, some of the described operations are not necessary. Finally, there may be additional operations not described here that may constitute part of process 500. For example, in some embodiments, carbonated beverage maker 300 performs an operation to cool carbonation chamber 332. Specifically, carbonation chamber 332 can be filled with water from water reservoir 312 to cool carbonation chamber 332. This water can then be emptied from carbonation chamber 332 back into water reservoir 312. This operation allows the carbonation cycle (i.e., operation 540) to occur in a pre-chilled vessel, for example, to reach desired carbonation levels.

As noted above, flavor sources 160 and 362 may comprise a pod. A variety of configurations of pods may be used as flavor source 160, flavor source 362, and the flavor source for other embodiments of carbonated beverage makers. In some embodiments, a pod may be single-chambered. In some embodiments, a pod may have two chambers. For example, a pod may include a chamber for concentrate and another chamber for a carbonation source. In some embodiments, a pod may include structure to assist in opening the pod for dispensing concentrate into the systems of a carbonated beverage maker. For example, a pod may include a piercer configured to puncture a portion of the pod. Several variations of pods are discussed below. However, these variations only provide examples and other pods or flavor sources may also be used with carbonated beverage makers in some embodiments. Furthermore, characteristics of the embodiments discussed below may be utilized in other embodiments discussed below, even if not expressly described with respect to a particular embodiment.

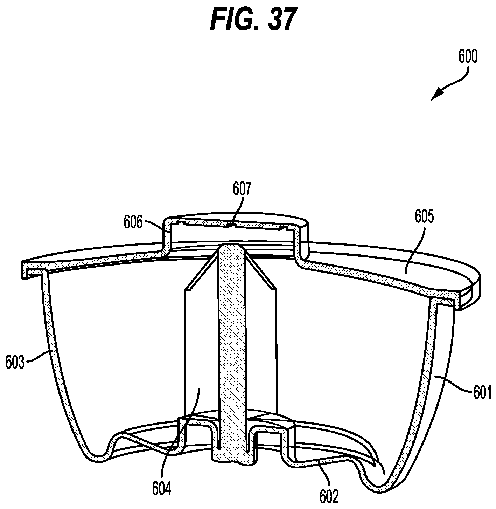

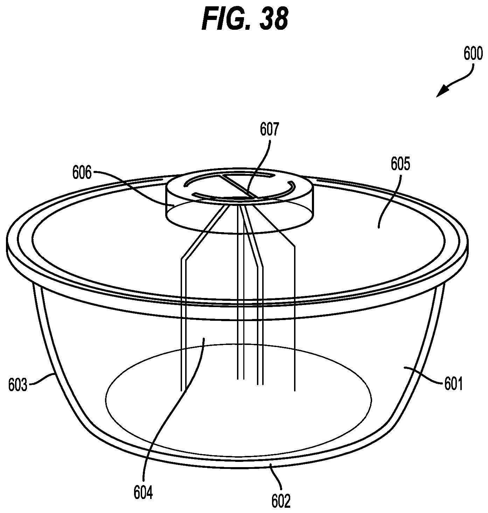

In some embodiments, a pod 600, as shown, for example, in FIGS. 37-41B, includes a container 601 and a lid 605. In some embodiments, container 601 includes a base 602 and a side 603. In some embodiments, container 601 and lid 605 are circular. In some embodiments, pod 600 may be made of a material that provides a long shelf life for concentrate within pod 600. In some embodiments, pod 600 may be made of a material that is recyclable. For example, pod 600 may be made of a recyclable plastic. For example, pod 600, including container 601 and lid 605, may be made of polyethylene terephthalate (PET). In some embodiments, container 601 and lid 605 are welded together.

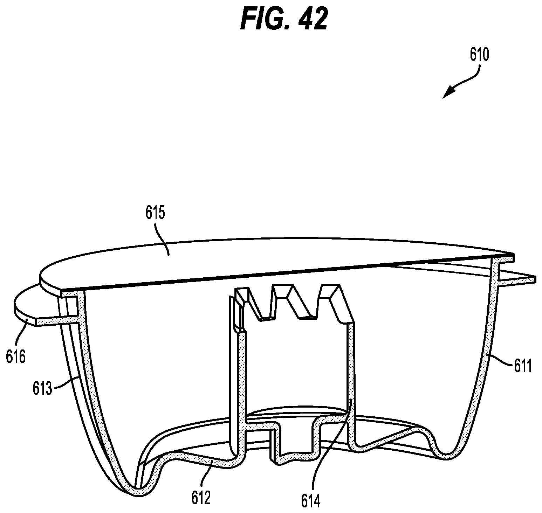

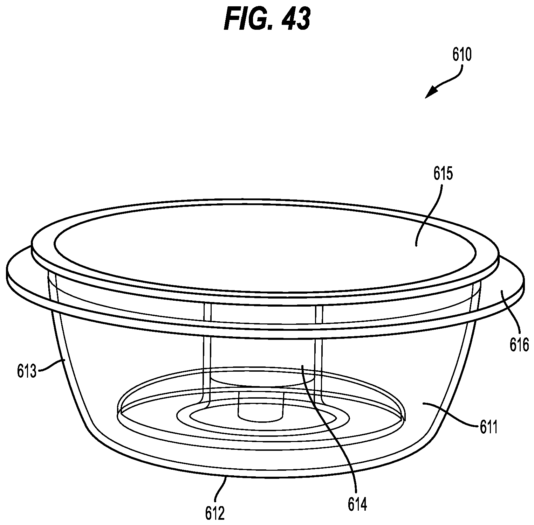

In some embodiments, a piercer 604 is disposed within container 601 extending from base 602. In some embodiments, piercer 604 extends from base 602 and ends in a tip near lid 605 that is sharp enough to pierce lid 605. In some embodiments, the sharp tip of piercer 604 is disposed on a central axis of piercer 604. The sharp tip may alternatively be disposed on an edge of piercer 604. In some embodiments, there may be multiple sharp tips along the edge of piercer 604 (see FIGS. 42-44B). In some embodiments, piercer 604 is made of the same material as container 601. For example, piercer 604 may be made of PET. In some embodiments, container 601, lid 605, and piercer 604 are injection molded.

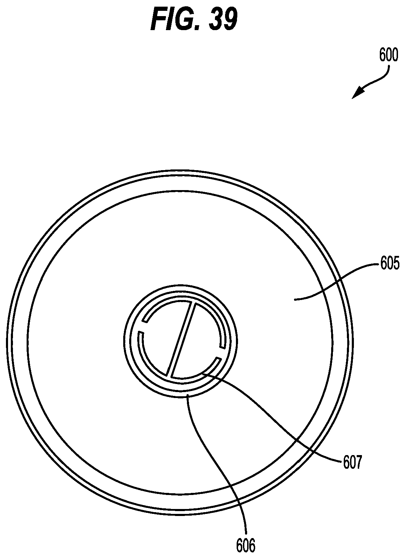

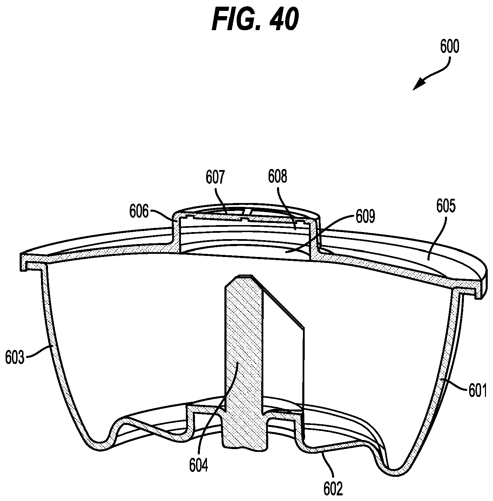

In some embodiments, base 602 is configured to allow extension of piercer 604. For example, base 602 may be an uneven surface, thus forming a rolling diaphragm. In some embodiments, base 602 is thin in some portions to add flexibility to base 602. In some embodiments, when piercer 604 is extended, piercer 604 may pierce through lid 605. In some embodiments, lid 605 includes a projection 606 in its center. Projection 606 may help prevent contamination of a dispensing location of carbonated beverage makers. In some embodiments, projection 606 includes a thin section 607. Thin section 607 may enable a controlled breakthrough when piercer 604 pierces lid 605. In some embodiments, as shown, for example, in FIG. 39, thin section 607 extends across the middle of projection 606 and substantially around the circumference of projection 606. Thus, when piercer 604 contacts lid 605 in the middle of projection 606, lid 605 is designed to break along thin section 607, allowing concentrate to flow out of pod 600. In some embodiments, pod 600 further includes a powder chamber 608 disposed within projection 606, as shown, for example, in FIG. 40. In some embodiments, a film 609 separates powder chamber 608 from the rest of pod 600. In some embodiments, piercer 604 pierces through film 609 and lid 605.

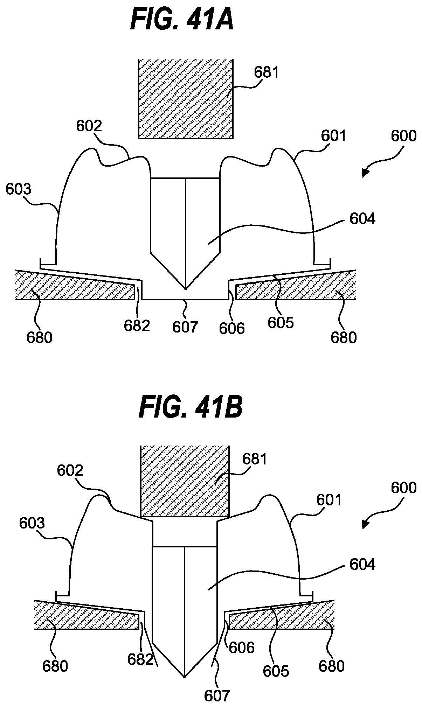

In some embodiments, portions of a carbonated beverage maker may contribute to opening of the pod (e.g., pod 600). For example, a carbonated beverage maker may include a pod support 680. In some embodiments, pod support 680 may define an aperture 682. As shown, for example, in FIGS. 41A and 41B, pod 600 may rest on pod support 680. In some embodiments, projection 606 is sized to fit through aperture 682. Thus, when lid 605 is pierced, the concentrate within pod 600 will not contaminate the dispense location of the carbonated beverage maker. In some embodiments, a push rod 681 is disposed above base 602. Push rod 681 may extend, as shown, for example, in FIG. 41B, to push base 602, which in turn extends piercer 604 to pierce lid 605. In some embodiments, push rod 681 is actuated by a manual operation, such as inserting pod 600 or closing a portion of a carbonated beverage maker around pod 600. In some embodiments, push rod 681 is actuated by a solenoid when a user interacts with a user interface of a carbonated beverage maker, such as pressing a start button. After lid 605 is pierced, concentrate from pod 600 is delivered by gravity into, for example, a drinking cup or other chamber.

In some embodiments, a pod 610, as shown, for example, in FIGS. 42-44B, includes a container 611 and a film 615. In some embodiments, container 611 includes a base 612 and a side 613. In some embodiments, container 611 and film 615 are circular. In some embodiments, pod 610 may be made of a material that is recyclable. For example, pod 610 may be made of a recyclable plastic. For example, pod 610, including container 611 and film 615, may be made of PET. Film 615 may be a thin layer of PET. In some embodiments, film 615 may be easier to pierce and cheaper than lid 605 of pod 600. But film 615 may cause pod 610 to have a lower shelf life than pod 600. In some embodiments, film 615 is welded to container 611.

In some embodiments, a piercer 614 is disposed within container 611 extending from base 612. In some embodiments, piercer 614 extends from base 612 and ends in multiple tips near film 615 that are sharp enough to pierce film 615. In some embodiments, the multiple sharp tips of piercer 614 are disposed around the circumference of piercer 614. In some embodiments, piercer 614 is made of the same material as container 611. For example, piercer 614 may be made of PET. In some embodiments, container 601 and piercer 604 are injection molded. For example, container 601 and piercer 604 may be injection molded as a single part.

In some embodiments, base 612 is configured to allow extension of piercer 614. For example, base 612 may be an uneven surface, thus forming a rolling diaphragm. In some embodiments, base 612 is thin in some portions to add flexibility to base 612. In some embodiments, when piercer 614 is extended, piercer 614 may pierce through film 615. In some embodiments, container 611 includes a flange 616 disposed on side 613. In some embodiments, flange 616 is disposed near film 615. Flange 616 may completely surround pod 610.

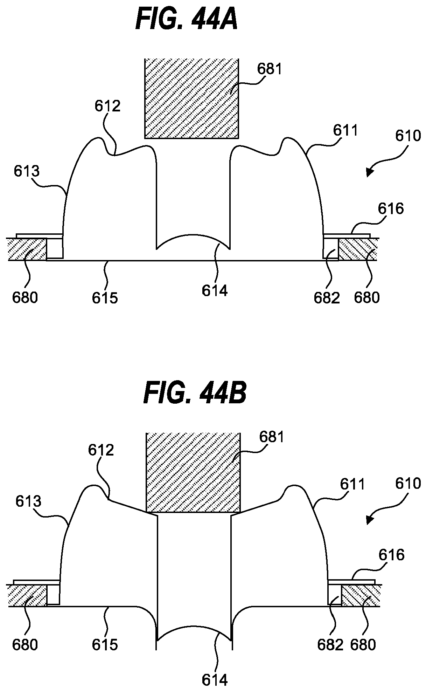

In some embodiments, flange 616 interacts with pod support 680 in carbonated beverage makers. In some embodiments, pod support 680 may define aperture 682. As shown, for example, in FIGS. 44A and 44B, pod 610 may rest on pod support 680. In some embodiments, flange 616 rests on pod support 680. Thus, in some embodiments, film 615 is sized to fit through aperture 682. Thus, when film 615 is pierced, the concentrate within pod 610 will not contaminate the dispense location of the carbonated beverage maker. In some embodiments, a push rod 681 is disposed above base 612. Push rod 681 may extend, as shown, for example, in FIG. 44B, to push base 612, which in turn extends piercer 614 to pierce film 615. In some embodiments, push rod 681 is actuated by a manual operation, such as inserting pod 610 or closing a portion of a carbonated beverage maker around pod 610. In some embodiments, push rod 681 is actuated by a solenoid when a user interacts with a user interface of a carbonated beverage maker, such as pressing a start button. After film 615 is pierced, concentrate from pod 610 is delivered by gravity into, for example, a drinking cup or other chamber.

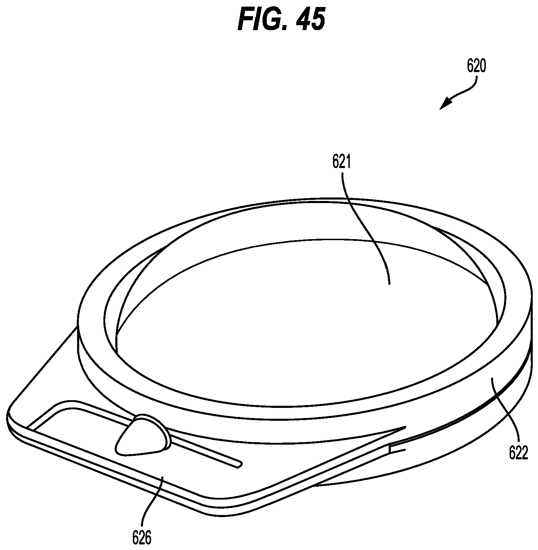

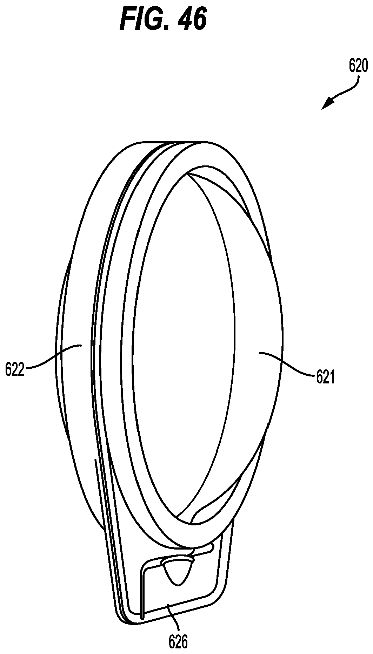

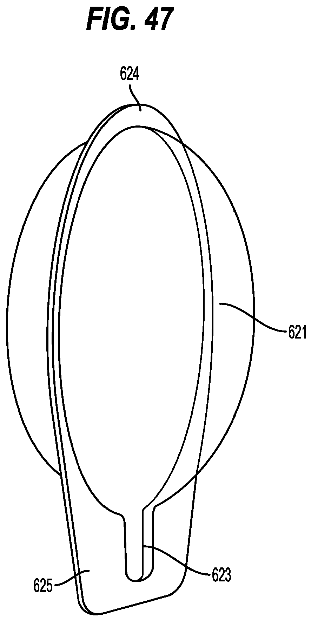

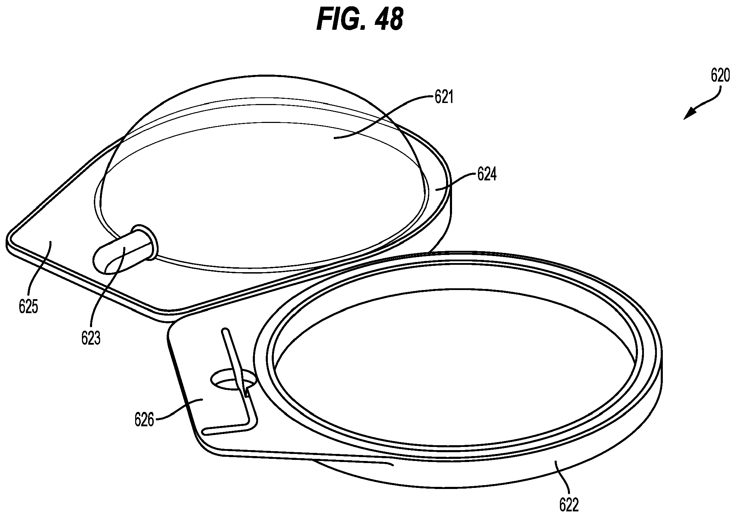

In some embodiments, a pod 620, as shown, for example, in FIGS. 45-49B, includes a pouch 621 and a frame 622. In some embodiments, pouch 621, as shown, for example, in FIG. 47, is semi rigid. For example, pouch 621 may be made of two thin PET shells welded together. In some embodiments, the two thin PET shells are vacuum formed. In some embodiments, pouch 621 may be made as one part in a blow-fill-seal process. In some embodiments, pouch 621 includes a nozzle 623 for filling pouch 621 with concentrate. In some embodiments, nozzle 621 may also operate as the fluid outlet to dispense concentrate from within pouch 621. In some embodiments, nozzle 621 is heat sealed.

In some embodiments, pouch 621 includes a peripheral edge 624. In some embodiments, peripheral edge 624 is where the two thin PET shells may be welded together. In some embodiments, pouch 621 includes a tip 625. Tip 625 may be a wider portion of peripheral edge 624. In some embodiments, tip 625 is disposed adjacent to nozzle 623. In some embodiments, tip 625 is configured to detach from pouch 621, thus opening nozzle 623 for dispensing of concentrate within pouch 621.

In some embodiments, frame 622 surrounds peripheral edge 624 and other portions of pouch 621. In some embodiments, frame 622 is rigid. In some embodiments, frame 622 is made of a rigid plastic. Frame 622 may include a break-off portion 626. In some embodiments, break-off portion 626 is disposed at tip 625 and nozzle 623. In some embodiments, break-off portion 626 is configured to detach from the rest of frame 622, thus opening nozzle 623 by breaking off tip 625 from pouch 621. For example, break-off portion may be perforated or be otherwise partially delineated from the rest of frame 622 with a slot.

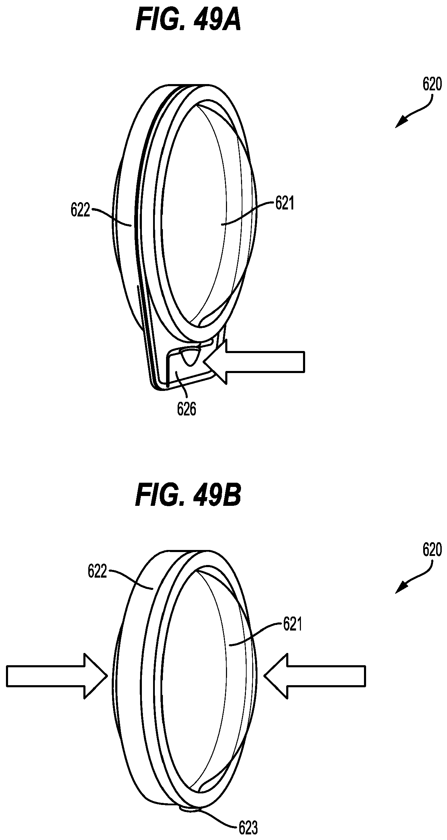

In some embodiments, a carbonated beverage maker may operate to open pod 620. In some embodiments, as shown, for example, in FIG. 49A, carbonated beverage makers may snap break-off portion 626 off of frame 622. This may be done, for example, with a push rod. After break-off portion 626 has been removed, concentrate from within pod 620 may dispense. In some embodiments, concentrate dispenses based on gravity. In some embodiment, a carbonated beverage maker may assist in dispensing concentrate from pod 620, as shown, for example, in FIG. 49B. For example, carbonated beverage makers may use air pressure to squeeze concentrate out of pod 620, such as with air pump 162 or air pump 166. Alternatively, carbonated beverage makers may use mechanical force to squeeze concentrate out of pod 620, such as with a push rod on one or both sides of pod 620.

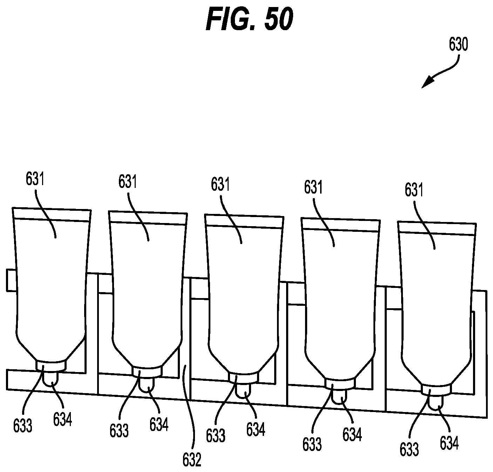

In some embodiments, a pod 630, as shown, for example, in FIG. 50, includes a plurality of tubes 631. In some embodiments, pod 630 includes at least three tubes 631. In some embodiments, pod 630 includes at least five tubes 631. In some embodiments, each tube 631 may contain an amount of concentrate equal to a single serving. In some embodiments, tubes 631 may be connected to each other via links 632. In some embodiments, each tube 631 includes a nozzle 633. Links 632 may have a break-off portion 634. In some embodiments, break-off portion 634 is disposed at nozzle 633. Thus, when break-off portion 634 is snapped away from tube 631, nozzle 633 is opened for dispensing of concentrate from within tube 631. In some embodiments, links 632 hold break-off portion 634 after it is snapped off to prevent break-off portion from falling into a drink with the concentrate. In some embodiments, pod 630 is molded through a blow-fill-seal process.

In some embodiments, a carbonated beverage maker may operate to open each tube 631 of pod 630. In some embodiments, carbonated beverage makers may snap break-off portion 634 off of tube 631. This may be done, for example, with a push rod or a clamping and pulling mechanism. After break-off portion 634 has been removed, concentrate from within pod 630 may dispense. In some embodiments, concentrate dispenses based on gravity. In some embodiment, a carbonated beverage maker may assist in dispensing concentrate from pod 630. For example, carbonated beverage makers may use air pressure to squeeze concentrate out of pod 630, such as with air pump 162 or air pump 166. Alternatively, carbonated beverage makers may use mechanical force to squeeze concentrate out of pod 630, such as with a push rod on one or both sides of pod 630. In some embodiments, a user may separate one tube 631 from the other tubes 631 for insertion into a carbonated beverage maker. In some embodiments, a user may insert an entire pod 630 into a carbonated beverage maker, which may automatically cycle through each tube 631 in preparing beverages. When all tubes 631 have been consumed, a carbonated beverage maker may alert a user to insert another pod 630.

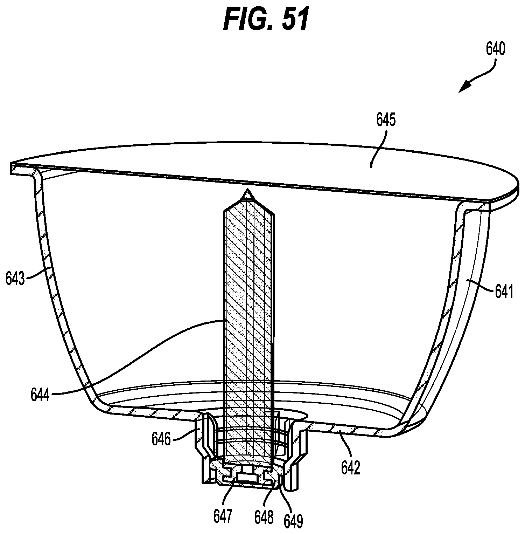

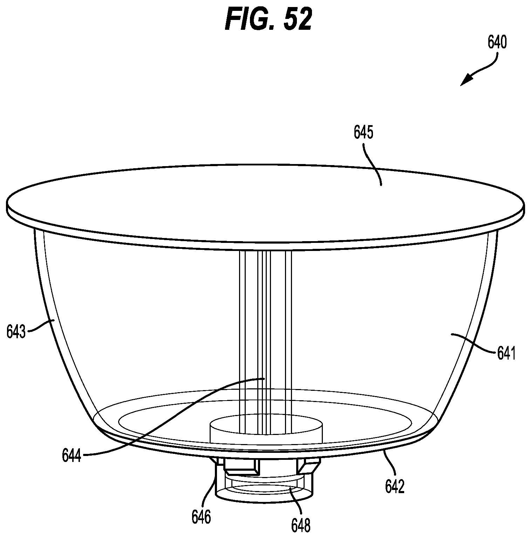

In some embodiments, a pod 640, as shown, for example, in FIGS. 51-53B, includes a container 641 and a film 645. In some embodiments, container 641 includes a base 642 and a side 643. In some embodiments, container 641 and film 645 are circular. In some embodiments, pod 640 may be made of a material that is recyclable. For example, pod 640 may be primarily made of a recyclable plastic. For example, pod 640, including container 641 and film 645, may be primarily made of PET. Film 645 may be a thin layer of PET. In some embodiments, film 645 may be easier to pierce and cheaper than lid 605 of pod 600. But film 645 may cause pod 640 to have a lower shelf life than pod 600. In some embodiments, film 645 is welded to container 641.

In some embodiments, a piercer 644 is disposed within container 641 extending from a projection 646 in base 642. For example, piercer 644 may be disposed within projection 646 starting lower than base 642. In some embodiments, piercer 644 extends from projection 646 in base 642 and ends in a tip near film 645 that is sharp enough to pierce film 645. In some embodiments, the sharp tip of piercer 644 is disposed on a central axis of piercer 644. The sharp tip may alternatively be disposed on an edge of piercer 644. In some embodiments, there may be multiple sharp tips along the edge of piercer 644 (see FIGS. 42-44B). In some embodiments, piercer 644 is made of the same material as container 641. For example, piercer 644 may be made of PET. In some embodiments, container 641 and piercer 644 are injection molded.

In some embodiments, projection 646 contains a portion of piercer 644 (as noted above), a metal piece 647, and a seal 648. In some embodiments, metal piece 647 is part of piercer 644. In some embodiments, metal piece 647 is magnetic. For example, metal piece 647 may be a ferrite metal. In some embodiments, the magnetic properties of metal piece 647 may cause piercer 644 to move upwards and pierce film 645. In some embodiments, seal 648 seals pod 640. For example, seal 648 may seal an outlet 649 at the bottom of projection 646. In some embodiments, seal 648 surrounds metal piece 647. In some embodiments, seal 648 is part of piercer 644. In some embodiments, seal 648, metal piece 647, and piercer 644 are fixed relative to each other and may move together relative to container 641. In some embodiments, seal 648 is rubber.

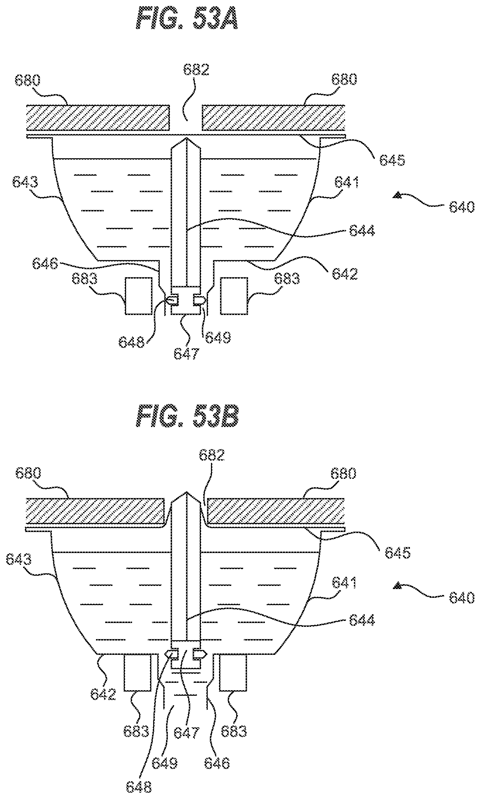

In some embodiments, pod 640 is disposed below a portion of pod support 680 in carbonated beverage makers, as shown, for example, in FIGS. 53A and 53B. In some embodiments, pod support 680 may define aperture 682. In some embodiments, aperture 682 aligns with piercer 644. In some embodiments, aperture 682 assists in regulating the cutting pattern of film 645. In some embodiments, carbonated beverage makers may include a magnet 683. In some embodiments, magnet 683 comprises a magnet ring. Magnet 683 may surround projection 646, as shown, for example, in FIGS. 53A and 53B. In some embodiments, magnet ring 683 drives metal piece 647 upwards, thus driving piercer 644 upwards to pierce film 645 and removing seal 648 from outlet 649, as shown, for example, in FIG. 53B. After film 645 is pierced and outlet 649 is unsealed, concentrate from pod 640 is delivered by air pressure (e.g., from an air pump) through the cut film 645 to dispense through outlet 649 into, for example, a drinking cup or other chamber.

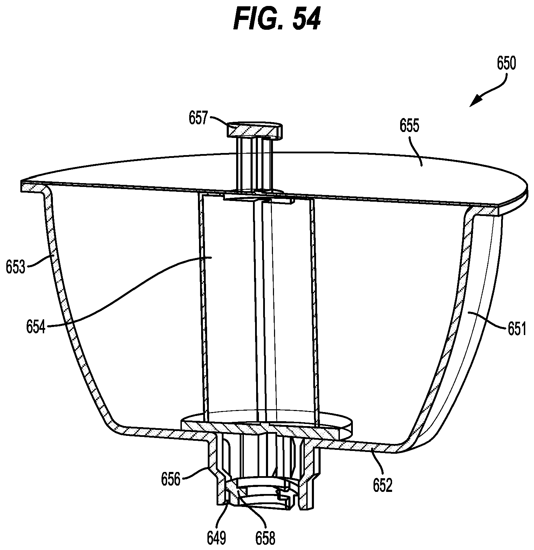

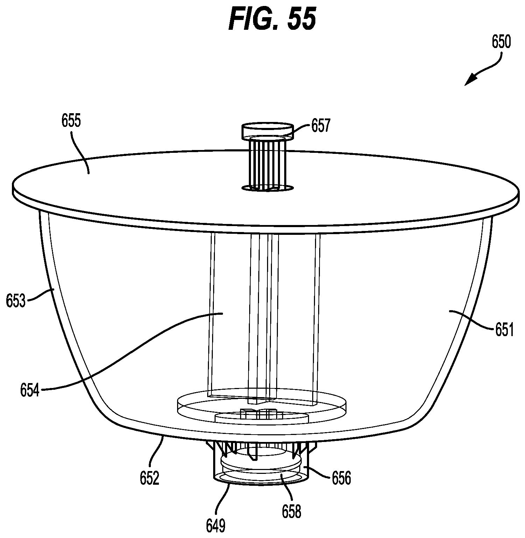

In some embodiments, a pod 650, as shown, for example, in FIGS. 54-58B, includes a container 651 and a film 655. In some embodiments, container 651 includes a base 652 and a side 653. In some embodiments, container 651 and film 655 are circular. In some embodiments, pod 650 may be made of a material that is recyclable. For example, pod 650 may be primarily made of a recyclable plastic. For example, pod 650, including container 651 and film 655, may be primarily made of PET. Film 655 may be a thin layer of PET. In some embodiments, film 655 may be easier to pierce and cheaper than lid 605 of pod 600. But film 655 may cause pod 650 to have a lower shelf life than pod 600. In some embodiments, film 655 is welded to container 651.

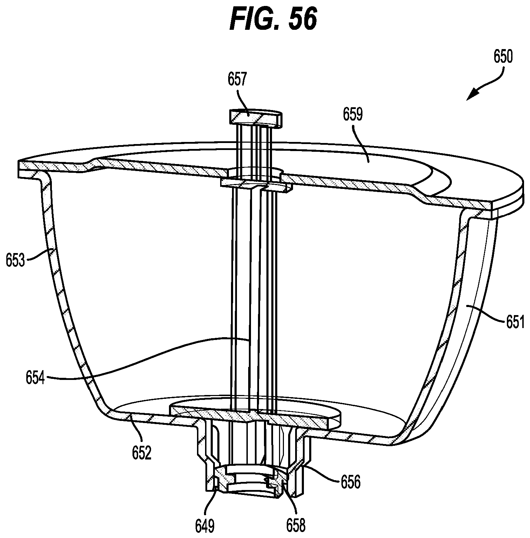

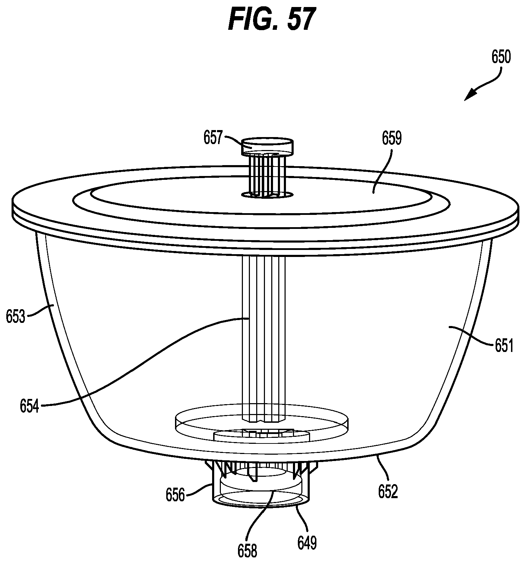

As an alternative to film 655, pod 650 may have a lid 659, as shown, for example, in FIGS. 56 and 57. Lid 659 may be welded to container 651. In some embodiments, lid 659 may be made of PET. In some embodiments, lid 659 is injection molded. In some embodiments, lid 659 may include weak points to aid in piercing lid 659.While the remainder of the description discuss film 655, the same principles may be applied when pod 650 utilizes lid 659.

In some embodiments, a piercer 654 is disposed within container 651 extending from a projection 656 in base 652. For example, piercer 654 may be disposed within projection 656 starting lower than base 652. In some embodiments, piercer 654 extends from projection 656 in base 652 to film 655. In some embodiments, piercer 654 is welded to film 655. In some embodiments, piercer 654 includes sharp blades to pierce film 655. In some embodiments, piercer 654 is made of the same material as container 651. For example, piercer 654 may be made of PET. In some embodiments, container 651 and piercer 654 are injection molded.

In some embodiments, pod 650 includes a pull feature 657 disposed on an outside of film 655. In some embodiments, pull feature 657 is operatively connected to piercer 654. For example, pull feature 657 may be a part of piercer 654. In some embodiments, pull feature 657 comprises a projection that rises above film 655. Pull feature 657 may be configured such that a portion of a carbonated beverage maker can secure and pull upwards on pull feature 657 to cause the blades of piercer 654 to cut film 655.

In some embodiments, projection 646 contains a portion of piercer 654 (as noted above) and a seal 658. In some embodiments, seal 658 seals pod 650. For example, seal 658 may seal an outlet 649 at the bottom of projection 656. In some embodiments, seal 658 is part of piercer 654. In some embodiments, seal 658 and piercer 654 are fixed relative to each other and may move together relative to container 651. In some embodiments, seal 658 is rubber.

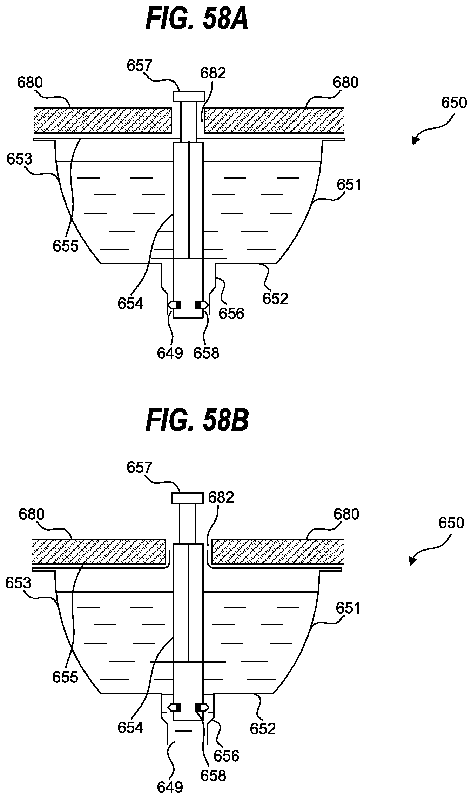

In some embodiments, pod 650 is disposed below a portion of pod support 680 in carbonated beverage makers, as shown, for example, in FIGS. 58A and 58B. In some embodiments, pod support 680 may define aperture 682. In some embodiments, aperture 682 aligns with piercer 644. In some embodiments, pull feature 657 extends through aperture 682, as shown, for example, in FIG. 58A. In some embodiments, aperture 682 assists in regulating the cutting pattern of film 655. In some embodiments, carbonated beverage makers may include a mechanism, such as a movable clamp, to secure and pull upwards on pull feature 657, thus pulling piercer 654 upwards to pierce film 655 and remove seal 658 from outlet 649, as shown, for example, in FIG. 58B. After film 655 is pierced and outlet 649 is unsealed, concentrate from pod 650 is delivered by air pressure (e.g., from an air pump) through the cut film 655 to dispense through outlet 649 into, for example, a drinking cup or other chamber.

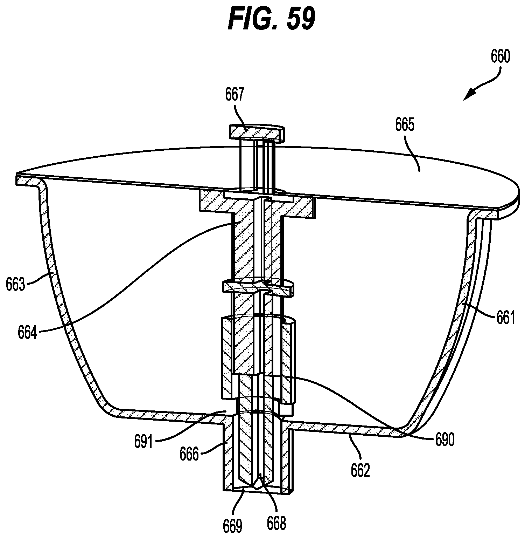

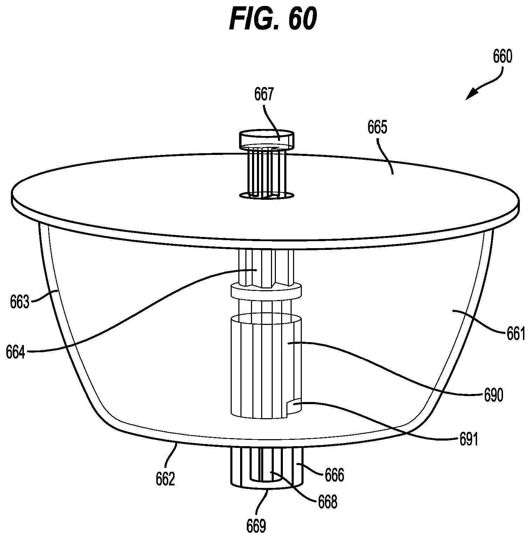

In some embodiments, a pod 660, as shown, for example, in FIGS. 59-61C, includes a container 661 and a first film 665. In some embodiments, container 661 includes a base 662 and a side 663. In some embodiments, container 661 and first film 665 are circular. In some embodiments, pod 660 may be made of a material that is recyclable. For example, pod 660 may be primarily made of a recyclable plastic. For example, pod 660, including container 661 and first film 665, may be primarily made of PET. First film 665 may be a thin layer of PET. In some embodiments, first film 665 may be easier to pierce and cheaper than lid 605 of pod 600. But first film 665 may cause pod 660 to have a lower shelf life than pod 600. In some embodiments, first film 665 is welded to container 661.

In some embodiments, a first piercer 664 is disposed within container 661 extending from a projection 666 in base 662. For example, first piercer 664 may be disposed within projection 666 lower than base 662. In some embodiments, first piercer 664 extends from projection 666 in base 662 to first film 665. In some embodiments, first piercer 664 is welded to first film 665. In some embodiments, first piercer 664 includes sharp blades to pierce first film 665. In some embodiments, first piercer 664 is made of the same material as container 661. For example, first piercer 664 may be made of PET. In some embodiments, container 661 and first piercer 664 are injection molded.

In some embodiments, pod 660 includes a pull feature 667 disposed on an outside of first film 665. In some embodiments, pull feature 667 is operatively connected to first piercer 664. For example, pull feature 667 may be a part of first piercer 664. In some embodiments, pull feature 667 comprises a projection that rises above first film 665. Pull feature 667 may be configured such that a portion of a carbonated beverage maker can secure and pull upwards on pull feature 667 to cause the blades of first piercer 664 to cut first film 665.

In some embodiments, projection 666 includes a second film 669 disposed at its bottom surface. In some embodiments, second film 669 is made of PET. In some embodiments, second film 669 is a thin layer of PET. In some embodiments, second film 669 is welded to projection 666. In some embodiments, projection 666 contains a portion of first piercer 664 (as noted above). In some embodiments, the portion of first piercer 664 in projection 666 includes a second piercer 668. In some embodiments, second piercer 668 comprises a sharp tip configured to pierce second film 669. In some embodiments, the sharp tip of second piercer 668 is located on a central axis of second piercer 668. In some embodiments, second piercer 668 is part of first piercer 664. In some embodiments, second piercer 668 and first piercer 664 are fixed relative to each other and may move together relative to container 661.

In some embodiments, pod 660 includes a casing 690 disposed within container 661. In some embodiments, casing 690 surrounds a portion of first piercer 664 and second piercer 668. In some embodiments, casing 690 is fixed relative to container 661. In some embodiments, casing 690 includes holes 691 disposed at base 662. In some embodiments, holes 691 allow concentrate to flow out of pod 660 when pod 660 is opened.

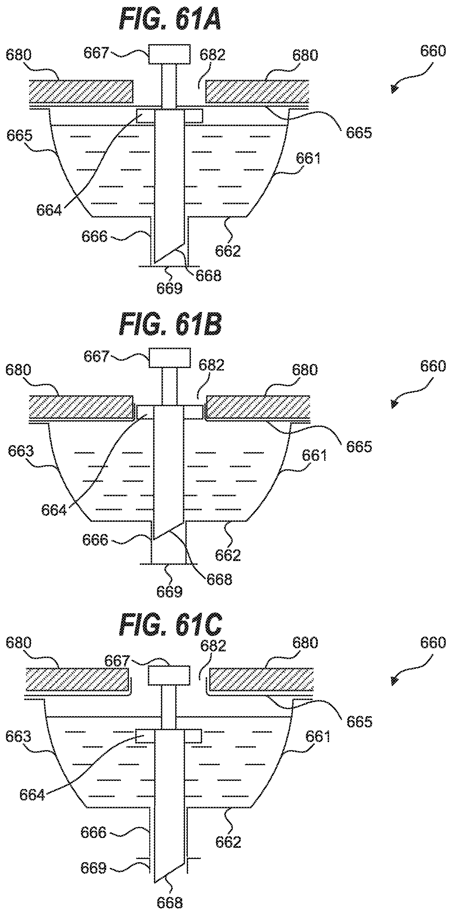

In some embodiments, pod 660 is disposed below a portion of pod support 680 in carbonated beverage makers, as shown, for example, in FIGS. 61A-61C. In some embodiments, pod support 680 may define aperture 682. In some embodiments, aperture 682 aligns with first piercer 664. In some embodiments, pull feature 667 extends through aperture 682, as shown, for example, in FIG. 61A. In some embodiments, aperture 682 assists in regulating the cutting pattern of first film 665. In some embodiments, carbonated beverage makers may include a mechanism, such as a movable clamp, to secure and pull upwards on pull feature 667, thus pulling first piercer 664 upwards to pierce first film 665, as shown, for example, in FIG. 61B. In some embodiments, carbonated beverage makers may include a mechanism, such as a movable clamp or a push rod, to push pull feature 667 down, thus pushing second piercer 668 downwards to pierce second film 669, as shown, for example, in FIG. 61C. After first film 665 and second film 669 are pierced, concentrate from pod 650 is delivered by air pressure (e.g., from an air pump) through the cut first film 665 to dispense through holes 691 of casing 690 and through the cut second film 669 into, for example, a drinking cup or other chamber.

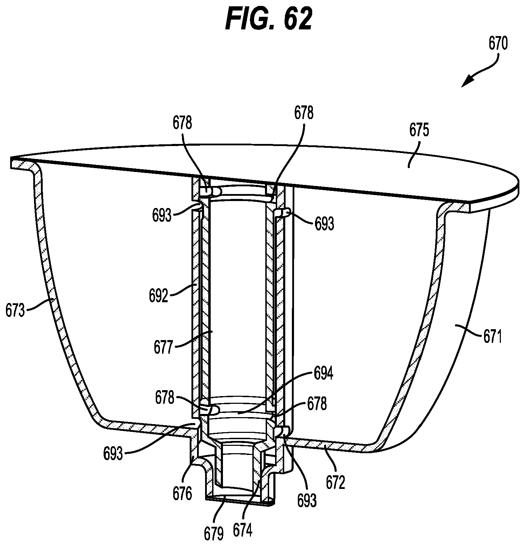

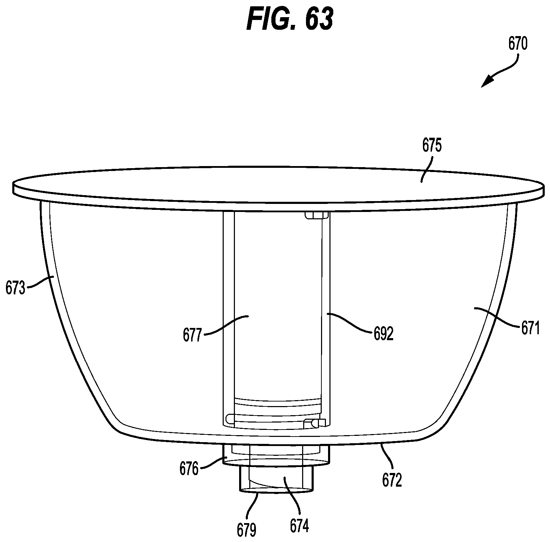

In some embodiments, a pod 670, as shown, for example, in FIGS. 62-64B, includes a container 671 and a first film 675. In some embodiments, container 671 includes a base 672 and a side 673. In some embodiments, container 671 and first film 675 are circular. In some embodiments, pod 670 may be made of a material that is recyclable. For example, pod 670 may be primarily made of a recyclable plastic. For example, pod 670, including container 671 and first film 675, may be primarily made of PET. First film 675 may be a thin layer of PET. In some embodiments, first film 675 may be easier to pierce and cheaper than lid 605 of pod 600. But first film 675 may cause pod 670 to have a lower shelf life than pod 600. In some embodiments, first film 675 is welded to container 671.

In some embodiments, a piercer 674 is disposed within container 661 extending from a projection 676 in base 672. For example, piercer 674 may be disposed within projection 676 lower than base 672. In some embodiments, piercer 674 extends from projection 676 in base 672 to first film 675. In some embodiments, piercer 674 includes a sharp tip in projection 676. In some embodiments, piercer 674 is made of the same material as container 671. For example, piercer 674 may be made of PET. In some embodiments, container 671 and piercer 674 are injection molded.

In some embodiments, projection 676 includes a second film 679 disposed at its bottom surface. In some embodiments, second film 679 is made of PET. In some embodiments, second film 679 is a thin layer of PET. In some embodiments, second film 679 is welded to projection 676. In some embodiments, projection 676 contains a portion of piercer 674, including a sharp tip (as noted above). In some embodiments, the sharp tip of piercer 674 is configured to pierce second film 679. In some embodiments, the sharp tip of piercer 674 is located on an edge of piercer 674.

In some embodiment, piercer 674 is hollow. For example, piercer 674 may include an air pipe 677 that extends through its length. In some embodiments, piercer 674 includes a plurality of holes 678. For example, piercer 674 may include two holes 678 near first film 675 and two holes 678 near base 672. In some embodiments, pod 670 includes a casing 692 that surrounds piercer 674. In some embodiments, casing 692 is fixed relative to container 671. In some embodiments, casing 692 includes holes 693. For example, casing 692 may include two holes 693 near first film 675 and two holes 693 near base 672. In some embodiments, holes 678 do not align with holes 693. This may prevent concentrate from entering air pipe 677. In some embodiments, casing 692 includes one or more seals 694 disposed between casing 692 and piercer 674. Seals 694 may prevent concentrate from entering between casing 692 and piercer 674.

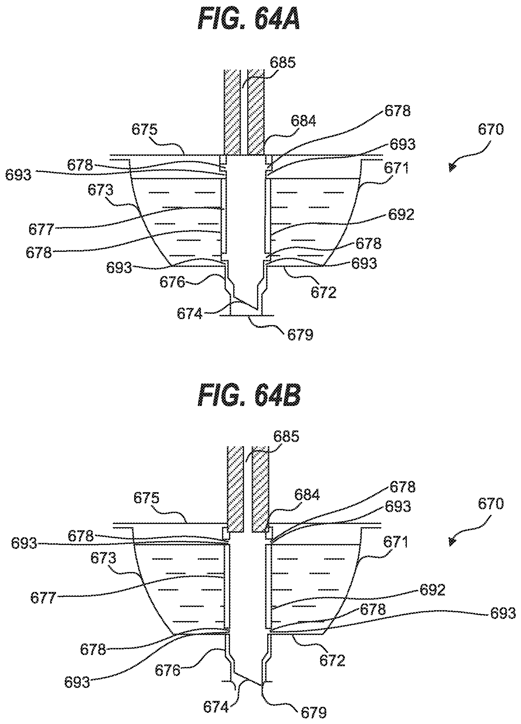

In some embodiments, pod 670 is disposed within carbonated beverage makers. In some embodiments, carbonated beverage makers include piercer 684 as shown, for example, in FIGS. 64A-64B. Thus, piercer 684 is external to pod 670. In some embodiments, piercer 684 is hollow. For example, piercer 684 may include an air pipe 685. In some embodiments, air pipe 685 is operably connected to an air pump. In some embodiments, pod 670 is disposed adjacent to piercer 684, as shown, for example in FIG. 64A. In some embodiments, piercer 684 extends downward to pierce through first film 675 and simultaneously push down on piercer 674, which in turn pierces through second film 679, as shown, for example, in FIG. 64B. As also seen in FIG. 64B, the movement of piercer 674 aligns holes 678 with holes 693. After first film 675 and second film 679 are pierced and holes 678 align with holes 693, concentrate from pod 650 is delivered by air pressure (e.g., from an air pump) which flows through air pipe 685, into air pipe 677, through holes 678 and 693 near first film 675, and into pod 670 to dispense concentrate through holes 678 and 693 near base 672, into air pipe 677 and through the cut second film 679 into, for example, a drinking cup or other chamber.

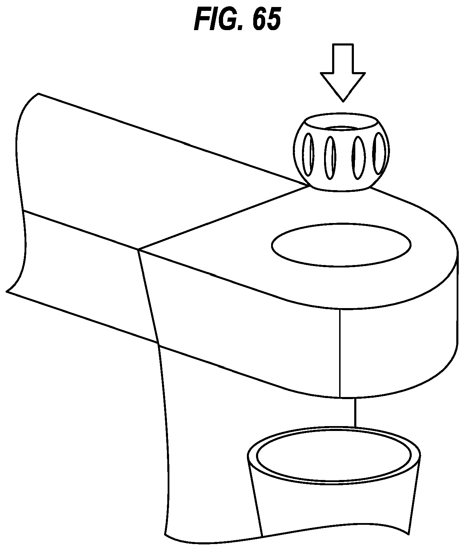

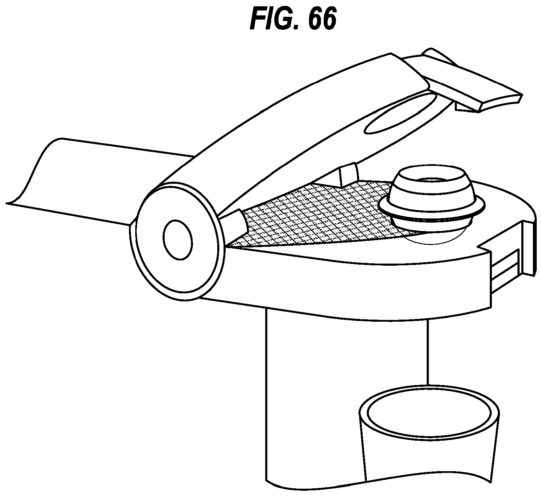

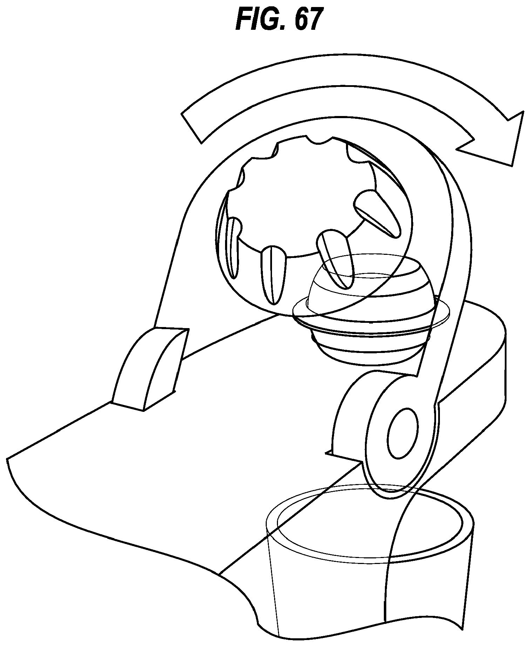

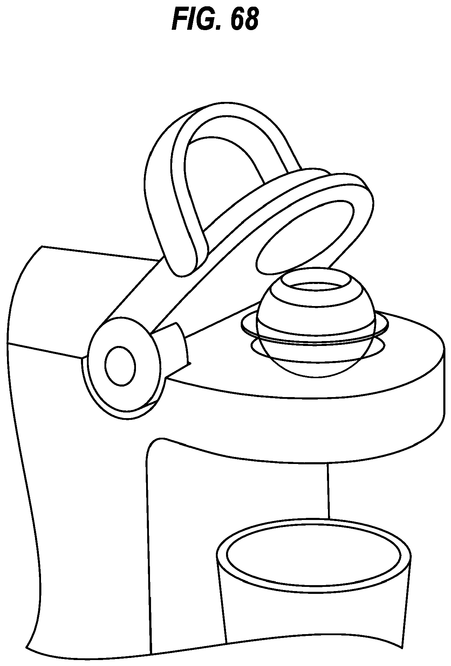

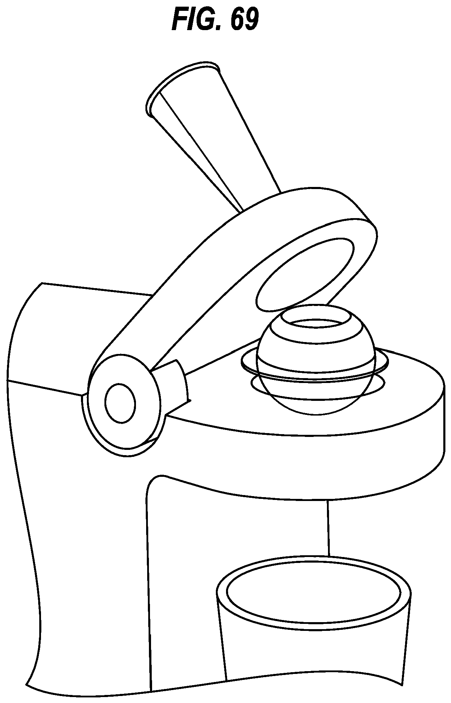

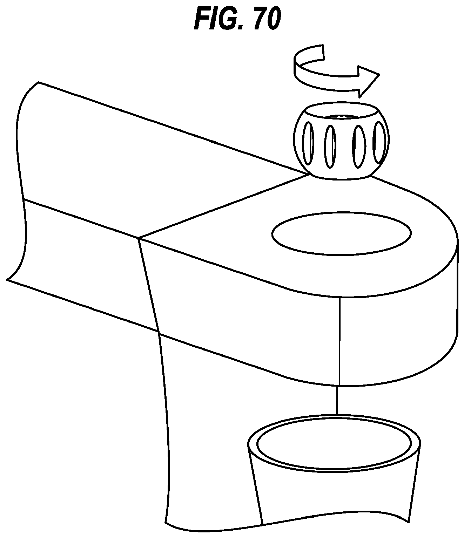

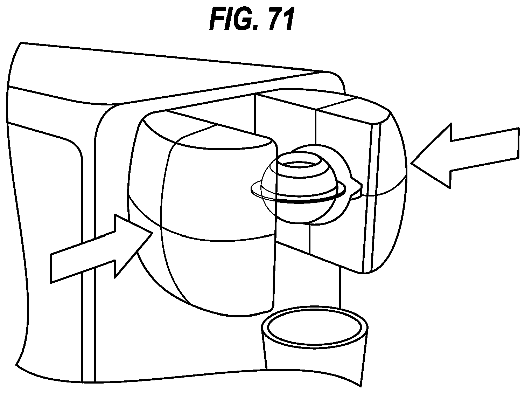

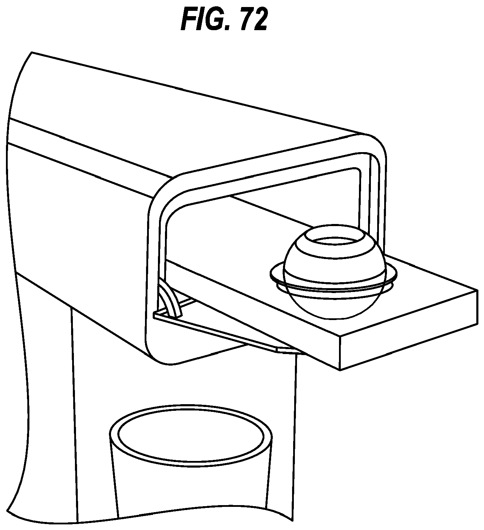

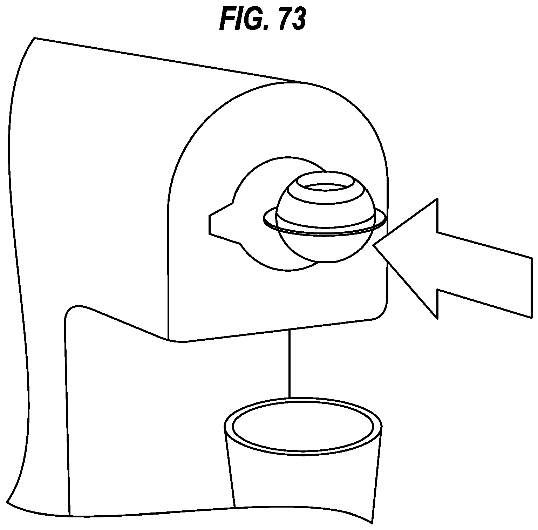

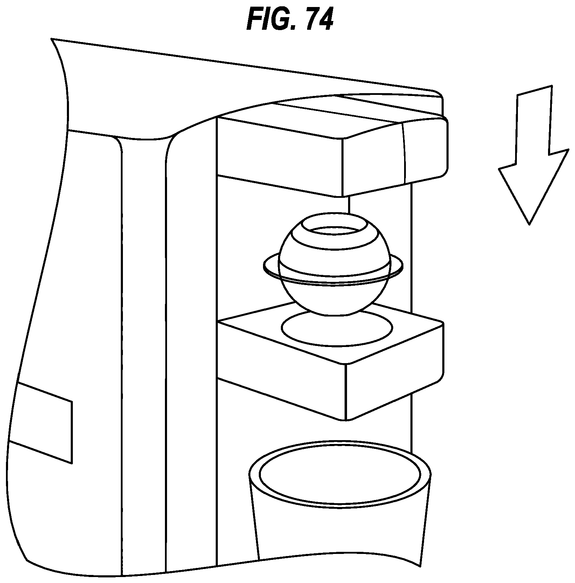

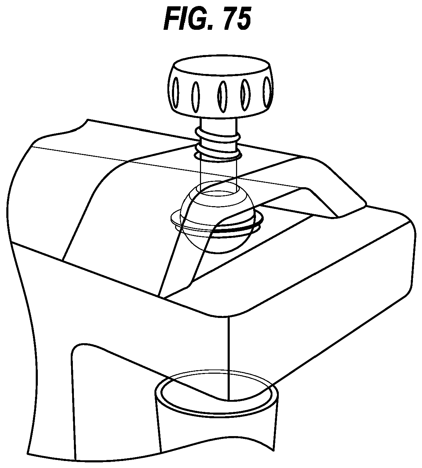

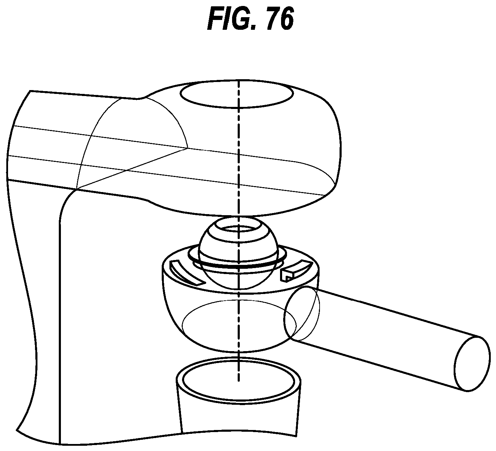

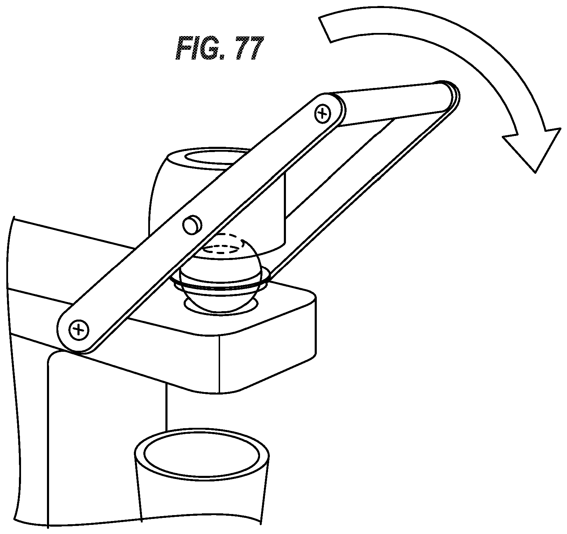

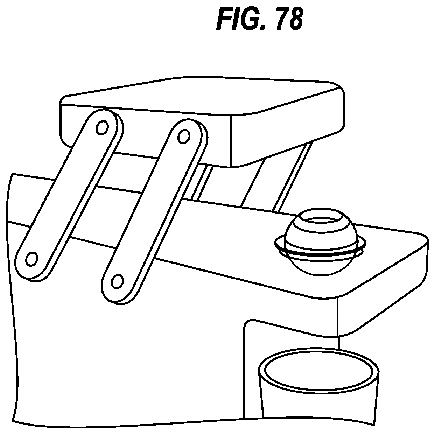

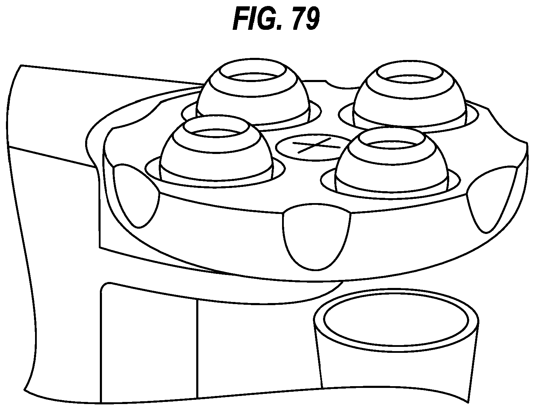

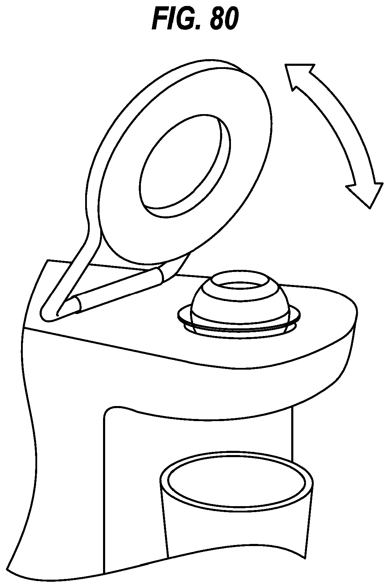

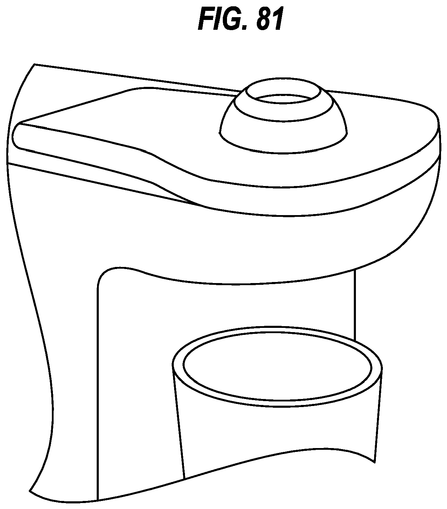

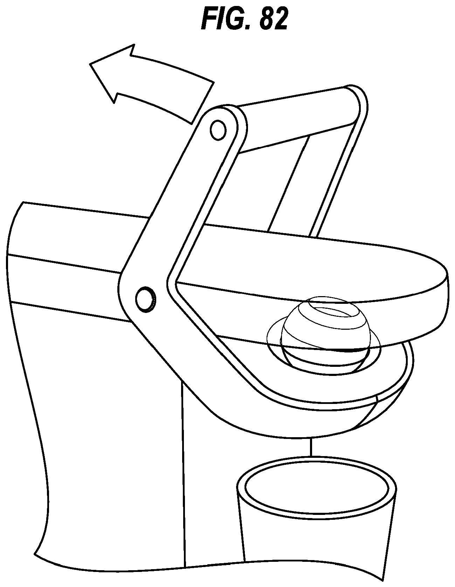

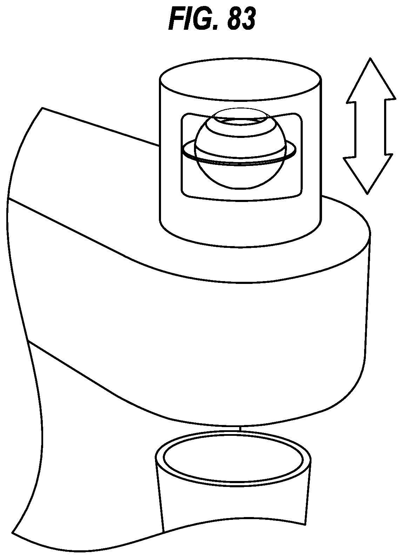

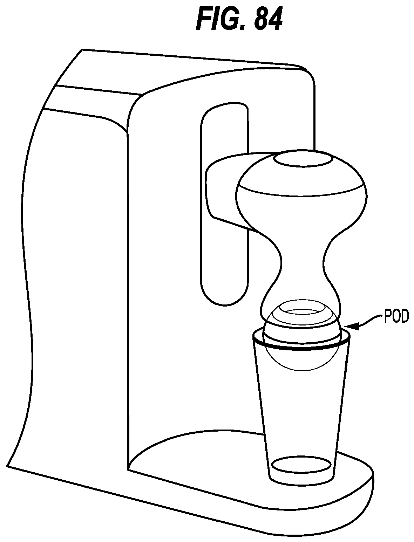

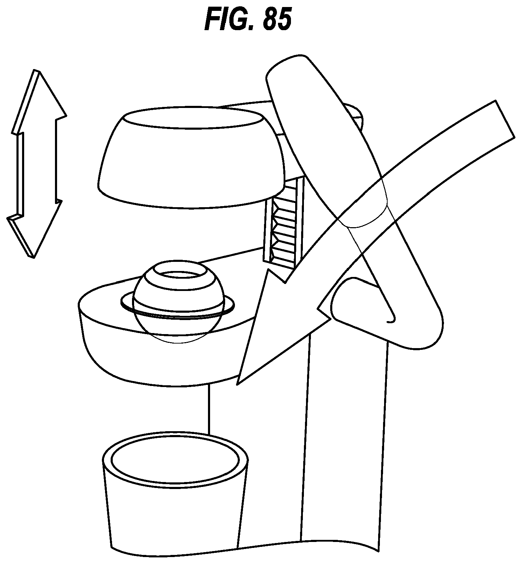

While several embodiments of pods have been described, other variations and embodiments are also within the scope of and may be used with carbonated beverage makers described herein. In addition, while some interactions between carbonated beverage makers and pods have been described, other interactions are also within the scope of this disclosure. For example, FIGS. 65-85 illustrate example embodiments of pods being inserted into carbonated beverage makers.

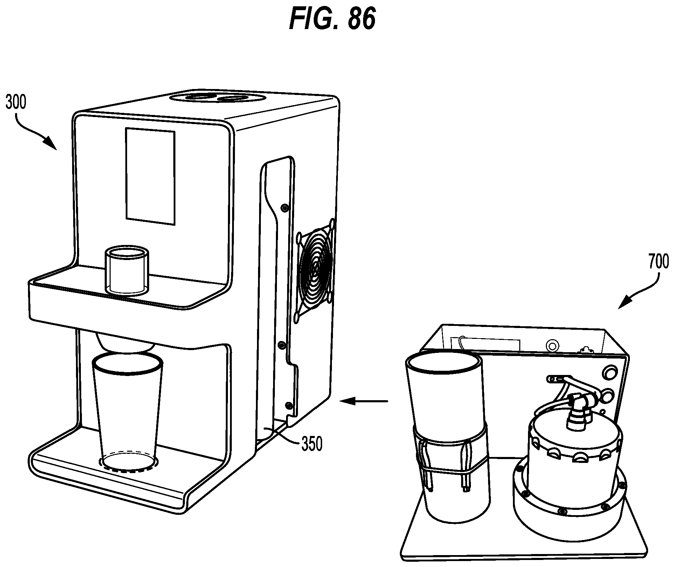

As noted above, carbonated beverage makers as described herein may include a carbonation source. In some embodiments, the carbonation source may be a CO₂ cylinder or tank. For example, as shown in FIG. 86, carbonated beverage maker 300 uses carbonation source 350 that is a CO₂ tank. In some embodiments, the CO₂ tank may hold up to 425 grams of CO₂. CO₂ tanks contain CO₂ in a pressurized condition, which can require special handling, transport, refill, and delivery. These requirements can be costly and inconvenient for a consumer. For example, CO₂ tanks may not be shipped directly to a consumer. Disposal of the CO₂ tank may also be inconvenient for the consumer. Accordingly, in some embodiments, carbonated beverage makers utilize other sources of carbonation.

In some embodiments, carbonated beverage maker 300 (or carbonated beverage maker 100) may include a CO₂ generation system, such as CO₂ generation system 700, in place of a CO₂ tank, as shown, for example, in FIG. 86. Incorporating a CO₂ generation system into a carbonated beverage maker eliminates the need to transport CO₂ and the special requirements for doing so. Thus, the elements used in CO₂ generation system 700 may be elements that can safely be delivered to a consumer (e.g., shipped) and that can safely be disposed of after being used to generate or create CO₂ in carbonated beverage maker 300. In other words, the raw materials or reactants may be elements that can be safely shipped and the byproducts may be byproducts that can be safely disposed of.

In some embodiments, the elements may be chemical elements that react to create CO₂ as a product of the reaction. In some embodiments, the elements may be dry chemical elements. Dry chemical elements may be provided for CO₂ generation system 700 in various forms.

In some embodiments, carbonated beverage makers may use tablets containing dry chemical elements as a carbonation source. In some embodiments, pods may include a carbonation source, for example, in the form of beads, loose powder, or tablets. In some embodiments, the elements may be wet chemical elements.

In some embodiments, tablets may comprise sodium bicarbonate. In some embodiments, heat may be applied to a sodium bicarbonate tablet, such as through microwave radiation, which may produce gases to carbonate beverages.

In some embodiments, carbonated beverage makers may use effervescent technologies (i.e., the evolution of bubbles from a liquid due to a chemical reaction) to provide carbonation in beverages. In some embodiments, the gas is carbon dioxide which may be liberated by the reaction between a food grade acid (e.g., citric, tartaric, oxalic acid, etc., or a combination of these acids) and a source of carbonate (such as sodium carbonate, sodium bicarbonate, potassium carbonate, potassium bicarbonate, or a mixture thereof). In some embodiments, the acid and the carbonate are combined dry, such as in a loose powder form or in a tablet form. In some embodiments, the acid and carbonate mixture is formed into granules, which may comprise particles ranging in size from about 4 to about 10 mesh. The granules may be made by blending the powders together and moistening the mixture to form a pasty mass, which may be passed through a sieve and dried in open air or in an oven. In some embodiments, the granules may be used as an intermediate step in preparing capsules or tablets because granules may flow more smoothly and predictably than small powder particles. In some embodiments, water is added to the acid and carbonate mixture in, for example, a tablet form, which causes production of effervescence.

In some embodiments, the acid used to produce effervescence is based on how soluble the acid is in water. The more soluble the acid is in water, the faster CO₂ will be produced. For example, the solubility of citric acid in water at 20° C is 1.5 g/ml of water while the solubility of tartaric acid and oxalic acid are 1.3 and 0.14 g/ml of water, respectively. Furthermore, the molar ratio of acid to carbonate will also affect the reaction rate and yield. In general, the higher ratios of acid to carbonate will yield faster reactions. Also, higher ratios of acid will assure that the carbonate is completely reacted.

As an example, in some embodiments, potassium carbonate and citric acid are combined, such as in a powder or a tablet form, in a reaction chamber. As dry elements, the potassium carbonate and citric acid do not react with each other. In some embodiments, water may be added to the potassium carbonate and citric acid to initiate a reaction between them. The potassium carbonate and citric acid may react to generate CO₂, as shown below. The other products of the chemical reaction are water and potassium citrate in the aqueous phase. The CO₂ may then be provided to a carbonation chamber of the carbonated beverage maker to carbonate the beverage.

In some embodiments, the reaction between elements (e.g., potassium carbonate and citric acid) may produce CO₂ that is at or near room temperature. In some embodiments, the reaction is isolated from the beverage that will be consumed. In some embodiments, the reaction may be accelerated by adding heated water. In some embodiments, the reaction may be accelerated by including dehydrated zeolite with the other chemical elements. In some embodiments, the reaction may be accelerated by including a chemical source of heat.

In some embodiments, tablets may include coating to reduce the effect of water in the atmosphere from initiating a reaction between the elements. In some embodiments, the coating comprises a sugar. In some embodiments, the coating comprises polyvinyl acetate. In some embodiments, the coating comprises polylactic acid.

In some embodiments, tablets may rely on the heat generated from other chemical reactions to decompose carbonate or bicarbonate salt(s) and/or accelerate the effervescent reaction(s). For example, in some embodiments, a tablet may comprise alkaline earth metal oxides, sodium bicarbonate, and dehydrated zeolites. In some embodiments, a metal oxide (e.g., calcium oxide) is combined with dehydrated zeolites, but is isolated from sodium bicarbonate. When water is added, heat is produced and the sodium bicarbonate reacts with the heat to produce CO₂. In some embodiments, a tablet may comprise dehydrated zeolites, an acid-base composition, and sodium bicarbonate. In some embodiments, the acid-base composition allows for less water consumption because the acid-base reaction generates water itself. This then leads to an exothermic reaction of dehydrated zeolites. Thus, heat is produced and the sodium bicarbonate reacts with the heat to produce CO₂. Other embodiments may utilize other chemical reactions to produce carbonation for beverages.

In some embodiments, instead of adding water to a mixture of acid and carbonate, water may be added to an acid (e.g., citric acid) and a carbonate powder (e.g., potassium carbonate) may be subsequently added.

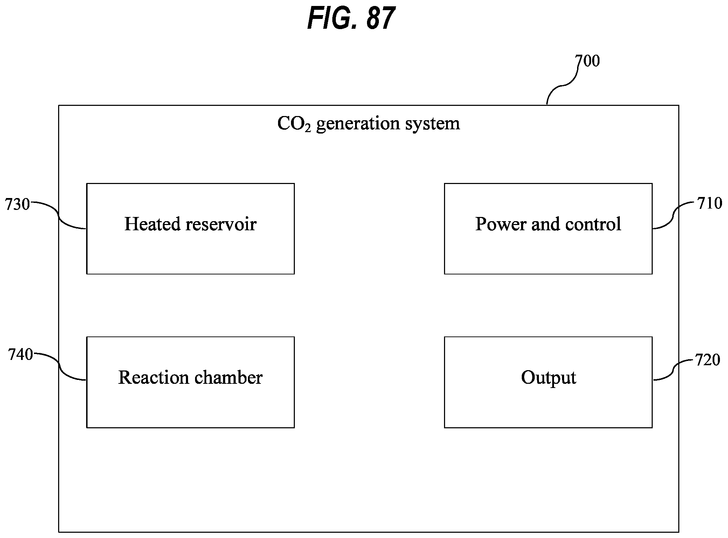

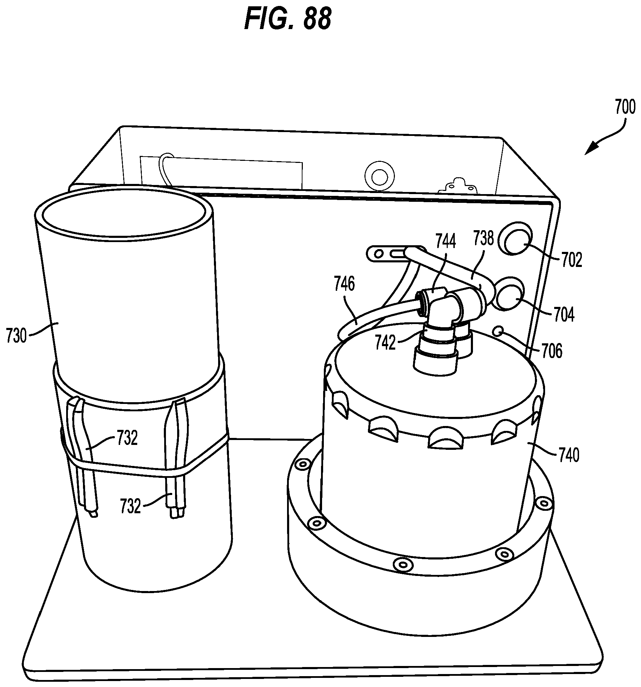

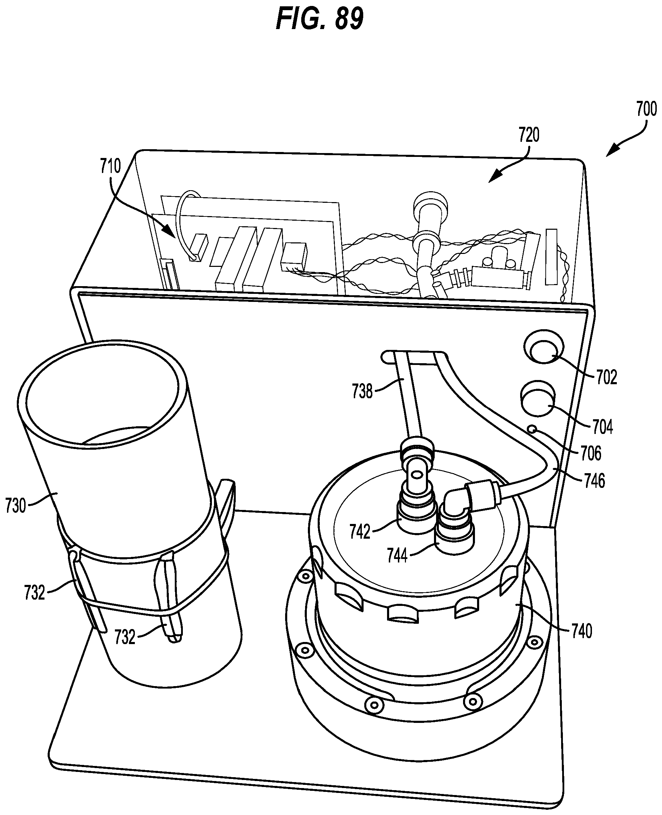

In some embodiments, CO₂ generation system 700 facilitates the chemical reaction that produces CO₂. In some embodiments, CO₂ generation system 700, as shown, for example, in FIG. 87, comprises a power and control system 710, an output system 720, a reservoir 730, and a reaction chamber 740. In some embodiments, CO₂ generation system 700, as shown, for example, in FIGS. 88 and 89, comprises an activation button 702, a pressure indicator 704, and an activity indicator 706 to facilitate use of CO₂ generation system 700. In some embodiments, activation button 702 turns CO₂ generation system 700 on. In some embodiments, instead of activation button 702, CO₂ generation system 700 may be turned on by receiving a signal from carbonated beverage maker 300 that it is time to generate CO₂. In some embodiments, pressure indicator 704 indicates the current pressure within reaction chamber 740 to ensure safe operation of CO₂ generation system 700. In some embodiments, activity indicator 706 indicates when CO₂ generation system 700 is actively generating CO₂. In some embodiments, activity indicator 706 comprises an LED.

In some embodiments, reservoir 730 stores water to be added to the chemicals (e.g., potassium carbonate and citric acid in powder form) to initiate the chemical reaction between the chemicals. In some embodiments, the chemicals may be added to reservoir 730 instead of the water from reservoir 730 being added to the chemicals. In some embodiments, reservoir 730 includes one or more cartridge heaters 732 to heat the water in reservoir 730. In some embodiments, reservoir 730 includes four cartridge heaters 732. In some embodiments, cartridge heaters 732 may bring the water stored in reservoir 730 to a temperature of 55-60 degrees Celsius. In some embodiments, cartridge heaters 732 constantly heat the water stored in reservoir 730. In some embodiments, reservoir 730 is not always heated. In some embodiments, cartridge heaters 732 only heat the water stored in reservoir 730 when a signal is received. In some embodiments, reservoir 730 holds enough water for several cycles of CO₂ generation. For example, reservoir 730 may hold enough water for three cycles of CO₂ generation (i.e., to produce CO₂ for three beverages).

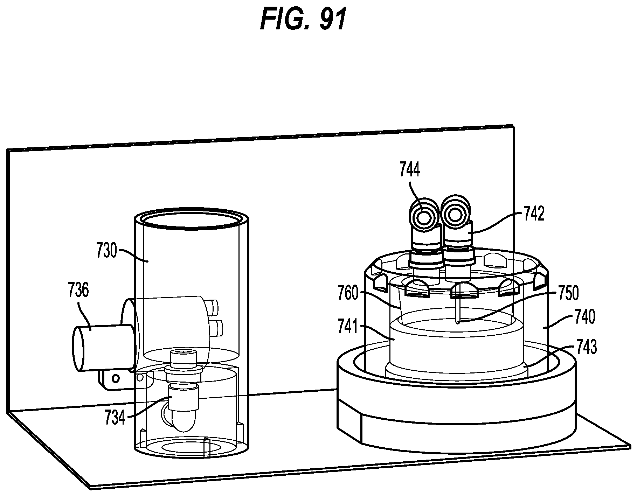

In some embodiments, a water exit passageway 734 (see FIG. 91), a pump 736 (see FIG. 91), and water delivery tubing 738 are configured to deliver water from reservoir 730 to reaction chamber 740. In some embodiments, water exit passageway 734 is connected to reservoir 730. In some embodiments, pump 736 is operably connected to water exit passageway 734. Pump 736 is configured to pump water from reservoir 730 through water exit passageway 734 and into water delivery tubing 738. In some embodiments, pump 736 comprises a high pressure solenoid pump.

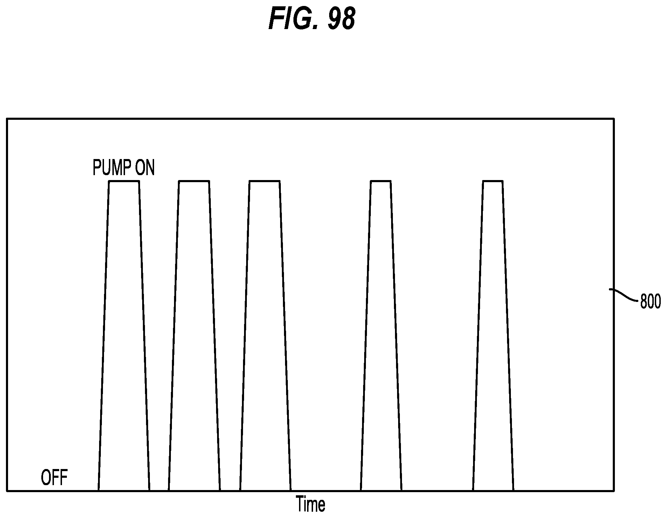

In some embodiments, pump 736 operates intermittently to introduce water into reaction chamber 740. For example, as shown in FIG. 98, pump profile 800 may include pulses in which pump 736 turns on and off several times. In some embodiments, pump profile 800 affects the generation rate of CO₂ gas. Thus, a desired generation rate can be achieved by modifying pump profile 800. In some embodiments, pump profile 800 prevents over-foaming in reaction chamber 740. In some embodiments, pump profile 800 is configured to correspond the CO₂ generation with the carbonation process. In some embodiments, pump profile 800 may include a delay so that CO₂ is not generated too early.

In some embodiments, pump profile 800 may include a few medium length pulses to deliver a bulk of the water to be used to activate the reaction between the dry elements within reaction chamber 740. In some embodiments, pump profile 800 may include one or two shorter pulses after the medium length pulses. The shorter pulses may facilitate continued mixing of the dry chemical elements towards the end of CO₂ generation. Other pump profiles are also possible.

In some embodiments, reaction chamber 740 comprises a water connection 742 and a gas connection 744. In some embodiments, water delivery tubing 738 brings water to water connection 742, which introduces the water into reaction chamber 740. Chemical elements may be disposed within reaction chamber 740. In some embodiments, the water initiates a reaction to produce CO₂, which may exit reaction chamber 740 through gas connection 744. In some embodiments, gas connection 744 is connected to gas delivery tubing 746. In some embodiments, gas delivery tubing 746 delivers the gas to output system 720.

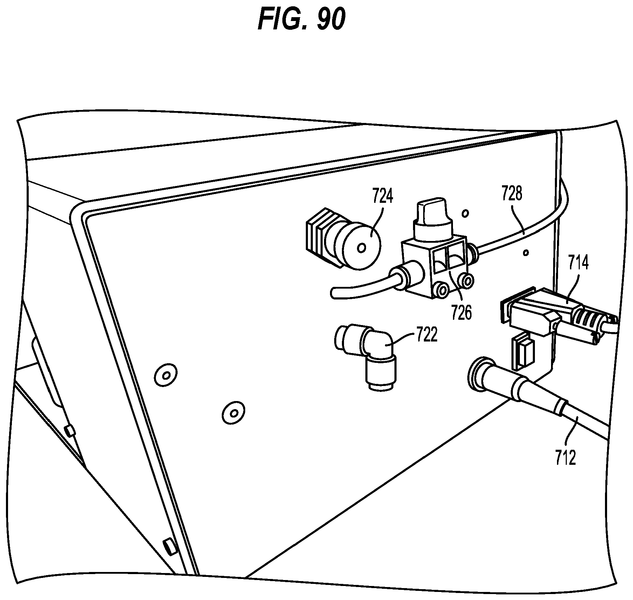

In some embodiments, power and control system 710 for CO₂ generation system 700 comprises a power connector 712 and a control connector 714, as shown, for example, in FIG. 90. In some embodiments, power connector 712 supplies power to the components of CO₂ generation system 700 in need of power. In some embodiments, control connector 714 connects the components of CO₂ generation system 700 to a main controller. In some embodiments, power and control system 710 is a power and control system for all of carbonated beverage maker 300, rather than just CO₂ generation system 700. In other words, CO₂ generation system 700 can share some components with other systems within carbonated beverage maker 300.

In some embodiments, output system 720 comprises a manual vent outlet 722, a pressure relief valve 724, an exit solenoid valve 726, and exit tubing 728. In some embodiments, manual vent outlet 722 allows a user to manually vent CO₂ generation system 700. In some embodiments, pressure relief valve 724 helps regulate the pressure in CO₂ generation system 700. For example, if the pressure in CO₂ generation system 700 exceeds a pre-determined pressure, pressure relief valve 724 will open to release some of the pressure. In some embodiments, exit solenoid valve 726 and exit tubing 728 facilitate the transport of generated CO₂ from CO₂ generation system 700 to a carbonation tank in carbonated beverage maker 300. As will be discussed in more detail below, carbonated beverage maker 300 may communicate with exit solenoid valve 726 for the timing of opening and closing of exit solenoid valve 726 so that carbonated beverage maker 300 gets the right amount of CO₂ and at the right time.

In some embodiments, output system 720 may be used for other aspects of carbonated beverage maker 300, rather than just CO₂ generation system 700. For example, manual vent outlet 722 may allow a user to manually vent carbonated beverage maker 300 as a whole. Similarly, pressure relief valve 724 may help regulate the pressure of carbonated beverage maker 300 as a whole. Because CO₂ generation system 700 can share some components with other systems within carbonated beverage maker 300, the addition of CO₂ generation system 700 into carbonated beverage maker 300 does not require as many additional components and the size of carbonated beverage maker 300 can be kept to a minimum. In some embodiments, other components of CO₂ generation system 700, such as reservoir 730, may also be shared with other aspects of carbonated beverage maker 300.

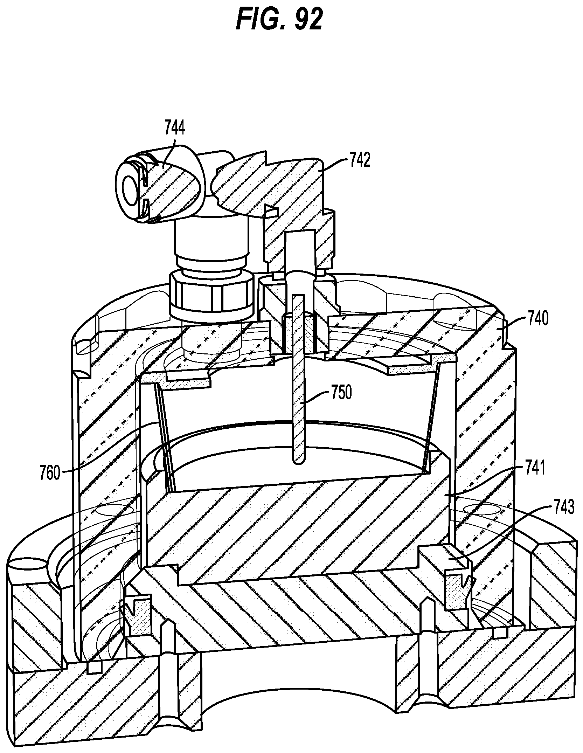

In some embodiments, reaction chamber 740 is configured to hold dry chemical elements. In some embodiments, reaction chamber 740 is configured to receive a chemical pod 760, as shown, for example, in FIGS. 91 and 92. In some embodiments, chemical pod 760 is a reusable pod. In some embodiments, chemical pod 760 is a disposable pod. In some embodiments, chemical pod 760 holds the mixture of dry chemical elements (e.g., potassium carbonate and citric acid).

In some embodiments, water from reservoir 730 may be delivered into chemical pod 760 to initiate the chemical reaction between the chemical elements. In some embodiments, water from reservoir 730 is delivered into chemical pod 760 via water delivery tubing 738 through water connection 742. In some embodiments, a needle 750 is inserted into chemical pod 760 to inject the water into chemical pod 760. In some embodiments, needle 750 may protrude from water connection 742 into reaction chamber 740. For example, needle 750 may protrude into chemical pod 760.

In some embodiments, needle 750 operates as a water distribution needle. For example, needle 750 may spray water directly into the chemical elements (e.g., potassium carbonate and citric acid). In some embodiments, needle 750 may be configured to assist in ensuring that all chemical elements are wetted to increase the reaction between the chemical elements. In some embodiments, needle 750 may be configured to provide agitation to better mix the chemical elements and water. For example, needle 750 may be provided with holes (e.g., water injection holes) to contribute to wetting and agitation of chemical elements. In addition, pulses of water from pump 736 according to pump profile 800, as discussed above, may also contribute to wetting and agitation of chemical elements.

In some embodiments, the pulses of water through needle 750 may contribute to preventing over-foaming within reaction chamber 740. In some embodiments, greater quantities of water help collapse bubbles generated in the effervescent reaction. In some embodiments, when more hot water is added into reaction chamber 740, the chemical reaction is faster and less foam and bubbles are generated. In some embodiments, other ways of managing foam and bubbles generated by the effervescent reaction may be used (e.g., glass beads, plastic beads, silicon oil, chemical de-foamers, mechanical foam breakers, etc.). In some embodiments, managing foam and bubbles generated by the effervescent reaction allows for faster generation of CO₂.

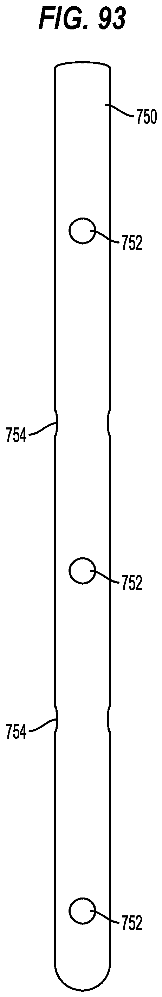

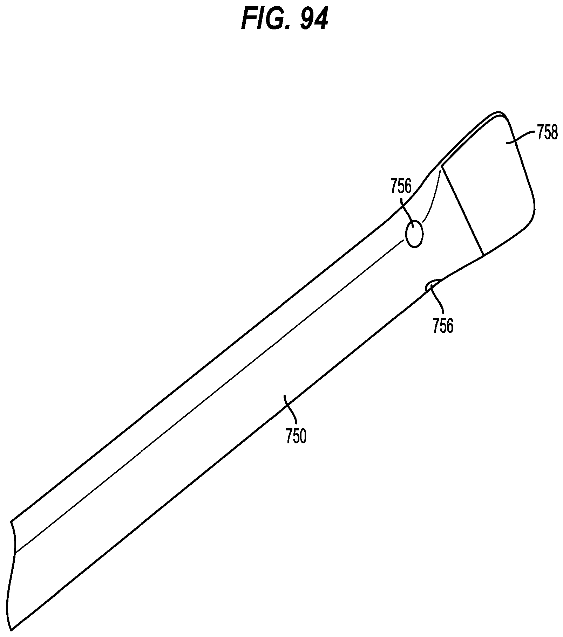

In some embodiments, needle 750 comprises a plurality of holes, as shown, for example, in FIGS. 93 and 94. In some embodiments, needle 750 comprises a plurality of holes 752 disposed in a line along a length of needle 750. In some embodiments, holes 752 are disposed in an alternating fashion with a second plurality of holes 754, as shown in FIG. 93. In some embodiments, the placement of holes, such as holes 752 and holes 754 encourages the mixing of water with the dry chemical elements, which may help generate CO₂ more efficiently. In some embodiments, needle 750 includes holes 756 at a bottom part of needle 750, for example, near a piercer 758, as shown in FIG. 94. In some embodiments, needle 750 comprises four holes 756. In some embodiments, holes 756 spray water in four directions near the bottom of chemical pod 760 to maximize reaction between the chemical elements. For example, this configuration may keep the chemical elements moving.

In some embodiments, holes 752, holes 754, and/or holes 756 have a diameter of 1 millimeter. In some embodiments, holes 752, holes 754, and/or holes 756 have a diameter of 0.5 millimeters. In some embodiments, holes 752, holes 754, and holes 756 may have different diameters. In some embodiments, holes 752, holes 754, and holes 756 may have the same diameter. Holes 752, holes 754, and holes 756 have other diameters (e.g., greater than 1 millimeter, between 0.5 and 1 millimeter, or less than 0.5 millimeters). In some embodiments, needle 750 comprises six holes. In some embodiments, each hole has a diameter of 0.3 millimeters. In some embodiments, the diameter size ensures proper velocity and flow rate to dose the water in a desired amount of time (e.g., 10 seconds). The design of needle 750 may be different for different chemical elements disposed in reaction chamber 740. In some embodiments, needle 750 is configured to provide continuous mixing throughout the pumping period.

In some embodiments, needle 750 injects 70 milliliters of water into reaction chamber 740. In some embodiments, needle 750 injects water into reaction chamber 740 at a rate of 5.5 milliliters per second.

In some embodiments, reaction chamber 740 may be configured to receive chemical pods 760 of different sizes. For example, reaction chamber 740 may include a spacer 741 to accommodate chemical pods 760 of different sizes, as shown in FIGS. 91 and 92. In some embodiments, reaction chamber 740 may be sized to accommodate more than one chemical pod 760 or tablet at a time. In some embodiments, the number of chemical pods 760 or tablets inserted into reaction chamber 740 may affect the amount of carbonation in the carbonated beverage. For example, one chemical pod 760 or tablet may equate to low carbonation, two chemical pods 760 or tablets may equate to medium carbonation, and three chemical pods 760 or tablets may equate to high carbonation.

In some embodiments, reaction chamber 740 comprises a pressure vessel. In some embodiments, reaction chamber 740 can be opened and sealed reliably. In some embodiments, reaction chamber 740 is sealed to other portions of carbonated beverage maker 300 to allow for reaction chamber 740 to be pressurized. In some embodiments, reaction chamber 740 comprises a chamber seal 743. In some embodiments, chamber seal 743 comprises the same locking mechanisms as described above relating to the connection of a carbonation cup to a carbonated beverage maker.

In some embodiments, after water is introduced into reaction chamber 740, CO₂ gas is produced. As the CO₂ gas is produced it is delivered through gas connection 744 and gas delivery tubing 746 to output system 720, as described above, which will deliver CO₂ gas to a carbonation chamber to carbonate a beverage. The remaining products remain in chemical pod 760 and/or reaction chamber 740. In some embodiments, the remaining products are safe for disposal without special treatment (e.g., the remaining products may be poured down the drain in a consumer's home).

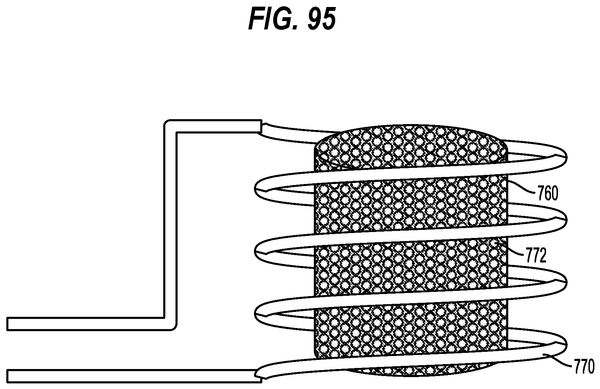

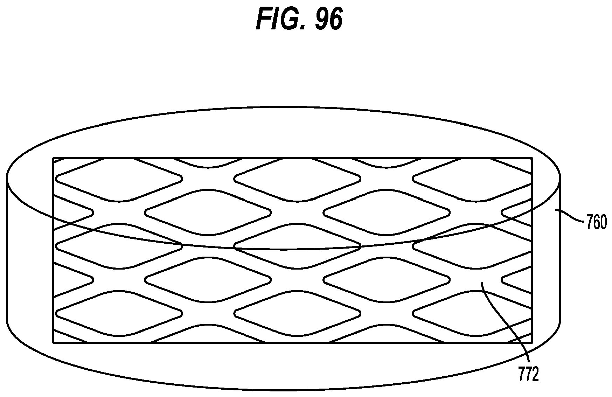

In some embodiments, the water that is delivered to chemical pod 760 is heated. In some embodiments, the water that is delivered to chemical pod 760 is between 40 and 90 degrees Celsius (i.e., warm water; as used herein, warm water includes hot water). For example, the water that is delivered to chemical pod 760 may be between 55 and 60 degrees Celsius. In some embodiments, additional heating may facilitate the reaction within chemical pod 760. In some embodiments, inductive heating may be used to heat chemical pod 760. For example, as shown in FIG. 95, a primary coil 770 may surround chemical pod 760. In some embodiments, chemical pod 760 contains susceptors 772 that are heated by induction caused by primary coil 770. In some embodiments, the inductive heating may be affected by the geometry of susceptor 772, the geometry of primary coil 770, the associated magnetic circuit, and the apparatus used for removing heat from primary coil 770. In some embodiments, susceptor 772 comprises metal particles (e.g., rings, discs, hollow cylinders, spheres, etc.). In some embodiments, the metal particles have a diameter that is less than four times of their skin depth. In some embodiments, susceptor 772 comprises a mesh, as shown in FIG. 96. In some embodiments, the mesh is irregular.

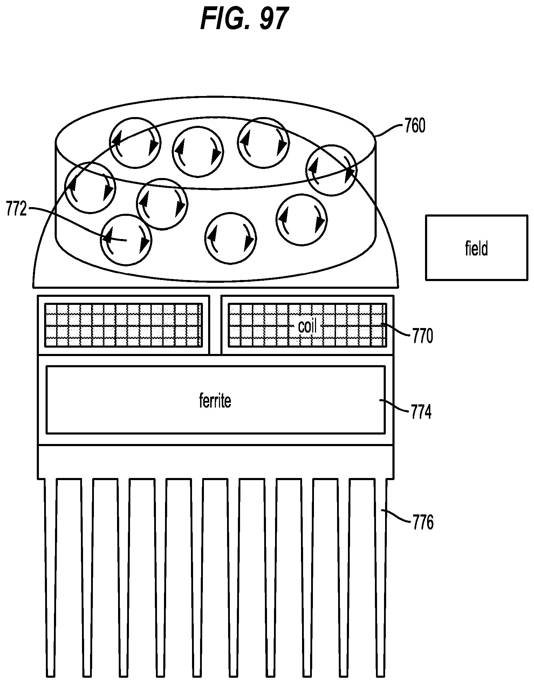

In some embodiments, the primary field created by primary coil 770 is primarily disposed in chemical pod 760 to interact with susceptors 772. In some embodiments, a magnetic circuit 774 ensures that the primary field is disposed in chemical pod 760. In some embodiments, magnetic circuit 774 is made of ferrite. In some embodiments, the geometry of primary coil 770 may also influence the primary field to be disposed in chemical pod 760. In some embodiments, primary coil 770 comprises a pancake coil, as shown in FIG. 97. In some embodiments, magnetic circuit 774 provides a ferrite backing for primary coil 770.

In some embodiments, a heat exchanger 776 is included with primary coil 770. In some embodiments, heat exchanger 776 keeps primary coil 770 from getting too hot. In some embodiments, heat exchanger 776 transfers heat to surrounding air by convection. For example, heat exchanger 776 may comprise a finned heat exchanger.

In some embodiments, carbonated beverage maker 300 utilizes CO₂ generation system 700 instead of a CO₂ tank. In some embodiments, CO₂ generation system 700 is modular. Thus, carbonated beverage maker 300 may receive either CO₂ tank or CO₂ generation system 700 without modifying carbonated beverage maker 300.

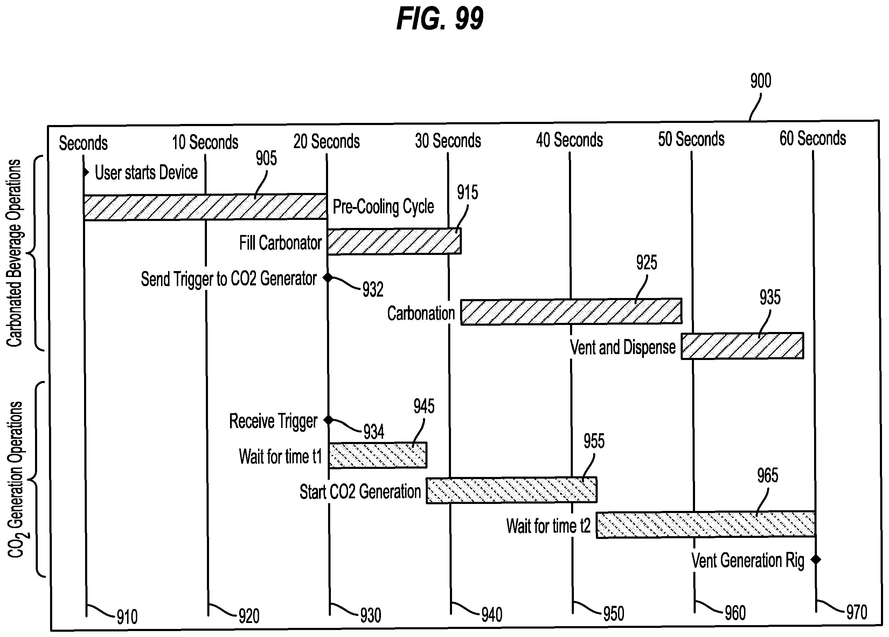

In some embodiments, carbonated beverage maker 300 may utilize CO₂ generation system 700 to produce a carbonated beverage as shown, for example, in diagram 900 of FIG. 99. Diagram 900 illustrates the operations of CO₂ generation system 700 in some embodiments at the bottom portion of diagram 900. Diagram 900 illustrates the operations of other portions of carbonated beverage maker 300 at the top portion of diagram 900.

In some embodiments, a user starts carbonated beverage maker 300 at a first time 910. In some embodiments, when the user starts carbonated beverage maker 300, a pre-cooling cycle 905 begins. In some embodiments, pre-cooling cycle 905 comprises cycling cold water from a cold water reservoir through a carbonation chamber to cool the carbonation chamber. In some embodiments, pre-cooling cycle 905 continues through a second time 920 and ends at a third time 930. In some embodiments, for example, pre-cooling cycle 905 lasts for 20 seconds. In some embodiments, at third time 930, carbonated beverage maker 300 begins to fill the carbonation chamber with water to be carbonated in operation 915. In some embodiments, carbonated beverage maker 300 fills the carbonation chamber in operation 915 from third time 930 through a fourth time 940 (e.g., just beyond fourth time 940). For example, carbonated beverage maker 300 may fill the carbonation chamber for 10-12 seconds.

In some embodiments, at third time 930 carbonated beverage maker 300 also sends a signal to CO₂ generation system 700 in operation 932 and CO₂ generation system 700 receives the signal from carbonated beverage maker 300 in operation 934. In some embodiments, in response to the signal from carbonated beverage maker 300, CO₂ generation system 700 starts a first delay 945. In some embodiments, first delay 945 begins at third time 930 and ends before fourth time 940. In some embodiments, first delay 945 lasts between five and ten seconds. In some embodiments, at the end of first delay 945, CO₂ generation system 700 begins the CO₂ generation process 955. In some embodiments, CO₂ generation process 955 is the process of using CO₂ generation system 700 as described above. In some embodiments, CO₂ generation process 955 begins before fourth time 940 and ends after a fifth time 950. In some embodiments, CO₂ generation process 955 lasts for 12-20 seconds.

In some embodiments, during CO₂ generation process 955, carbonated beverage maker 300 begins carbonation process 925. Carbonation process 925 begins after CO₂ generation process 955 begins so that enough CO₂ has been generated to begin carbonating the beverage. For example, CO₂ generation process 955 may begin before fourth time 940 while carbonation process 925 may begin after fourth time 940. In some embodiments, carbonation process 925 begins 5 seconds after CO₂ generation process 955 begins.

In some embodiments, after CO₂ generation process 955 ends, CO₂ generation system 700 starts a second delay 965. In some embodiments, second delay 965 begins after fifth time 950. In some embodiments, second delay 965 extends through sixth time 960 and ends at seventh time 970. In some embodiments, seventh time 970 ends all operations for carbonated beverage maker 300 and CO₂ generation system 700. In some embodiments, CO₂ generation system 700 is vented at seventh time 970. In some embodiments, second delay 965 lasts for 15-20 seconds.

In some embodiments, carbonation process 925 ends during second delay 965. In some embodiments, carbonation process 925 ends just before sixth time 960. In some embodiments, once carbonation process 925 is complete, carbonated beverage maker 300 vents the carbonation chamber and dispenses a carbonated beverage at operation 935. In some embodiments, operation 935 of venting and dispensing lasts for ten seconds. In some embodiments, operation 935 of venting and dispensing begins and ends during second delay 965. The timing of the operations shown in diagram 900 of FIG. 99 may facilitate optimum CO₂ generation and carbonation.

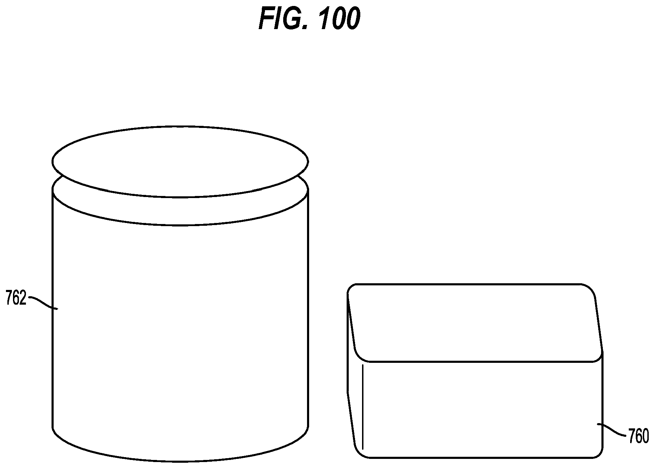

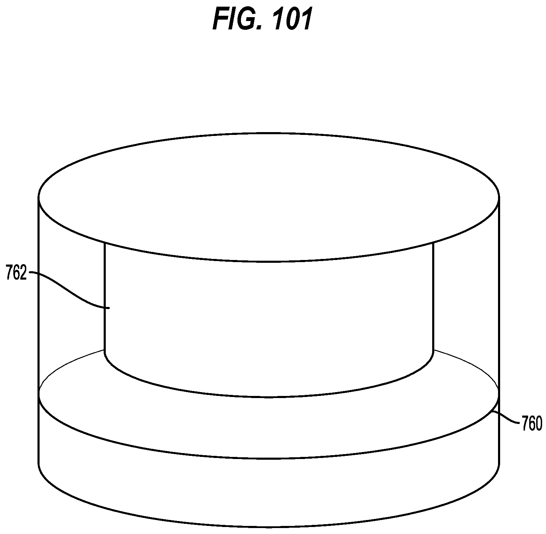

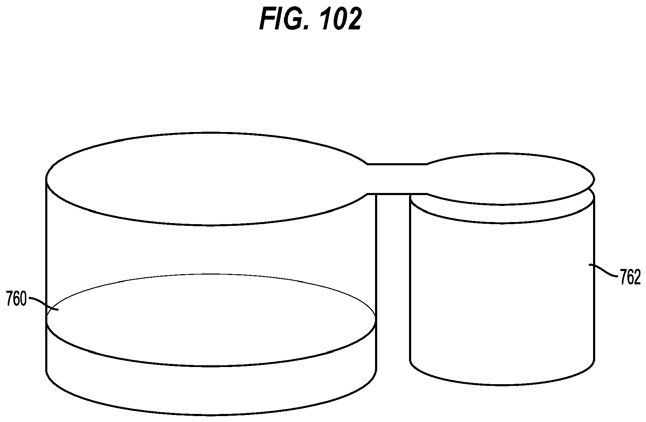

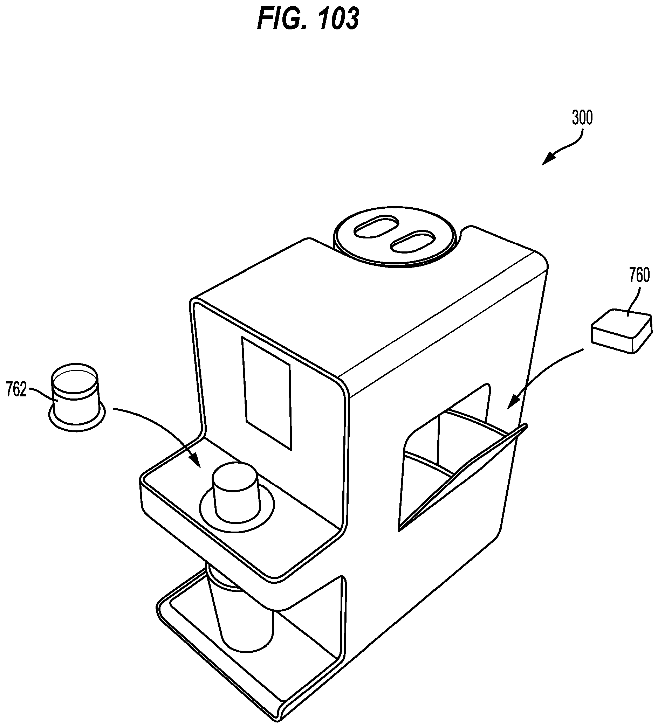

A variety of chemical pods 760 may be utilized for CO₂ generation system 700. In some embodiments, as shown, for example, in FIGS. 100-103, chemical pod 760 may be coupled with a flavor pod 762 containing a flavor source (e.g., a powder, syrup, etc.). In some embodiments, as shown in FIG. 100, chemical pod 760 may be a tablet made up of the dry chemical elements and flavor pod 762 may be a separate pod. In some embodiments, as shown in FIG. 101, flavor pod 762 may be embedded within chemical pod 760. The dry chemical elements may be in loose powder form within chemical pod 760 (e.g., underneath flavor pod 762). In some embodiments, as shown in FIG. 102, flavor pod 762 may be linked to chemical pod 760. In some embodiments, as shown in FIG. 103, flavor pod 762 may be separated from chemical pod 760. Flavor pod 762 may be disposed in a portion of carbonated beverage maker 300 associated with dispensing. Chemical pod 760 may be disposed in a portion of carbonated beverage maker 300 associated with CO₂ generation (i.e., in reaction chamber 740 of CO₂ generation system 700).

Carbonated beverage makers may have one or more of the features disclosed above. Moreover, any of the carbonated beverage makers described herein may utilize the CO₂ generation system described herein.

As noted above, in some embodiments, carbonated beverage makers are configured to identify a flavor source that will be used in the carbonated beverage maker. For example, in some embodiments, pods containing a flavor source may be provided with an RFID tag or identifier. In some embodiments, the RFID tag may contain information regarding the pod, such as flavor, size, expiration date, and other product information. In some embodiments, carbonated beverage makers may include an RFID reader positioned to read the information from the RFID tag on the pod when the pod is inserted into the carbonated beverage maker.

In some embodiments, the carbonated beverage maker operates differently based on information from the RFID tag. For example, certain flavors may be associated with a carbonation level. When the carbonated beverage maker reads information from the RFID tag, it may automatically operate at the associated carbonation level. Alternatively, the carbonated beverage maker may display a message to the user based on information from the RFID tag, such as providing the suggested carbonation level. As another example, in some embodiments, the carbonated beverage maker may display a message that the pod has expired.

In some embodiments, other types of identification may be included on the pods. These other types of identification may include, for example, barcodes, QR codes, or mechanical identification means.

In some embodiments, carbonated beverage makers may be equipped with smart technology that allows for transmission and reception of data. In some embodiments, carbonated beverage makers may wirelessly communicate with other devices, such as smart phones, personal computers, tablets, or other electronic devices. In some embodiments, carbonated beverage makers may wirelessly communicate with other household appliances. In some embodiments, carbonated beverage makers may connect to the internet, for example, via a wireless local area network (e.g., a home network). For example, carbonated beverage makers may include a wireless network interface controller. In some embodiments, carbonated beverage makers may communicate with other devices over a personal area network (e.g., via the Bluetooth protocol).

In some embodiments, carbonated beverage makers may be controlled remotely, for example, via an electronic device. For example, there may be an app associated with the carbonated beverage maker. The app may allow a user to customize or start the beverage making process remotely. In some embodiments, the user may select a flavor, carbonation level, and other settings remotely. For example, in some embodiments, carbonated beverage makers may have a plurality of pods of different flavors pre-loaded into a storage chamber of the carbonated beverage maker. The process of loading the selected flavor into a dispensing position may be automated. In some embodiments, disposable cups may also be pre-loaded into the carbonated beverage maker. The process of positioning a disposable cup into a beverage receiving position may be automated. Accordingly, the entire beverage making process may be controlled remotely so that the beverage is ready for consumption when the user enters the room.

In some embodiments, carbonated beverage makers may provide information to a remote device. For example, carbonated beverage makers can send usage data, such as preferred settings, number of drinks, top flavors, etc. to a remote device. In some embodiments, carbonated beverage makers may notify the user via a remote device that a beverage is ready for consumption.

In some embodiments, carbonated beverage makers may send other alerts to users. For example, carbonated beverage makers may send an alert that it is time to fill up a water reservoir, replenish the CO₂ source, or purchase more flavor pods. As another example, the carbonated beverage maker may send an alert that maintenance is required. Other types of alerts may also be sent to a user via a remote device. In addition to or as an alternative to alerts to a remote device, carbonated beverage makers may also provide visual and/or audible alerts on the carbonated beverage maker itself, such as lights, text, voice messages, bells, beeps, and so on.

In some embodiments, carbonated beverage makers may receive information from a remote device. After tasting a beverage created with the carbonated beverage maker, a user may use a remote device (e.g., through an app on a smartphone) to send information to the carbonated beverage maker. For example, if the user created a new beverage and particularly enjoyed the beverage, the user may send instructions via a remote device to the carbonated beverage maker to store the recipe for the last-made drink in the carbonated beverage maker's memory. The user may also use a remote device to send instructions to the carbonated beverage maker to delete a recipe from its memory. Other types of information may also be sent to the carbonated beverage maker.

In some embodiments, carbonated beverage makers may include features of the beverage dispensing systems disclosed in U.S. Application No. 12/982,374 filed December 30, 2010, now U.S. Patent No. 9,272 827. For example, carbonated beverage makers may include a needle at the end of a water supply line for piercing a cartridge and introducing water (carbonated or non-carbonated) into the cartridge. As another example, carbonated beverage makers may include a button or switch to activate the carbonated beverage maker. Other features disclosed in U.S. Application No. 12/982,374, although not specifically discussed here, may be included in carbonated beverage makers.

## Claims

1. A carbonation cup (110) comprising:
a transparent plastic layer (112) forming a base and a cylinder;
a metal sheath (114) disposed outside the transparent plastic layer (112), the metal sheath (114) defining a plurality of holes (115) so that a portion of the transparent plastic layer (112) is visible from outside the carbonation cup (110);
a magnetically-driven impeller (120) disposed at an inner side of the base of the transparent plastic layer (112);
an attachment member disposed at an end of the cylinder opposite the base, the attachment member configured to seal the carbonation cup (110) when attached to a carbonated beverage maker (100) having a carbonation source (150); and
an inlet from the carbonation source (150) into the carbonation cup (110).

2. The carbonation cup (110) of claim 1, further comprising a fill line indicator (116) to suggest a fill line of a diluent.

3. The carbonation cup (110) of claim 1, wherein the carbonation cup (110) comprises a thermal insulating material.

4. The carbonation cup (110) of claim 1, wherein the carbonation cup (110) is a pressure vessel configured to maintain a pressure at which a beverage is carbonated.

5. The carbonation cup (110) of claim 1, wherein the attachment member comprises an attachment projection (182) around a top lip of the cup to support the carbonation cup (110) within a cup docking module (180) of the carbonated beverage maker (100).

6. The carbonation cup (110) of claim 1, wherein the attachment member comprises an internal lip seal (144) to seal the carbonation cup (110) with a cup docking module (180) of the carbonated beverage maker (100).

7. The carbonation cup (110) of claim 1, wherein the impeller (120) is removably attached to the transparent plastic layer (112) at a spindle protruding from the base of the transparent plastic layer (112).

8. The carbonation cup (110) of claim 1, wherein the impeller (120) is configured to be magnetically-driven by an impeller motor (130).

9. The carbonation cup (110) of claim 1, wherein the impeller (120) is configured to create a vortex that draws carbon dioxide from the carbonation source (150) near a bottom of the carbonation cup (110).

10. The carbonation cup (110) of claim 1, wherein the impeller (120) comprises:
a base (121);
blades (124) protruding from the base; and
a ring (126) attached to each of the blades (124) and disposed above the blades (124).

## Patentansprüche

1. Karbonisiserungsbecher (110), umfassend:
eine transparente Kunststoffschicht (112), die eine Basis und einen Zylinder bildet;
eine Metallhülle (114), die außerhalb der transparenten Kunststoffschicht (112) angeordnet ist, wobei die Metallhülle (114) mehrere Löcher (115) definiert, so dass ein Abschnitt der transparenten Kunststoffschicht (112) von außerhalb des Karbonisiserungsbechers (110) sichtbar ist;
ein magnetisch angetriebenes Schaufelrad (120), das an einer Innenseite der Basis der transparenten Kunststoffschicht (112) angeordnet ist;
ein Anbringungselement, das an einem Ende des Zylinders gegenüber der Basis angeordnet ist, wobei das Anbringungselement dazu ausgelegt ist, den Karbonisiserungsbecher (110) abzudichten, wenn es an einer Zubereitungseinrichtung (100) für kohlensäurehaltige Getränke angebracht ist, die eine Karbonisierungsquelle (150) aufweist; und
einen Einlass von der Karbonisierungsquelle (150) in den Karbonisiserungsbechers (110).

2. Karbonisiserungsbecher (110) nach Anspruch 1, ferner umfassend einen Fülllinienindikator (116), um eine Fülllinie eines Verdünnungsmittels anzugeben.

3. Karbonisiserungsbecher (110) nach Anspruch 1, wobei der Karbonisiserungsbecher (110) ein wärmeisolierendes Material umfasst.

4. Karbonisiserungsbecher (110) nach Anspruch 1, wobei der Karbonisiserungsbecher (110) ein Druckbehälter ist, der dazu ausgelegt ist, einen Druck aufrechterzuhalten, bei dem ein Getränk mit Kohlensäure angereichert wird.

5. Karbonisiserungsbecher (110) nach Anspruch 1, wobei das Anbringungselement einen Anbringungsvorsprung (182) um eine obere Lippe des Bechers herum umfasst, um den Karbonisiserungsbecher (110) innerhalb eines Becher-Andockmoduls (180) der Zubereitungseinrichtung (100) für kohlensäurehaltige Getränke zu tragen.

6. Karbonisiserungsbecher (110) nach Anspruch 1, wobei das Anbringungselement eine interne Lippendichtung (144) umfasst, um den Karbonisiserungsbecher (110) gegenüber einem Becher-Andockmodul (180) der Zubereitungseinrichtung (100) für kohlensäurehaltige Getränke abzudichten.

7. Karbonisiserungsbecher (110) nach Anspruch 1, wobei das Schaufelrad (120) an der transparenten Kunststoffschicht (112) an einer Spindel, die aus der Basis der transparenten Kunststoffschicht (112) vorsteht, abnehmbar angebracht ist.

8. Karbonisiserungsbecher (110) nach Anspruch 1, wobei das Schaufelrad (120) dazu ausgelegt ist, durch einen Schaufelradmotor (130) magnetisch angetrieben zu werden.

9. Karbonisiserungsbecher (110) nach Anspruch 1, wobei das Schaufelrad (120) dazu ausgelegt ist, einen Wirbel zu erzeugen, der Kohlendioxid aus der Karbonisiserungsquelle (150) nahe einer Basis des Karbonisiserungsbechers (110) ansaugt.

10. Karbonisiserungsbecher (110) nach Anspruch 1, wobei das Schaufelrad (120) umfasst:
eine Basis (121);
Schaufeln (124), die aus der Basis vorstehen; und
einen Ring (126), der an jeder der Schaufeln (124) angebracht ist und oberhalb der Schaufeln (124) angeordnet ist.

## Revendications

1. Gobelet de carbonatation (110) comprenant :
une couche en plastique transparent (112) formant une base et un cylindre ;
une enveloppe métallique (114) disposée à l'extérieur de la couche en plastique transparent (112), l'enveloppe métallique (114) définissant une pluralité de trous (115) de telle sorte qu'une partie de la couche en plastique transparent (112) est visible depuis l'extérieur du gobelet de carbonatation (110) ;
une roue à aubes (120) à entraînement magnétique disposé sur un côté intérieur de la base de la couche en plastique transparent (112) ;
un élément de fixation disposé à une extrémité du cylindre opposée à la base, l'élément de fixation étant configuré pour assurer l'étanchéité du gobelet de carbonatation (110) lorsqu'il est fixé à un dispositif de préparation de boissons gazeuses (100) présentant une source de carbonatation (150) ; et
une entrée conduisant de la source de carbonatation (150) au gobelet de carbonatation (110).

2. Gobelet de carbonatation (110) selon la revendication 1, comprenant en outre un indicateur de ligne de remplissage (116) pour suggérer une ligne de remplissage d'un diluant.

3. Gobelet de carbonatation (110) selon la revendication 1, le gobelet de carbonatation (110) comprenant un matériau d'isolation thermique.

4. Gobelet de carbonatation (110) selon la revendication 1, le gobelet de carbonatation (110) étant un récipient sous pression configuré pour maintenir une pression à laquelle une boisson est carbonatée.

5. Gobelet de carbonatation (110) selon la revendication 1, l'élément de fixation comprenant une saillie de fixation (182) autour d'une lèvre supérieure du gobelet pour supporter le gobelet de carbonatation (110) dans un module de couplage de gobelet (180) du dispositif de préparation de boissons gazeuses (100).

6. Gobelet de carbonatation (110) selon la revendication 1, l'élément de fixation comprenant un joint à lèvre intérieur (144) pour assurer l'étanchéité du gobelet de carbonatation (110) avec un module de couplage de gobelet (180) du dispositif de préparation de boissons gazeuses (100).

7. Gobelet de carbonatation (110) selon la revendication 1, la roue à aubes (120) étant fixée de manière détachable à la couche en plastique transparent (112) au niveau d'une broche dépassant de la base de la couche en plastique transparent (112).

8. Gobelet de carbonatation (110) selon la revendication 1, la roue à aubes (120) étant configurée pour être entraîné ede manière magnétique par un moteur de la roue à aubes (130).

9. Gobelet de carbonatation (110) selon la revendication 1, la roue à aubes (120) étant configurée pour créer un tourbillon qui attire du dioxyde de carbone en provenance de la source de carbonatation (150) près d'un fond du gobelet de carbonatation (110).

10. Gobelet de carbonatation (110) selon la revendication 1, la roue à aubes (120) comprenant :
une base (121) ;
des pales (124) dépassant de la base ; et
un anneau (126) fixé à chacune des pales (124) et disposé au-dessus des pales (124).
